# EUROPEAN PATENT SPECIFICATION

(11) **EP 0 784 255 B1**
(45) Date of publication and mention of the grant of the patent: **20.09.2000**
(21) Application number: 97100043.5
(22) Date of filing: 03.01.1997
(51) Int. Cl.: G05D 23/19, F24F 5/00

(54) **Heat storage air conditioning apparatus and heat storage estimating method**
Wärmespeicherndes Klimagerät und Verfahren zur Schätzung der gespeicherten Wärme
Dispositif d'accumulation de chaleur pour le conditionnement d'air et méthode d'estimation de la chaleur accumulée

(30) Priority: 10.01.1996 JP 231396; 29.03.1996 JP 7570396; 29.03.1996 JP 7570496; 29.03.1996 JP 7570296
(43) Date of publication of application: 16.07.1997
(73) Proprietor: MITSUBISHI DENKI KABUSHIKI KAISHA, Tokyo 100 (JP)
(72) Inventor: Tabuchi, Hideyuki, Chiyoda-ku, Tokyo 100 (JP); Inoue, Masahiro, Chiyoda-ku, Tokyo 100 (JP); Ogura, Jyunya, c/o Mitsubishi Elec. Eng. Co., Ltd., Chiyoda-ku, Tokyo 100 (JP); Igawa, Hiroshi, c/o Mitsubishi Elec. Eng. Co. Ltd., Chiyoda-ku, Tokyo 100 (JP); Ohtsuka, Osamu, Chiyoda-ku, Tokyo 100 (JP)
(74) Representative: Pfenning, Meinig & Partner

(56) References cited:
- EP-A- 0 561 255
- US-A- 5 274 571
- IEEE TRANSACTIONS ON POWER SYSTEMS, vol. 10, no. 3, 1 August 1995, pages 1279-1285, XP000558016 PARESH RUPANAGUNTA ET AL: "SCHEDULING OF COOL STORAGE USING NON-LINEAR PROGRAMMING TECHNIQUES"
- PROCEEDINGS UNIVERSITIES POWER ENGINEERING CONFERENCE, vol. 2, 1 January 1994, pages 673-675, XP000565928 GOTTSCHALK H ET AL: "ECONOMIC OPERATION OF A POWER SYSTEM WITH A SIGNIFICANT AMOUNT OF CONTROLLABLE LOAD"

## Description

### BACKGROUND OF THE INVENTION

### 1. Field of the Invention

The present invention relates to a heat storage air conditioning apparatus that produces and stores some or all of the quantity of thermal energy during the night, the thermal energy being used to air-condition of a living space in the daytime so that the thus-stored thermal energy is supplied to the living space during the daytime, and a heat storage estimating method.

### 2. Description of the Related Art

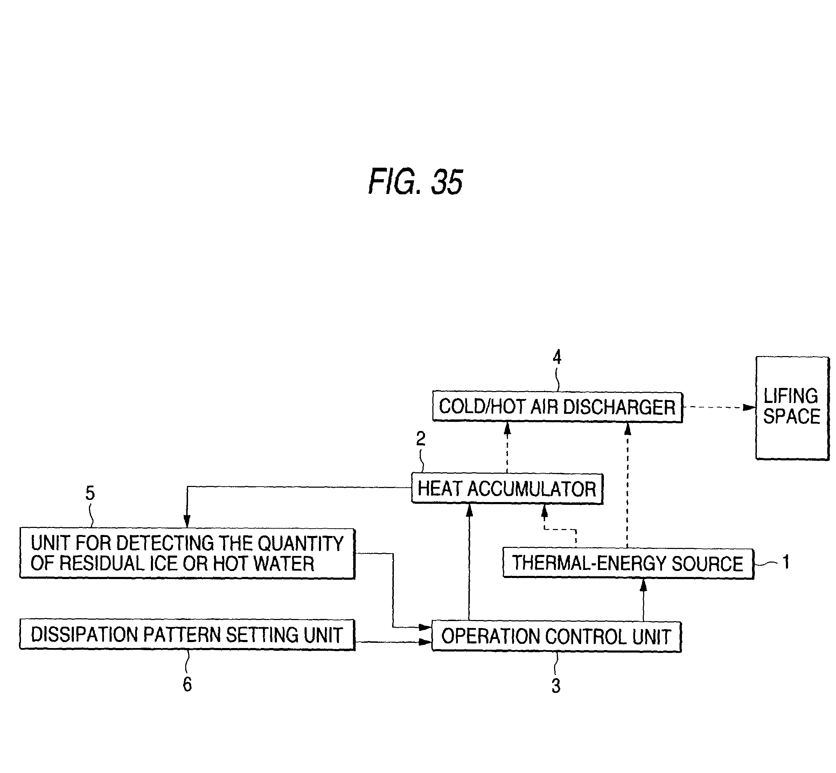

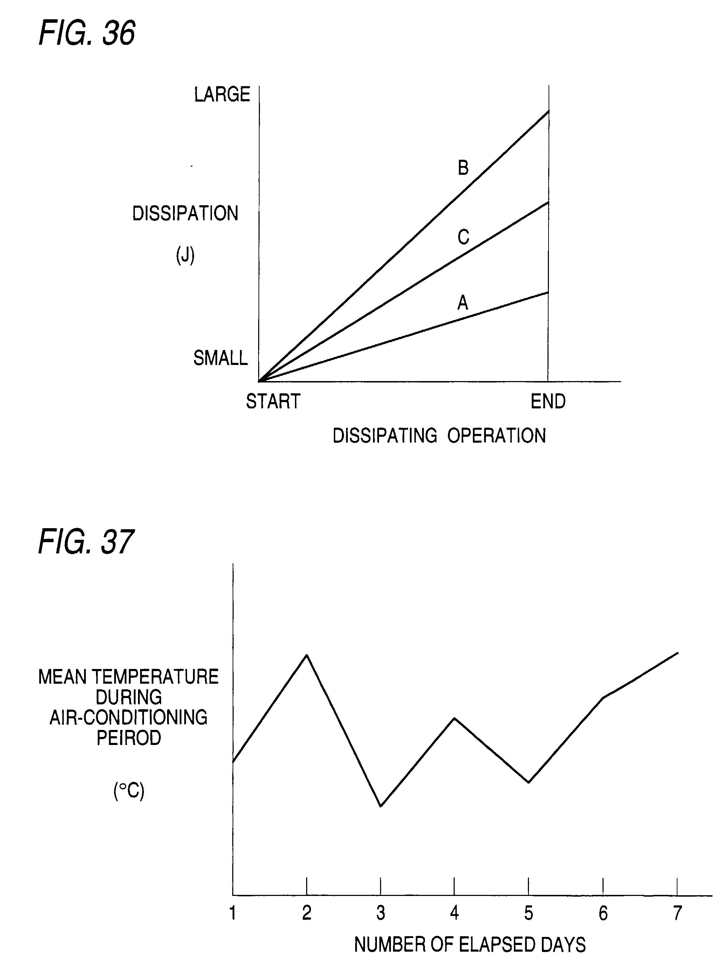

Fig. 35 is a block diagram of a conventional heat storage air conditioner disclosed in, e.g., Mitsubishi Electric Technical Report Vol. 68, No. 5, 1994. Fig. 36 is a graph showing heat dissipation patterns used in this conventional heat storage air conditioner. Fig. 37 is a graph illustrating one example of transitive temperature data obtained during air-conditioning periods. In the drawings, reference numeral 1 designates a heat source; 2, a heat accumulator; 3, operation control unit for controlling the operations of the heat source 1 and the heat accumulator 2; 4, a cold/hot air discharger; 5, a remaining ice/hot-water quantity detection unit for detecting the quantity of remaining ice or hot water; and 6, dissipation pattern setting unit for setting a dissipation pattern of the heat accumulator 2. Throughout the drawings, a path for use in supplying cooling/heating energy is designated by a broken line, whereas an information signal path is designated by a solid line (these paths will be hereinafter thus distinguished from each other).

With reference to the drawings, the operation of the heat storage air conditioner will be described. The heat source 1 performs heat storage operations during the night under control of the operation control unit 3, whereby cooling or heating energy is produced. The thus-produced cooling or heating energy is stored in the heat accumulator 2 through the cooling/heating energy path. The water previously held in the heat accumulator 2 changes to ice using the cooling energy or to hot water using the heating energy with lapse of time.

The heat accumulator 2 performs dissipating operations during the daytime under control of the operation control unit 3. As a result, the cooling energy of ice or the heating energy of hot water stored in the heat accumulator 2 during the night is sent to the heated/cooled air discharger 4 via the heating/cooling energy path. This heating/cooling energy is dissipated from the heated/cooled air discharger 4, thereby cooling or heating a living space. If the thermal energy load of the living space required during the air-conditioning periods cannot be sufficiently met by the dissipating operations of the heat accumulator 2, the thermal energy load for the living space will be covered by addition of the dissipating operations of the heat source 1.

The operation control unit 3 receives information about the quantity of ice or hot water remaining in the heat accumulator 2 from the remaining ice/hot-water quantity detection unit 5 in order to perform dissipation control operations. The thus-received information is compared with the dissipation pattern set by the dissipation pattern setting unit 6. If the quantity of thermal energy to be dissipated is determined to be large, the heat accumulator 2 performs dissipating operations such that dissipation pattern C shifts to dissipating operation pattern A shown in Fig. 36, namely, such that the quantity of thermal energy to be dissipated becomes smaller. In contrast, if the quantity of thermal energy to be dissipated is determined to be small, the heat accumulator 2 performs dissipating operations such that the dissipation pattern C shifts to dissipation pattern B shown in Fig. 36, namely, such that the quantity of thermal energy to be dissipated becomes larger.

For the dissipation pattern that is set by the dissipation pattern setting unit 6 and is used in determining the degree of dissipation of thermal energy, the time period between the starting time and the stop time of the operations of the cold/hot air discharger 4 is divided into a plurality of smaller time segments. The quantity of thermal energy to be dissipated is previously determined with regard to each of these time segments. Several patterns are provided as the dissipation pattern so as to meet various thermal engergy load requirements of the living space.

As has been previously described, the conventional heat storage air conditioner determines the quantity of dissipation of the cooling/heating energy stored during the night, only on the basis of the state of thermal energy load of the living space immediately before the current time. If the quantity of thermal energy to be dissipated from the heat accumulator 4 is large; namely, if the temperature of the living space is set to a high level, the quantity of thermal energy to be dissipated from the heat accumulator 4 is large; namely, if the temperature of the living space is set to a high level, the quantity of thermal energy to be dissipated is determined so as to decrease with no regards to the demand. If the quantity of thermal energy to be dissipated from the heat accumulator 4 is small; namely, if the temperature of the living space is set a low level, the quantity of thermal energy to be dissipated is determined so as to increase with no regards to the demand. In other words, the quantity of thermal energy to be dissipated is determined with no regards to the temperature settings of the living space. Further, the power of the heat storage air conditioner has not been estimated, making it impossible to appropriately set the dissipation pattern even if it is desired to control the quantity of electric power on the basis of demand.

In document IEEE TRANSACTIONS ON POWER SYSTEMS, vol. 10, no. 3,1 August 1995, pages 1279-1285, XP000558016 PARESH RUPANAGUNTA ET AL: "SCHEDULING OF COOL STORAGE USING NONLINEAR PROGRAMMING TECHNIQUES", there is disclosed a heat storage air conditioning apparatus with a power demand time-sequence collection (historical load data sets), a power demand estimation (load firecast model), a heat accumulativ (ice tank) and a cold/hot air dischargement (heat exchanger), wherein the forecasting estimations are done on the basis of electric loads.

### SUMMARY OF THE INVENTION

It is an object of the present invention is to make it possible to estimate the quantity of electric power that is required in the short-term future, to effect demand-based control of the quantity of electric power to be used, and to sufficiently maintain the amenity of a living space by calculating the quantity of electric power to be used from thermal load of the living space during the daytime, and matching the thus-calculated quantity of electric power with the trends of variations of the past.

A heat storage air conditioning apparatus according to the present invention is comprised of: a power demand time-sequence data collecting unit for collecting time-sequence data on demand for power; a power demand curve estimating unit for estimating a power demand curve obtained as a result of analysis of the power demand time-sequence data collected by the power demand time-sequence data collecting unit; thermal energy load demand estimating unit for estimating thermal energy load demand from the power demand curve estimated by the power demand curve estimating unit; an operation unit of a thermal-energy source for feeding cooling/heating energy; a heat accumulating unit for storing the cooling/heating energy supplied from the operation unit therein; a cold/hot air discharging unit for discharging the thermal energy stored in the heat accumulating unit; a cooling/heating energy quantity recognizing unit for recognizing the quantity of cooling or heating energy dissipated from the cold/hot air discharging unit; and a converting unit for converting the quantity of cooling/heating energy into the quantity of electric power, the converted quantity of electric power being supplied to the power demand time-sequence data collecting unit.

A heat storage estimating method according to the present invention is comprised of the steps of: detecting or calculating the quantity of cooling/heating energy that is equivalent to the quantity of thermal energy to be accumulated; converting the quantity of thermal energy to be accumulated, which is recognized in the recognizing step, into the quantity of electric power; collecting time-sequence data on power demand, taking the quantity of the power converted in the converting step as the power demand; estimating a power demand curve by analyzing the power demand time-sequence data collected in the collecting step; and estimating thermal-energy load demand from the power demand curve estimated in the power demand curve estimating step.

According to the heat storage air conditioning apparatus and the heat storage estimating method of the present invention, there is no shortage or surplus of the stored thermal energy amount during air conditioning operation period. Accordingly, the amenity of the living space can be sufficiently maintained, and the electric power during night can be effectively utilized. In addition, because the whole of the electric power necessary in cooling or heating operation is covered by the stored thermal energy, the electricity charges can be saved.

### BRIEF DESCRIPTION OF THE DRAWINGS

In the accompanying drawings:
Fig. 1 is a block diagram of a heat storage air conditioner according to a first embodiment of the present invention;
Fig. 2 is a flowchart for describing processing operations of the heat storage air conditioner of the first embodiment;
Fig. 3 is a flowchart for describing processing operations of the heat storage air conditioner of the first embodiment;
Fig. 4 is a graph for use in describing a method of estimating a power demand curve for the next day using pseudo data of the heat storage air conditioner;
Fig. 5 is a table that shows an example of numerical values regarding the quantity of power electricity represented by the pseudo data;
Fig. 6 is an example of repetitive thermal-energy quantity pattern used in the heat storage air conditioner of the first embodiment;
Fig. 7 is a basic block diagram of a heat storage air conditioner according to a second embodiment of the present invention;
Fig. 8 is a flowchart for use in describing processing operations of the heat storage air conditioner of the second embodiment;
Fig. 9 is a flowchart for use in describing processing operations of the heat storage air conditioner of the second embodiment;
Fig. 10 is a basic block diagram of a heat storage air conditioner according to a third embodiment of the present invention;
Fig. 11 is a flowchart for use in describing processing operations of the heat storage air conditioner of the third embodiment;
Fig. 12 is a flowchart for use in describing processing operations of the heat storage air conditioner of the third embodiment;
Fig. 13 is a graph for use in describing a method of estimating a power demand curve for the next day using pseudo data of the heat storage air conditioner of the third embodiment;
Fig. 14 is a table that shows an example of numerical values regarding the quantity of power electricity represented by the pseudo data used in the heat storage air conditioner of the third embodiment;
Fig. 15 is a graph showing a composite thermal-energy quantity pattern that is used in a heat storage air conditioner according to the third embodiment of the present invention and consists of the quantity of thermal energy defined by dissipating operation pattern of a thermal-energy accumulator and the quantity of thermal energy defined by patterns obtained at the time of air-conditioning operations of a thermal-energy source;
Fig. 16 is a graph showing the dissipating operation pattern of the thermal-energy accumulator that corresponds to a hatched area of the composite thermal-energy quantity pattern shown in Fig. 15;
Fig. 17 is a graph showing patterns that are obtained at the time of the air-conditioning operations of the thermal-energy source and correspond to outlined portions of the composite thermal-energy quantity pattern shown in Fig. 15;
Fig. 18 is an example of repetitive thermal-energy quantity pattern used in the heat storage air conditioner of the third embodiment;
Fig. 19 is a graph illustrating an example of composite thermal-energy quantity pattern of a pattern that uses a surplus of thermal energy of the heat storage air conditioner of the third embodiment;
Fig. 20 is a graph illustrating an example of composite thermal-energy quantity pattern that is used in a heat storage air conditioner according to a fourth embodiment of the present invention and includes the quantity of thermal energy defined by dissipating operation pattern of the thermal-energy accumulator and the quantity of thermal energy defined by the air-conditioning operation pattern of the thermal-energy source;
Fig. 21 is a graph showing the dissipating operation pattern of the thermal-energy accumulator that corresponds to a hatched portion of the composite thermal-energy quantity pattern shown in Fig. 20;
Fig. 22 is a graph showing the air-conditioning operation pattern of the thermal-energy source that corresponds to an outlined portion of the composite thermal-energy quantity pattern shown in Fig. 20;
Fig. 23 is a graph illustrating an example of repetitive thermal-energy quantity pattern used in the heat storage air conditioner of the fourth embodiment;
Fig. 24 is a graph illustrating an example of composite thermal-energy quantity pattern including a pattern that uses a surplus of thermal energy of the heat storage air conditioner of the fourth embodiment;
Fig. 25 is a graph illustrating a repetitive thermal-energy quantity pattern used in a heat storage air conditioner according to a fifth embodiment of the present invention;
Fig. 26 is a graph illustrating an example of composite thermal-energy quantity pattern including dissipating operation pattern that uses a surplus of thermal energy of the heat storage air conditioner of the fifth embodiment;
Fig. 27 is a block diagram of a heat storage air conditioner according to a sixth embodiment of the present invention;
Fig. 28 is a block diagram of a heat storage air conditioner according to a seventh embodiment of the present invention;
Fig. 29 is a flowchart for describing processing operations of the heat storage air conditioner of the seventh embodiment;
Fig. 30 is a flowchart for describing processing operations of the heat storage air conditioner of the seventh embodiment;
Fig. 31 is a graph for use in describing the method that estimates a power demand curve for the next day with use of power demand time-sequence data obtained when data of the heat storage air conditioner of the seventh embodiment are stored so as to correspond to a period of twelve days and eight hours;
Fig. 32 is a table that shows an example of numerical values regarding the quantity of power electricity represented by the time-sequence data used in the heat storage air conditioner of the seventh embodiment;
Fig. 33 is a block diagram of a heat storage air conditioner according to an eighth embodiment of the present invention;
Fig. 34 is a graph wherein the accuracy of estimation obtained when pseudo data are used is compared with the accuracy of estimation obtained when an ordinary operation (i.e., an operation which does not carry out control operations based on an estimation) or an operation based on pseudo data shifts to an estimation-based control operation based on practical data;
Fig. 35 is a block diagram of a conventional heat storage air conditioner;
Fig. 36 is a graph showing heat dissipation patterns used in the conventional heat storage air conditioner; and
Fig. 37 is a graph illustrating one example of transitive temperature data obtained during air-conditioning periods;
Fig. 38 is a block diagram of a heat storage air conditioner according to a ninth embodiment of the present invention;
Fig. 39 is a flowchart for describing processing operations of the heat storage air conditioner of the ninth embodiment;
Fig. 40 is an example of repetitive heat quantity pattern used in the heat storage air conditioner of the ninth embodiment;
Fig. 41 is a graph for use in describing a method of estimating a power demand curve for the next day of the heat storage air conditioner of the ninth embodiment;
Fig. 42 is a basic block diagram of a heat storage air conditioner according to a tenth embodiment of the present invention;
Fig. 43 is a flowchart for use in describing processing operations of the heat storage air conditioner of the tenth embodiment;
Fig. 44 is a basic block diagram of a heat storage air conditioner according to a eleventh embodiment of the present invention;
Fig. 45 is a flowchart for use in describing processing operations of the heat storage air conditioner of the eleventh embodiment;
Fig. 46 is a flowchart for use in describing processing operations of the heat storage air conditioner of the eleventh embodiment;
Fig. 47 is a graph showing a composite heat quantity pattern that is used in a heat storage air conditioner according to the eleventh embodiment of the present invention and consists of the quantity of thermal energy defined by dissipating operation pattern of a heat accumulator and the quantity of thermal energy defined by patterns obtained at the time of air-conditioning operations of a heat source;
Fig. 48 is a graph showing the dissipating operation pattern of the heat accumulator that corresponds to a hatched area of the composite heat quantity pattern shown in Fig. 47;
Fig. 49 is a graph showing patterns that are obtained at the time of the air-conditioning operations of the heat source and correspond to outlined portions of the composite heat quantity pattern shown in Fig. 47;
Fig. 50 is an example of repetitive heat quantity pattern used in the heat storage air conditioner of the eleventh embodiment;
Fig. 51 is a graph illustrating an example of composite heat quantity pattern of a pattern that uses a surplus of thermal energy of the heat storage air conditioner of the eleventh embodiment;
Fig. 52 is a graph illustrating an example of composite heat quantity pattern that is used in a heat storage air conditioner according to a twelfth embodiment of the present invention and includes the quantity of thermal energy defined by dissipating operation pattern of the heat accumulator and the quantity of thermal energy defined by the air-conditioning operation pattern of the heat source;
Fig. 53 is a graph showing the dissipating operation pattern of the heat accumulator that corresponds to a hatched portion of the composite heat quantity pattern shown in Fig. 52;
Fig. 54 is a graph showing the air-conditioning operation pattern of the heat source that corresponds to an outlined portion of the composite heat quantity pattern shown in Fig. 52;
Fig. 55 is a graph illustrating an example of repetitive heat quantity pattern used in the heat storage air conditioner of the twelfth embodiment;
Fig. 56 is a graph illustrating an example of composite heat quantity pattern including a pattern that uses a surplus of thermal energy of the heat storage air conditioner of the twelfth embodiment;
Fig. 57 is a graph illustrating a repetitive heat quantity pattern used in a heat storage air conditioner according to a thirteenth embodiment of the present invention;
Fig. 58 is a graph illustrating an example of composite heat quantity pattern including dissipating operation pattern that uses a surplus of thermal energy of the heat storage air conditioner of the thirteenth embodiment;
Fig. 59 is a block diagram of a heat storage air conditioner according to a fourteenth embodiment of the present invention;
Fig. 60 is a flowchart for describing processing operations of the heat storage air conditioner of the fourteenth embodiment;
Fig. 61 is a flowchart for describing processing operations of the heat storage air conditioner of the fourteenth embodiment;
Fig. 62 is a block diagram of a heat storage air conditioner according to a fifteenth embodiment of the present invention;
Fig. 63 is a flowchart for describing a thermal-energy accumulation estimating method as well as the processing operations of the heat storage air conditioner of the fifteenth embodiment;
Fig. 64 is an example of repetitive thermal-energy quantity pattern used in the heat storage air conditioner of the fifteenth embodiment;
Fig. 65 is a graph showing time-sequence data for use in describing a method of estimating a power demand curve for the next day;
Fig. 66 is a block diagram of the heat storage air conditioner of the sixteenth embodiment of the present invention;
Fig. 67 is a flowchart for describing the thermal-energy accumulation estimating method for use in the heat storage air conditioner as well as the processing operations of the heat storage air conditioner;
Fig. 68 is a block diagram of the heat storage air conditioner of the seventeenth embodiment of the present invention;
Fig. 69 is a flowchart for describing the thermal-energy accumulation estimating method for use in the heat storage air conditioner as well as the processing operations of the heat storage air conditioner;
Fig. 70 is a graph of an example of a composite thermal-energy quantity pattern that consists of a pattern of the quantity of thermal energy to be stored and a pattern of the quantity of thermal energy to be supplied used in the heat storage air conditioner of the seventeenth embodiment;
Fig. 71 is a graph showing a pattern of the quantity of thermal energy to be stored corresponding to a hatched area of the composite thermal-energy quantity pattern shown in Fig. 70;
Fig. 72 is a graph showing the pattern of thermal energy to be supplied corresponding to outlined portions of the composite thermal-energy quantity pattern shown in Fig. 70;
Fig. 73 is a repetitive thermal-energy quantity pattern of the heat storage air conditioner of the seventeenth embodiment;
Fig. 74 is a graph of an example of a composite thermal-energy quantity pattern that consists of a pattern of the quantity of thermal energy to be stored and a pattern of the quantity of thermal energy to be supplied used in the heat storage air conditioner of the eighteenth embodiment of the present invention;
Fig. 75 is a graph showing the pattern of the quantity of thermal energy to be stored corresponding to a hatched area of the composite thermal-energy quantity pattern shown in Fig. 13;
Fig. 76 is a graph showing the pattern of the quantity of thermal energy to be supplied corresponding to outlined portions of the composite thermal-energy quantity pattern shown in Fig. 13;
Fig. 77 is a repetitive thermal-energy quantity pattern of the heat storage air conditioner of the eighteenth embodiment;
Fig. 78 is an example of a repetitive thermal-energy quantity pattern for use in describing a control time period setting method which is carried out by the demand control time setting unit of the heat storage air conditioner of the nineteenth embodiment of the present invention; and
Fig. 79 is a block diagram of a heat storage air conditioner for use in describing another example of the method of calculating the quantity of cooling/heating energy in the seventeenth, eighteenth and nineteenth embodiments of the present invention.

### PREFERRED EMBODIMENTS OF THE INVENTION

Preferred embodiments of the present invention will be described with reference to the accompanying drawings as follows.

### FIRST EMBODIMENT

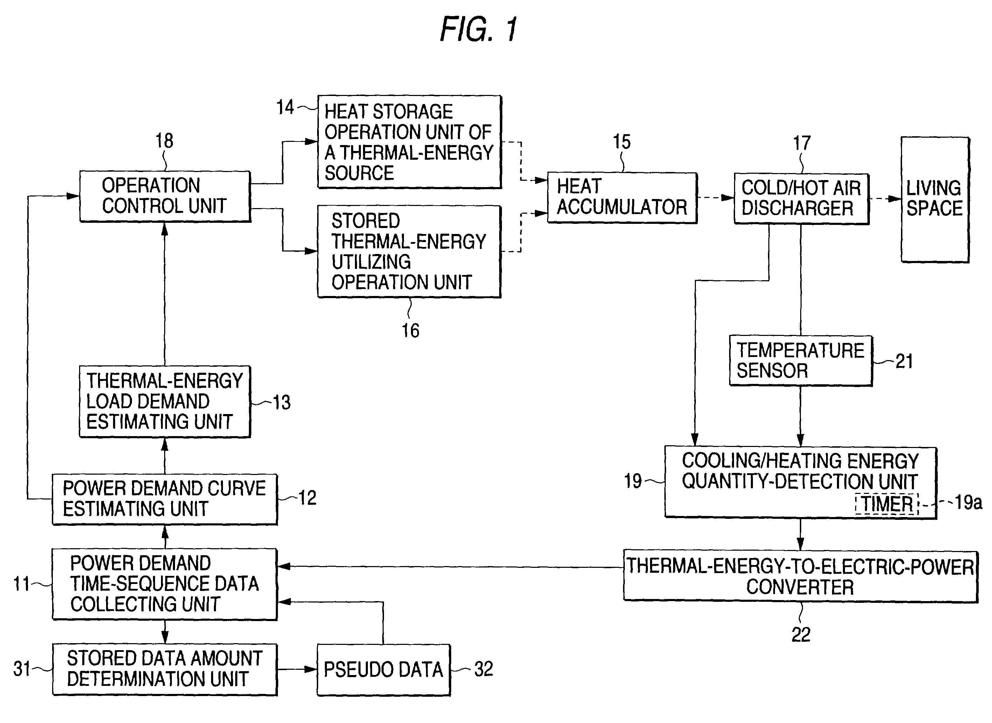

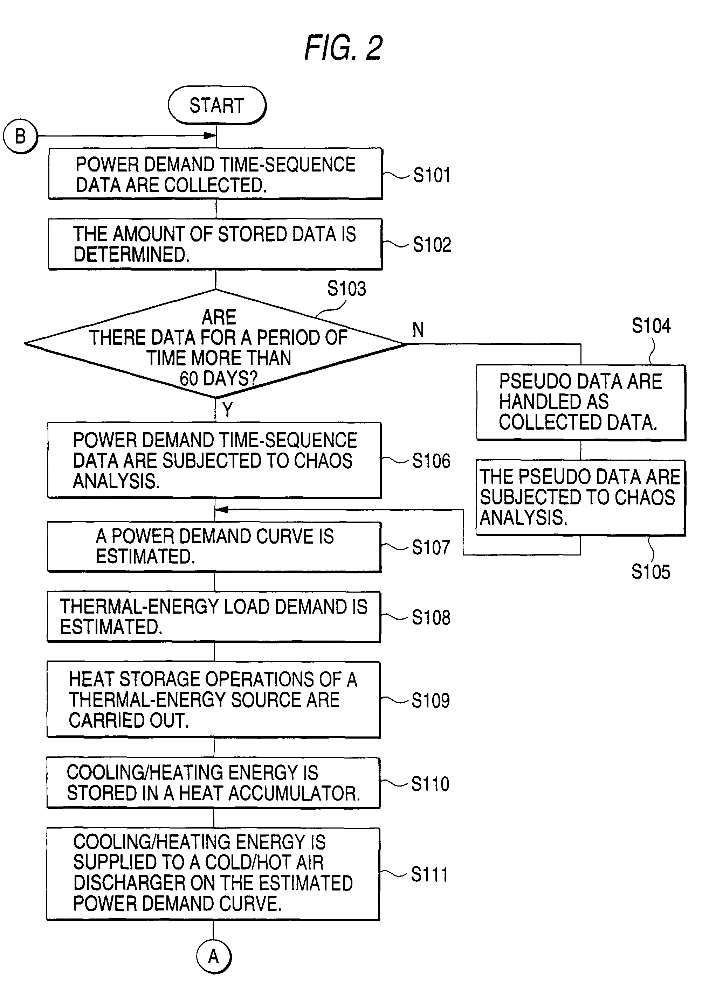

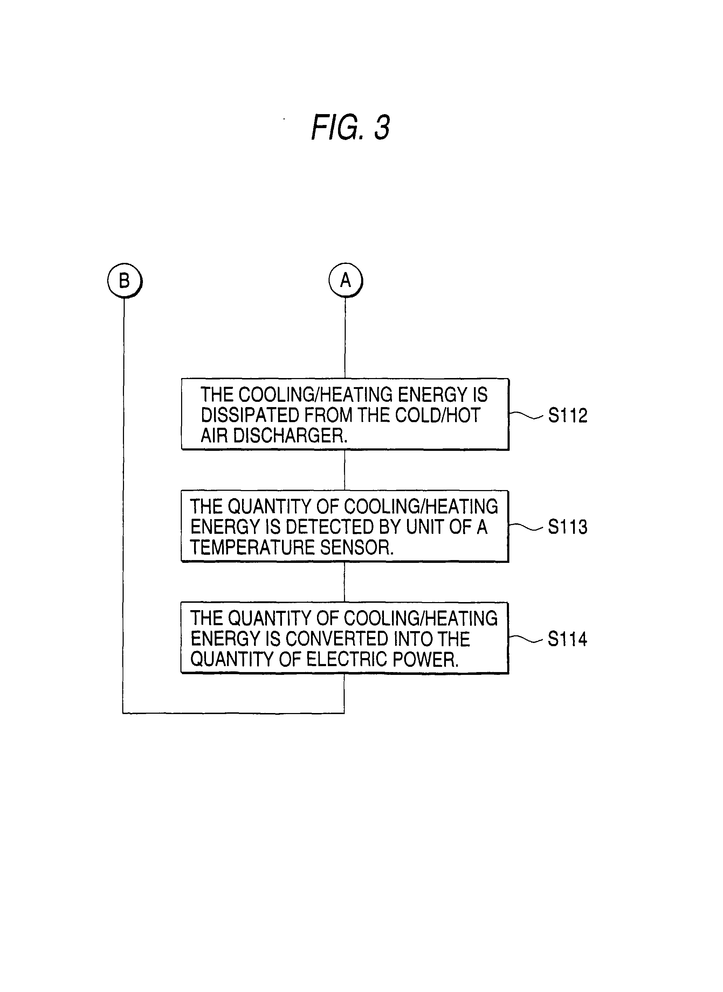

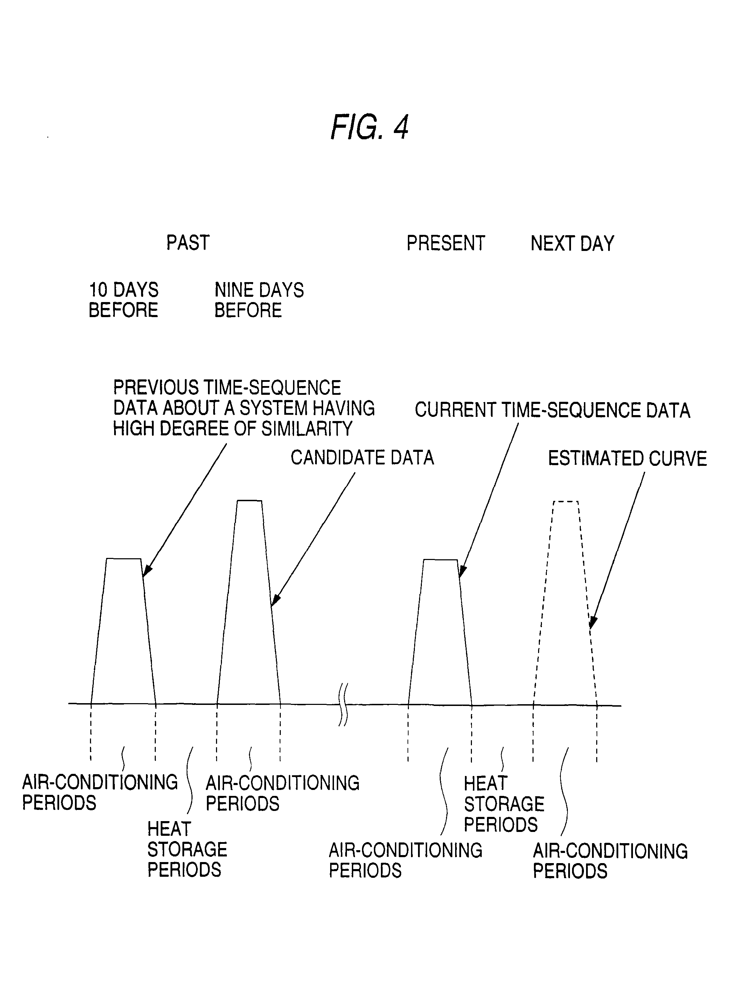

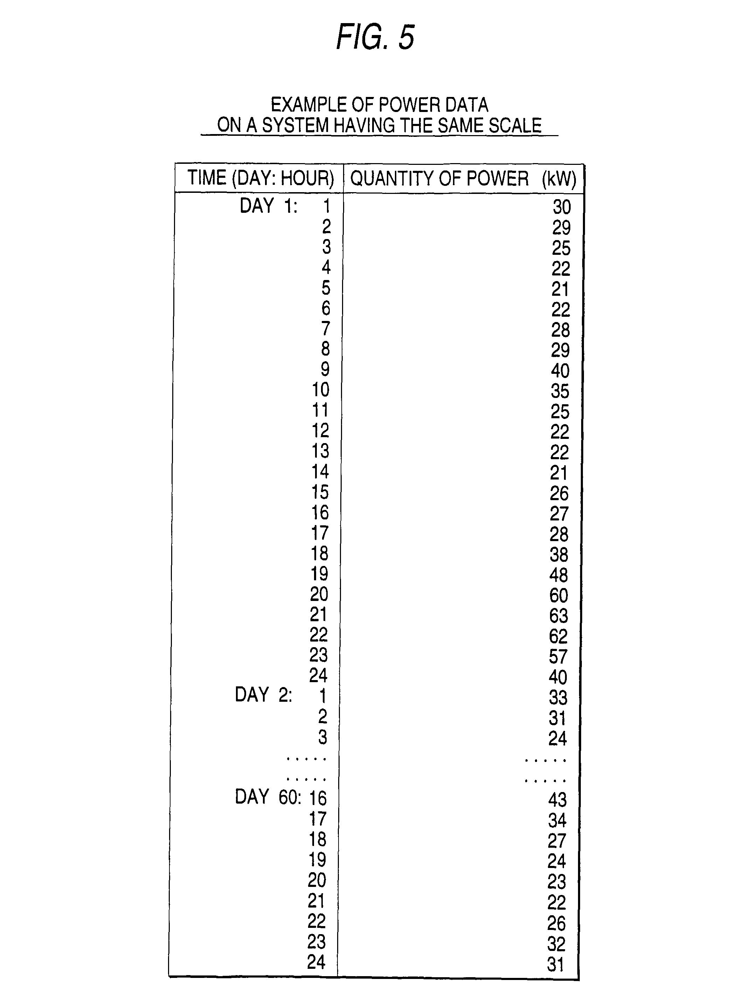

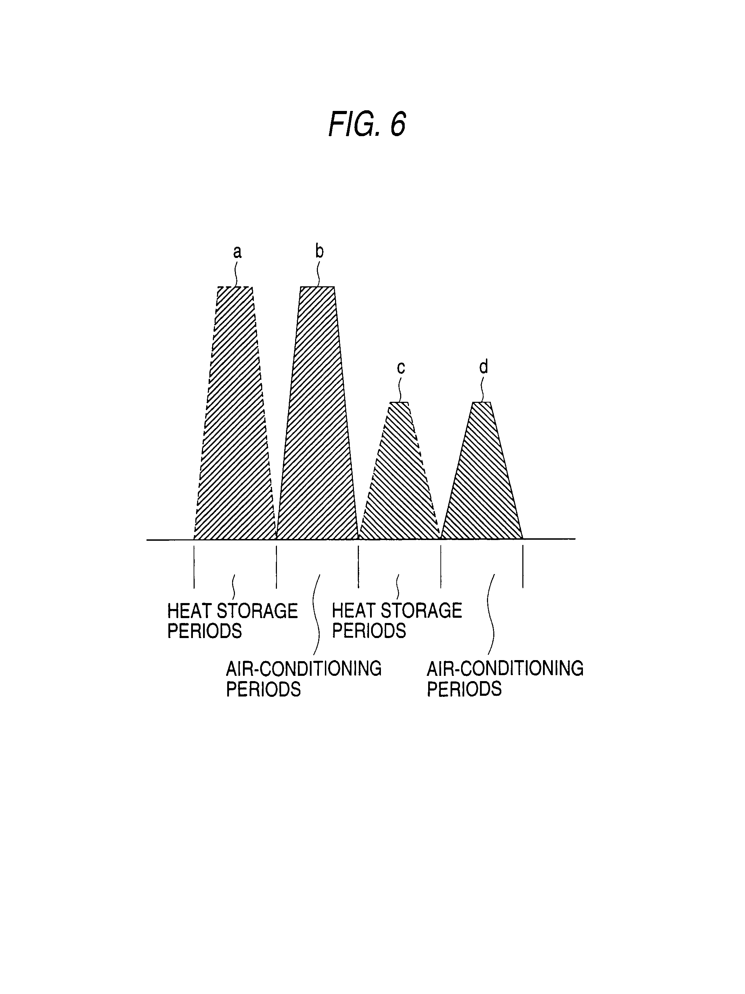

Fig. 1 is a basic block diagram of a heat storage air conditioner according to the present invention. Figs. 2 and 3 are flowcharts for use in describing processing operations of the heat storage air conditioner. Fig. 4 is a diagram for explaining a method of estimating a power demand curve for the next day using pseudo data of the heat storage air conditioner. Fig. 5 is a table that shows an example of numerical values regarding the quantity of power electricity represented by the pseudo data. Fig. 6 is an example of repetitive heat quantity pattern used in the heat storage air conditioner of the first embodiment.

In Fig. 1, reference numeral 11 designates a power demand time-sequence data collecting unit for collecting power demand time-sequence data. Reference numeral 31 designates stored data amount determination unit that determines the amount of data stored by the power demand time-sequence data collecting unit 11. If a predetermined amount of stored data (e.g., 60 days' worth of data) has not been achieved yet, the stored data amount determination unit sends pseudo data 32 to the power demand time-sequence data collecting unit 11. The following descriptions of the first embodiment will be based on an example wherein the time-sequence data (60 days' worth of data) regarding the power of a very-analogous system having the same scale are used as the pseudo data 32. Since the amount of the pseudo data 32 is not limited to 60 days, it may be more or less than 60 days. Reference numeral 12 designates a power demand curve estimating unit for estimating the power demand curve that is obtained by subjecting the power demand time-sequence data collected by the power demand time-sequence data collecting unit 11 or the pseudo data 32 to Chaos Analysis, which is one example of a method of analyzing the power demand time-sequence data. Reference numeral 13 designates thermal energy load demand estimating unit that estimates thermal energy load demand from the power demand curve; 14, heat storage operation unit of a heat source that stores cooling/heating energy in a heat accumulator 15 through a cooling/heating energy path; 16, stored heat utilizing operation unit for utilizing the thermal energy stored in the heat accumulator 15; 17, a cold/hot air discharger for dissipating the thermal energy stored in the heat accumulator 15; and 18, operation control unit for controlling the heat storage operation unit 14 and the stored energy utilizing operation unit 16 of the heat source.

The operation control unit 18 controls the heat storage operation unit 14 of the heat source on the basis of the thermal energy load demand estimated by the heat demand estimating unit 13 so as to cause the heat accumulator 15 to store the cooling/heating energy corresponding to the thermal energy load demand during the night. The power demand curve estimating unit 12 controls the stored heat utilizing operation unit 16 so as to cause the heat accumulator 15 to supply the stored thermal energy to the cold/hot air discharger 17 through the cooling/heating energy path during air-conditioning periods.

Reference numeral 19 designates cooling/heating energy quantity detection unit that detects the quantity of cooling/heating energy dissipated from the heat accumulator 15 through the cold/hot air discharger 17. Upon receipt of an operation signal from the cold/hot air discharger 17, the cooling/heating energy quantity detection unit 19 detects (or calculates) the quantity of cooling/heating energy by unit of a temperatures sensor 21 for detecting the temperature of the air discharged from the cold/hot air discharger 17 and a built-in timer 19a.

Reference numeral 22 designates a heat-to-electric-power converter that converts the quantity of cooling or heating energy detected by the cooling/heating energy quantity detection unit 19 into the quantity of electric power, as well as sending the thus-converted electric power to the power demand time-sequence data collecting unit 11.

With reference to Figs. 1 and 4 through 6, the operation of the heat storage air conditioner of the first embodiment will be described on the basis of Figs. 2 and 3. When the heat storage air conditioner starts to operate, the power demand time-sequence data collecting unit 11 collects power demand time-sequence data in the time period during which a living space is air-conditioned (step 101). The stored data amount determination unit 31 determines the amount of data stored by the power demand time-sequence data collecting unit 11 (step 102). In the case where the heat storage air conditioner starts up for the first time or recovers to its original state after the previous data have been lost as a result of a power failure, the stored data are substantially zero. The stored data amount determination unit 31 constantly monitors whether or not the amount of data stored by the power demand time-sequence data collecting unit 11 corresponds to a period of time more than 60 days (step 103). If the stored data amount determination unit 31 decides that the amount of stored data corresponds to a period of time less than 60 days, the heat storage air conditioner will be judged as being in an initial start-up condition or a recovery condition after a power failure. As a result, the pseudo data 32 are supplied to the power demand time-sequence data collecting unit 11, and the power demand time-sequence data collecting unit 11 takes the thus-received pseudo data as the collected data (step 104). The power demand curve estimating unit 12 analyzes the pseudo data 32 using Chaos Analysis (step 105).

If the power demand time-sequence data collected by the power demand time-sequence data collecting unit 11 are judged as data for a period of time more than 60 days in step 103, the power demand curve estimating unit 12 analyzes the thus-collected power demand time-sequence data using Chaos Analysis (step 106).

In this way, the power demand curve estimating unit 12 analyzes the power demand time-sequence data or the pseudo data 32 using Chaos Analysis, whereby a power demand curve during the air-conditioning periods for the next day is estimated (step 107). Subsequently, the thermal energy load demand estimating unit 13 estimates the thermal energy load required during the cooling or heating period for the next day on the basis of the power demand curve estimated by the power demand curve estimating unit 12 (step 108).

In order to store the quantity of thermal energy, which is equivalent to the thermal energy load demand estimated by the thermal energy load demand estimating unit 13, in the heat accumulator 15 through the cooling/heating energy path, the operation control unit 18 controls the heat storage unit 14 of the heat source, on the basis of the thermal energy load demand estimated by the thermal energy load demand estimating unit 13, so as to perform heat storage operations during the night (step 109). Then, the water previously stored in the heat accumulator 15 changes to ice using cooling energy or to hot water using heating energy with lapse of time, whereby the resultant ice or hot water is stored in the heat accumulator 15 (step 110).

In order to supply the cooling energy of ice or the heating energy of hot water stored in the heat accumulator 15 to the cold/hot air discharger 17 through the cooling/heating energy path, the operation control unit 18 controls the stored heat utilizing operation unit 16 during the air-conditioning period on the next day on the basis of the power demand curve estimated by the power demand curve estimating unit 12, whereby the stored thermal energy of the heat accumulator 15 is supplied to the cold/hot air discharger 17 through the cooling/heating energy path (step 111). As a result, the thermal energy is dissipated from the cold/hot air discharger 17 (step 112), which enables the living room to be cooled or heated. Gas, a liquid, or a medium having a low boiling point is used as a medium for transmitting the cooling energy of ice or the heating energy of hot water stored in the heat accumulator 15 to the cold/hot air discharger 17. The same also applies to the second through eighth embodiments which will be described later. The cooling/heating energy quantity detection unit 19 detects the quantity of cooling energy of ice or the quantity of heating energy of hot water supplied to the cold/hot air discharger 17, in time sequence, by unit of the temperature sensor 21 for detecting the temperature of the air dissipated from the cold/hot air discharger 17 and the built-in timer 19a (step 113). The data on the quantity of cooling/heating energy detected in time sequence is input to the heat-to-electric-power converter 22. Consequently, the data on the quantity of cooling/heating energy are converted into data on the quantity of electric power by unit of the heat-to-electric-power converter 22 (step 114). The time-sequence data on the quantity of electric power converted by the heat-to-electric-power converter 22 are supplied to the power demand time-sequence data collecting unit 11. The thus-received time-sequence data are collected again as the power demand time-sequence data in the same manner as has been previously described in step 101. The same processing as has been previously described is repeated hereinbelow.

In the repetitive heat quantity pattern shown in Fig. 6, heat storage quantity pattern "a" corresponds to heat dissipation quantity pattern "b" during air-conditioning periods for the next day. Further, heat storage quantity pattern "c" corresponds to heat quantity dissipation pattern "d" during the air-conditioning periods for the next day. By virtue of these heat quantity patterns, the stored thermal energy can be prevented from running short or becoming excessive during the air-conditioning periods. Even if the stored thermal energy runs short or becomes excessive, the shortage or surplus of the thermal energy can be reduced. For these reasons, it is possible to use an appropriate quantity of electric power in producing thermal energy to be stored during the night as well as sufficiently maintaining the amenity of the living space. The quantity of electric power required during the cooling or heating periods is totally covered by the quantity of stored thermal energy, which in turn makes it possible to reduce electricity costs to a much greater extent.

The operation control unit 18 is set so as to complete the heat storage operations of the heat source carried out by the heat storage operation unit 14 of the heat source in step 109 immediately before the air-conditioning periods during which a cooling or heating operation commences. As a result, it is possible to effectively utilize the stored thermal energy of the heat accumulator 15 for carrying out an air-conditioning operation, i.e., a cooling or heating operation, before the cooling energy of ice or the heating energy of hot water stored in the heat accumulator 15 diffuses to the outside. Therefore, it is possible to commence air-conditioning operations using the thermal energy as previously set, which makes it possible to prevent the quantity of thermal energy stored in the heat accumulator 15 from running short during the air-conditioning periods as well as sufficiently maintaining the amenity of the living space. The same also applies to the second through eighth embodiments which will be described later.

The stored data amount determination unit 31 constantly monitors the amount of data stored by the power demand time-sequence data collecting unit 11. If it is decided that the amount of stored data corresponds to a period of time less than 60 days, the pseudo data 32, which comprises the time-sequence data (e.g., 60 days' worth of data) regarding the power of a very-analogous system having the same scale is sent to the power demand time-sequence data collecting unit 11. A estimate for the subsequent power demand is controlled using the pseudo data 32 as the collected data. Therefore, the estimate-based control operations can be started without any problems even in the case where the heat storage air conditioner starts up or recovers to its original state after a power failure.

With reference to Fig. 4, the example in which a power demand curve for the next day is estimated by use of Chaos Analysis will be described. Fig. 4 shows the previous power demand time-sequence pseudo data (i.e., pseudo data) and the current power demand time-sequence data. For example, a local pattern of the pseudo data, which is most analogous to a local pattern of the current day's power demand time-sequence data obtained when the air-conditioning operation approaches completion, is extracted. If the local pattern of the power demand time-sequence data obtained ten days before is most analogous to the current day's local pattern, this local pattern is treated as candidate data for use in Chaos Analysis. Subsequently, where a power demand curve for the air-conditioning periods of the next day is estimated, the time-sequence data one day after the time-sequence data obtained ten days before, i.e., the power demand time-sequence data obtained nine days before, are handled as the power demand curve.

Alternatively, for example, a local pattern of the previous power demand time-sequence data (i.e., pseudo data), which is most analogous to a local pattern of the power demand time-sequence data at the beginning of the air condition operation, may be extracted. The same also applies to the second to eighth embodiments that will be described later.

The present embodiment has been described on the basis of the example, wherein the stored data amount determination unit 31 sends the time sequence data (being 60 days' worth of data) on the power of a very-analogous system having the same scale (e.g., an stored heat fully utilizing operation system) to the power demand time-sequence data collecting unit 11, exactly as they are, without updating them until the amount of data stored by the power demand time-sequence data collecting unit 11 becomes so as to correspond to a period of time more than 60 days. It is also possible for the stored data amount determination unit to take practical data as the most recent data among the pseudo data every time the practical data are obtained as a result of the air-conditioning operations. Then, the pseudo data may be updated by deleting the oldest data corresponding to the quantity of most recent data. In this case, the contents of the pseudo data can be replaced with practical data with lapse of time. Therefore, it is possible to more smoothly shift the estimate-based control operations based on the pseudo data to the estimate-based control operations based on the practical data. The same also applies to the second embodiment which will be described later.

It is also possible for the stored data amount determination unit to suspend the output of the pseudo data to the power demand time-sequence data collecting unit immediately after the amount of data practically obtained as a result of the air-conditioning operations has reached the amount (e.g., data for a period of one day) that permits estimate-based control operations. In this case, the estimate-based control operations based on the practical data are started when the amount of practical data is small. Only the contents of the data that are sufficient to make the heat storage air conditioner active are required as the pseudo data, which in turn makes it easy to sample the pseudo data from the very-analogous system having the same scale. The same also applies to the second embodiment that will be described later.

### SECOND EMBODIMENT

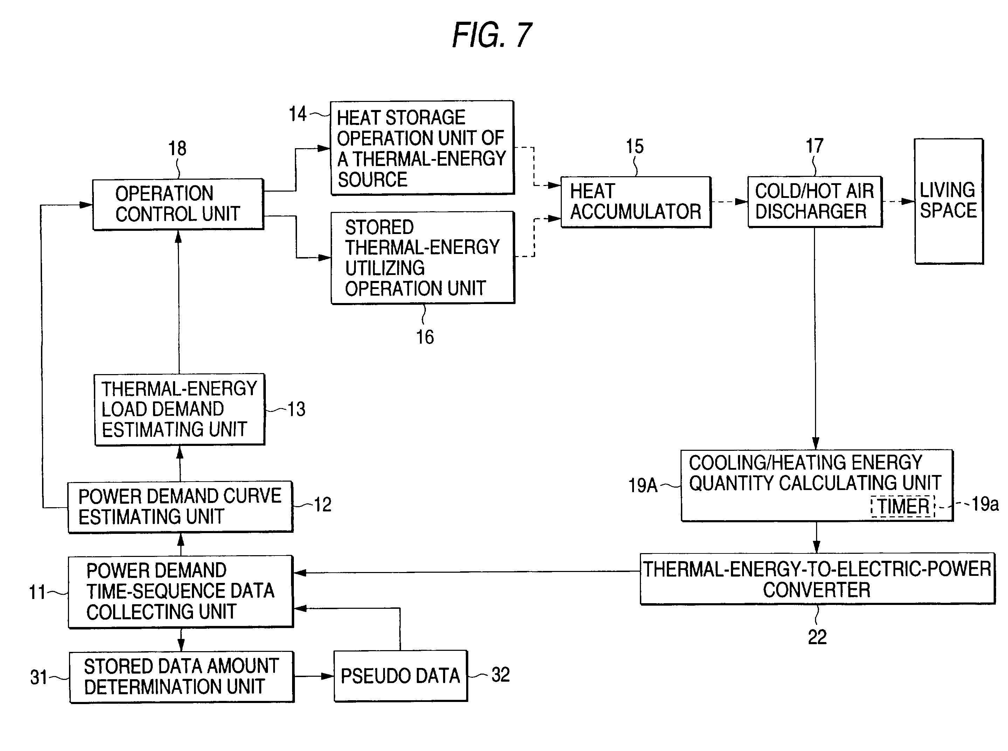

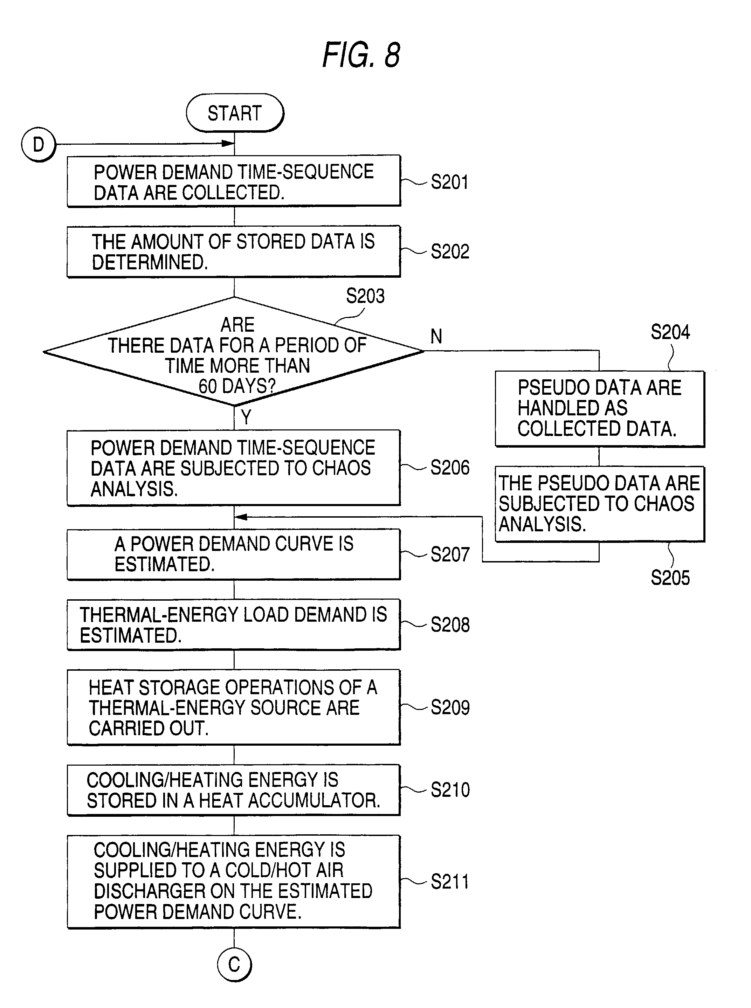

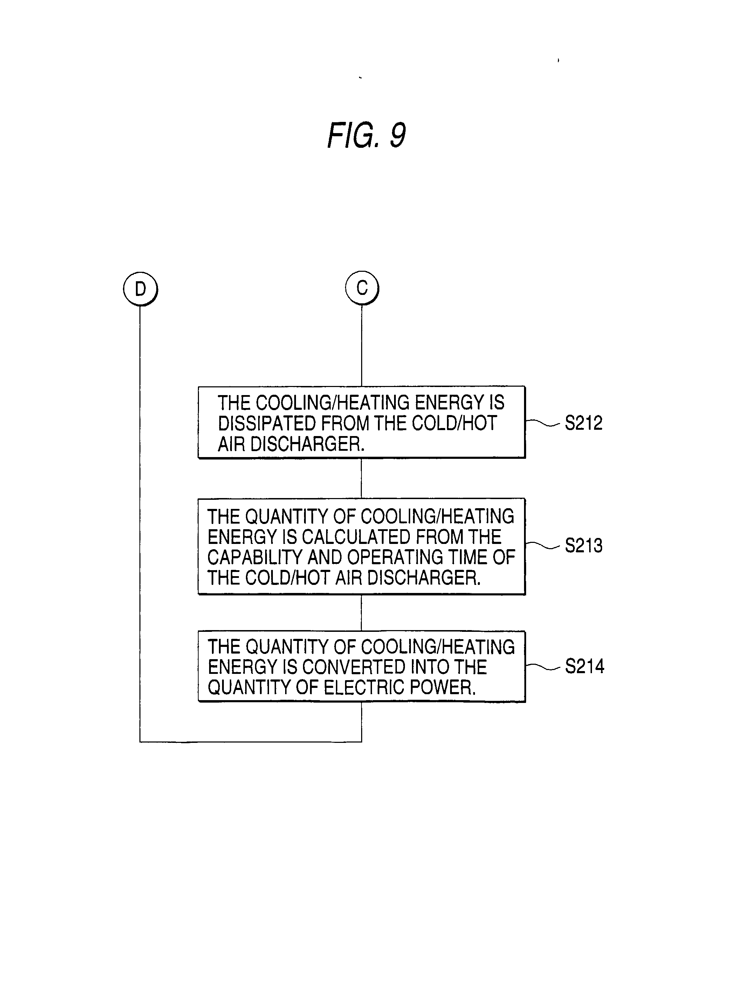

Fig. 7 is a basic block diagram of a heat storage air conditioner according to the present invention. Figs. 8 and 9 are flowcharts for use in describing processing operations of the heat storage air conditioner. The elements shown in Fig. 7 that are the same as those of the previously-described first embodiment shown in Fig. 1 are assigned the same reference numerals.

In Fig. 7, reference numeral 11 designates a power demand time-sequence data collecting unit for collecting power demand time-sequence data. Reference numeral 31 designates stored data amount determination unit that determines the amount of data stored by the power demand time-sequence data collecting unit 11. If a predetermined amount of stored data (e.g., 60 days' worth of data) has not been achieved yet, the stored data amount determination unit sends pseudo data 32 to the power demand time-sequence data collecting unit 11. As in the first embodiment, the following descriptions will be based on an example wherein the time-sequence data (60 days' worth of data) regarding the power of a very-analogous system having the same scale are used as the pseudo data 32. Since the amount of the pseudo data 32 is not limited to 60 days, it may be more or less than 60 days. Reference numeral 12 designates a power demand curve estimating unit for estimating the power demand curve that is obtained by subjecting the power demand time-sequence data collected by the power demand time-sequence data collecting unit 11 or the pseudo data 32 to Chaos Analysis, which is one example of a method of analyzing the power demand time-sequence data. Reference numeral 13 designates thermal energy load demand estimating unit that estimates thermal energy load demand from the power demand curve; 14, heat storage operation unit of a heat source that stores cooling/heating energy in a heat accumulator 15 through a cooling/heating energy path; 16, stored heat utilizing operation unit for utilizing the thermal energy stored in the heat accumulator 15; 17, a cold/hot air discharger for dissipating the thermal energy stored in the heat accumulator 15; and 18, operation control unit which has the same function as the operation control unit of the previously-described first embodiment. This operation control unit 18 controls the heat storage operation unit 14 and the stored heat utilizing operation unit 16. Reference numeral 19A designates cooling/heating energy quantity calculating unit for calculating the quantity of cooling/heating energy of the heat accumulator 15 dissipated from the cold/hot air discharger 17. This cooling/heating energy quantity calculating unit 19A has the function of calculating the quantity of cooling/heating energy from the capability and operating time of the hot/cold air discharger 17. Reference numeral 22 designates a heat-to-electric-power converter that converts the quantity of cooling or heating energy calculated by the cooling/heating energy quantity calculating unit 19A into the quantity of electric power, as well as sending the thus-converted electric power to the power demand time-sequence data collecting unit 11.

With reference to Fig. 7, the operation of the heat storage air conditioner of the second embodiment will be described on the basis of Figs. 8 and 9. When the heat storage air conditioner starts to operate, the power demand time-sequence time-sequence data collecting unit 11 collects power demand data in the time period during which a living space is air-conditioned (step 201). The stored data amount determination unit 31 determines the amount of data stored by the power demand time-sequence data collecting unit 11 (step 202). The stored data amount determination unit 31 constantly monitors whether or not the amount of data stored by the power demand time-sequence data collecting unit 11 corresponds to a period of time more than 60 days (step 203). If the stored data amount determination unit 31 decides that the amount of stored data corresponds to a period of time less than 60 days, the heat storage air conditioner will be judged as being in a start-up condition or a recovery condition after a power failure. As a result, the pseudo data 32 are supplied to the power demand time-sequence data collecting unit 11, and the power demand time-sequence data collecting unit 11 takes the thus-received pseudo data 32 as the collected data (step 204). The power demand curve estimating unit 12 analyzes the pseudo data 32 using Chaos Analysis (step 205).

If the power demand time-sequence data collected by the power demand time-sequence data collecting unit 11 are judged as data for a period of time more than 60 days in step 203, the power demand curve estimating unit 12 analyzes the thus-collected power demand time-sequence data using Chaos Analysis (step 206).

In this way, the power demand curve estimating unit 12 analyzes the power demand time-sequence data or the pseudo data 32 using Chaos Analysis, whereby a power demand curve during the air-conditioning periods for the next day is estimated (step 207). Subsequently, the thermal energy load demand estimating unit 13 estimates the thermal energy load required during the cooling or heating period for the next day on the basis of the power demand curve estimated by the power demand curve estimating unit 12 (step 208).

In order to store the quantity of thermal energy, which is equivalent to the thermal energy load demand estimated by the thermal energy load demand estimating unit 13, in the heat accumulator 15 through the cooling/heating energy path, the operation control unit 18 controls the heat storage unit 14 of the heat source, on the basis of the thermal energy load demand estimated by the thermal energy load demand estimating unit 13, so as to perform heat storage operations during the night (step 209). Then, the water previously stored in the heat accumulator 15 changes to ice using cooling energy or to hot water using heating energy with lapse of time, whereby the resultant ice or hot water is stored in the heat accumulator 15 (step 210).

In order to supply the cooling energy of ice or the heating energy of hot water stored in the heat accumulator 15 to the cold/hot air discharger 17 through the cooling/heating energy path, the operation control unit 18 controls the stored heat utilizing operation unit 16 during the air-conditioning period on the next day on the basis of the power demand curve estimated by the power demand curve estimating unit 12, whereby the stored thermal energy of the heat accumulator 15 is supplied to the cold/hot air discharger 17 through the cooling/heating energy path (step 211). As a result, the thermal energy is dissipated from the cold/hot air discharger 17 (step 212), which enables the living room to be cooled or heated. The cooling/heating energy quantity calculating unit 19A calculates the quantity of cooling energy of ice or the quantity of heating energy of hot water supplied to the cold/hot air discharger 17 from the capability and operating time of the cold/hot air discharger 17 in time sequence (step 213). The data on the quantity of cooling/heating energy calculated in time sequence is input to the heat-to-electric-power converter 22. Consequently, the data on the quantity of cooling/heating energy are converted into data on the quantity of electric power by unit of the heat-to-electric-power converter 22 (step 214). The time-sequence data on the quantity of electric power converted by the heat-to-electric-power converter 22 are supplied to the power demand time-sequence data collecting unit 11. The thus-received time-sequence data are collected again as the power demand time-sequence data in the same manner as has been previously described in step 201. The same processing as has been previously described is repeated hereinbelow.

Also in the heat storage air-conditioner of the second embodiment, the stored data amount determination unit 31 constantly monitors the amount of data stored by the power demand time-sequence data collecting unit 11. If it is decided that the amount of stored data corresponds to a period of time less than 60 days, the pseudo data 32, which comprises the time-sequence data regarding the power of a system being closely analogous to and having the same scale (e.g., 60 days' worth of data), is sent to the power demand time-sequence data collecting unit 11. A estimate for the subsequent power demand is controlled using the pseudo data 32 as the collected data. Therefore, the estimate-based control operations can be started without any problems even in the case where the heat storage air conditioner starts up or recovers to its original state after a power failure.

The heat quantity patterns of the night and the heat dissipation quantity pattern of the air-conditioning periods of the next day are determined by analysis of the previous time-sequence data and the pseudo data 32. Consequently, the stored thermal energy can be prevented from running short or becoming excessive during the air-conditioning periods. Even if the stored thermal energy runs short or becomes excessive, the shortage or surplus of the thermal energy can be reduced. For these reasons, it is possible to use an appropriate quantity of electric power in producing thermal energy to be stored during the night as well as sufficiently maintaining the amenity of the living space. The quantity of electric power required during the cooling or heating periods is totally covered by the quantity of stored thermal energy, which in turn makes it possible to reduce electricity costs to a much greater extent.

This cooling/heating energy quantity calculating unit 19A calculates the quantity of cooling energy of ice or the quantity of heating energy of hot water supplied to the cold/hot air discharger 17 from the heat accumulator 15, from the capability and operating time of the cold/hot air discharger 17 in time sequence. Therefore, the need for a temperature sensor can be eliminated, and the cost of the heat storage air conditioner can be reduced accordingly.

### THIRD EMBODIMENT

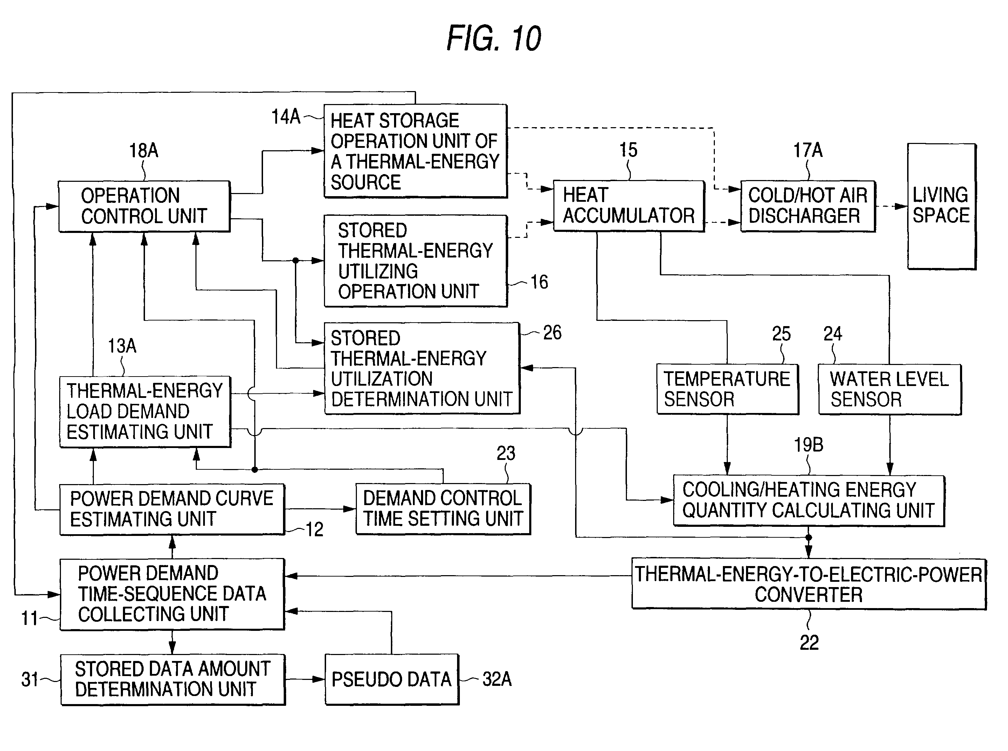

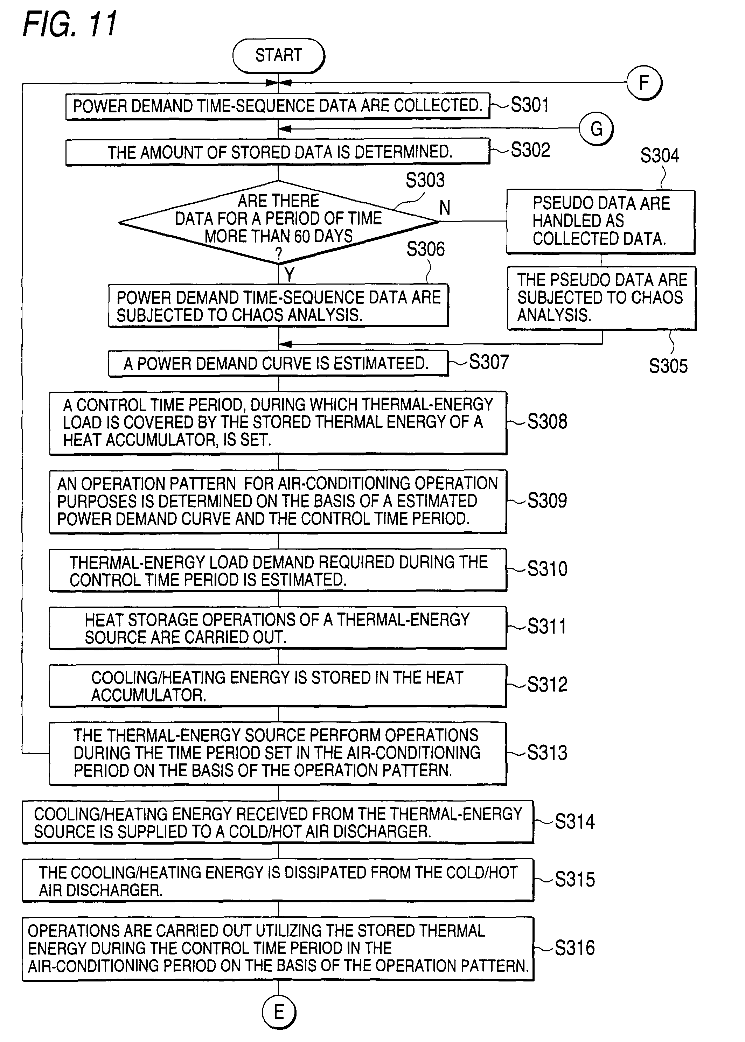

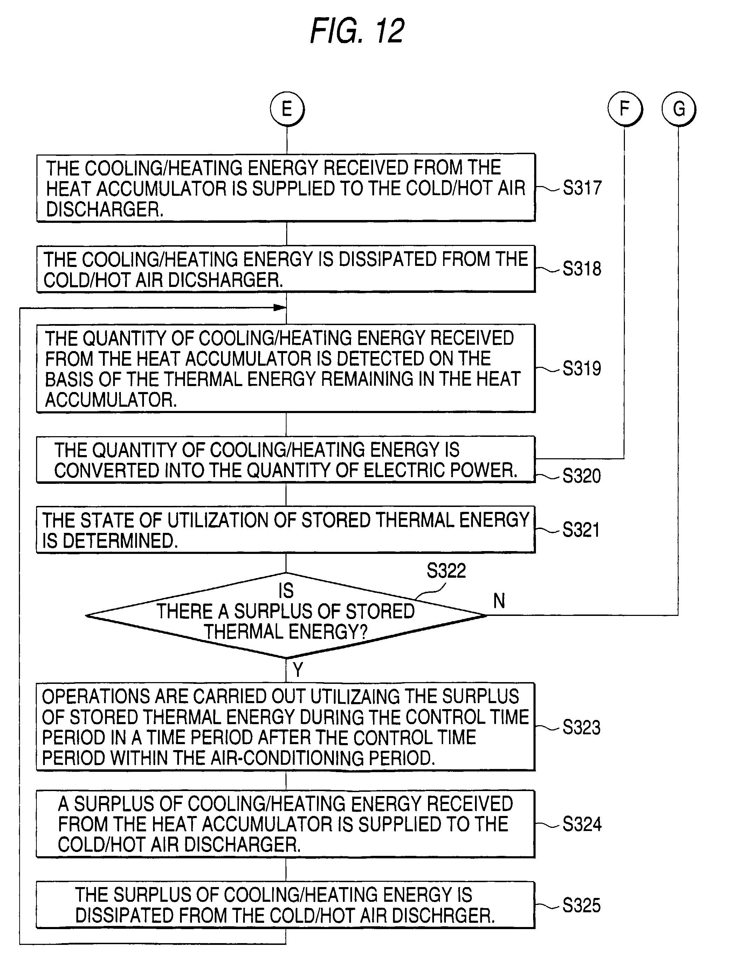

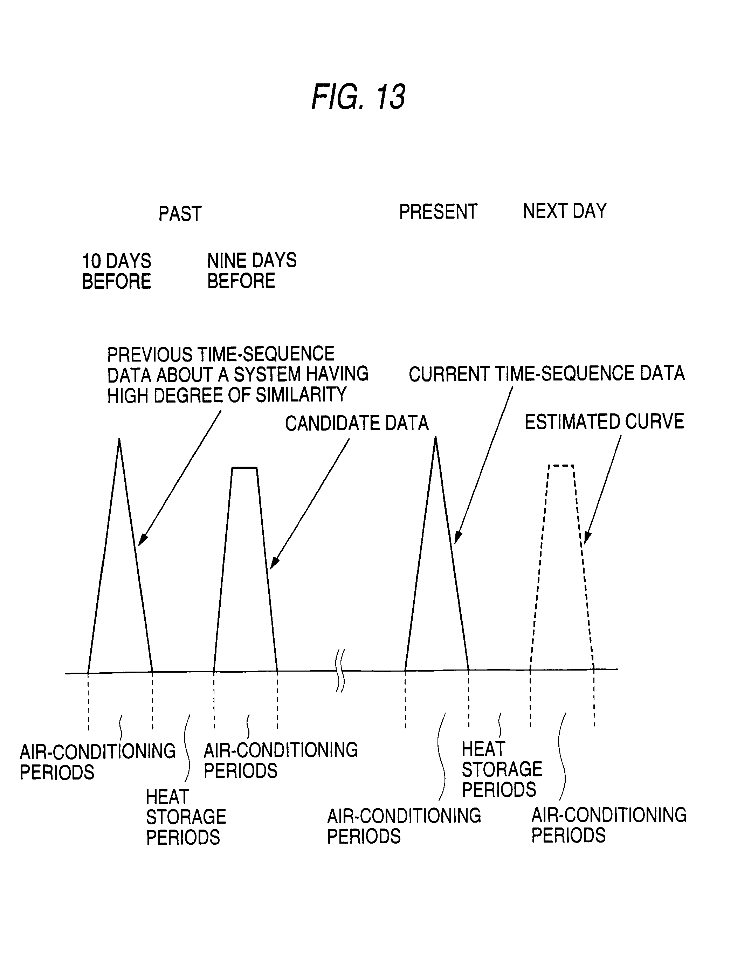

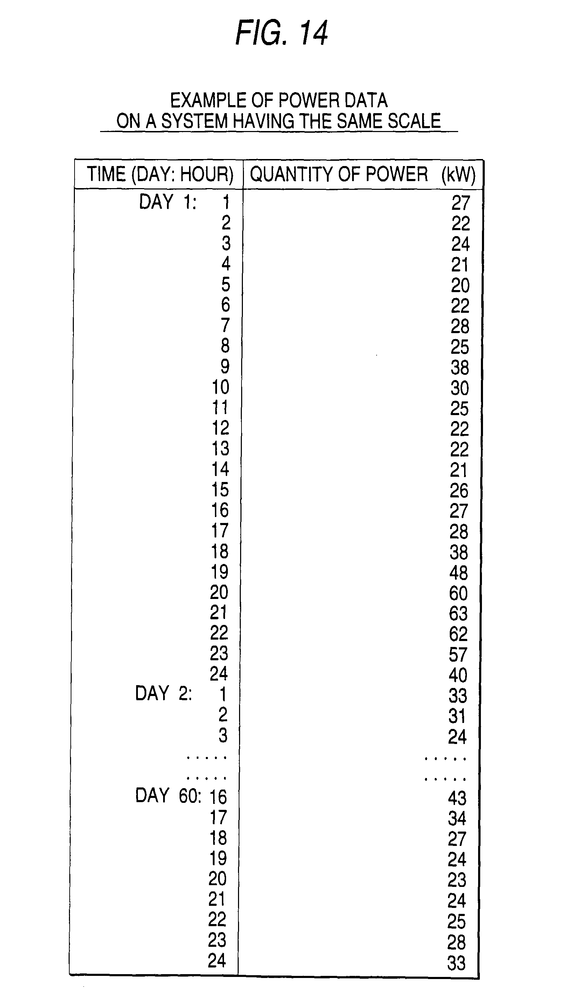

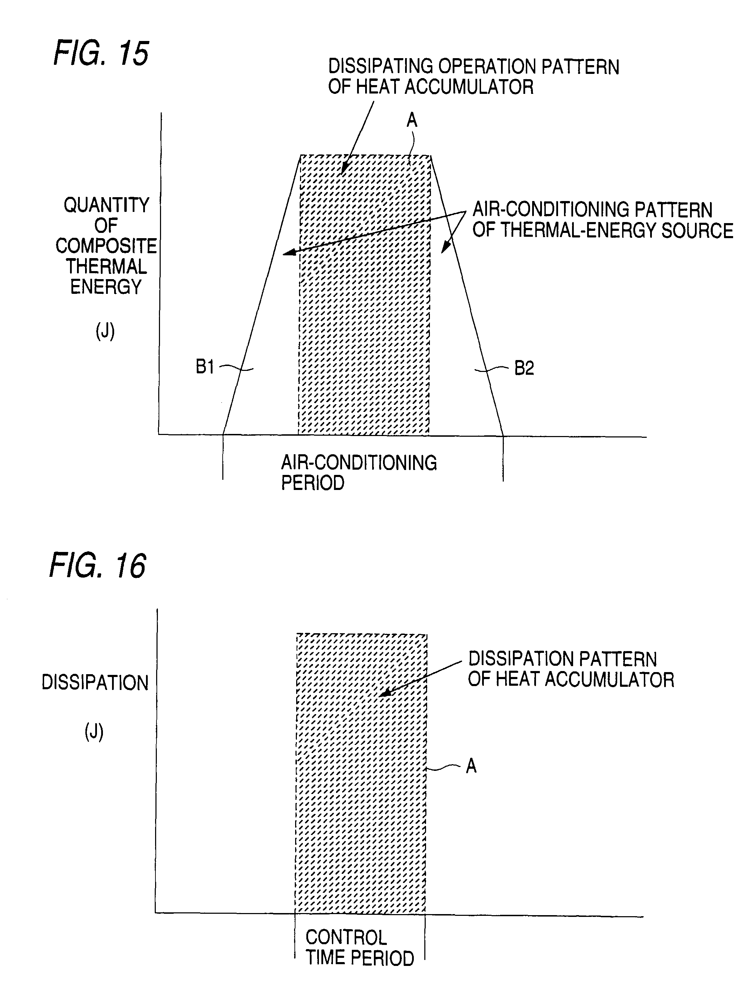

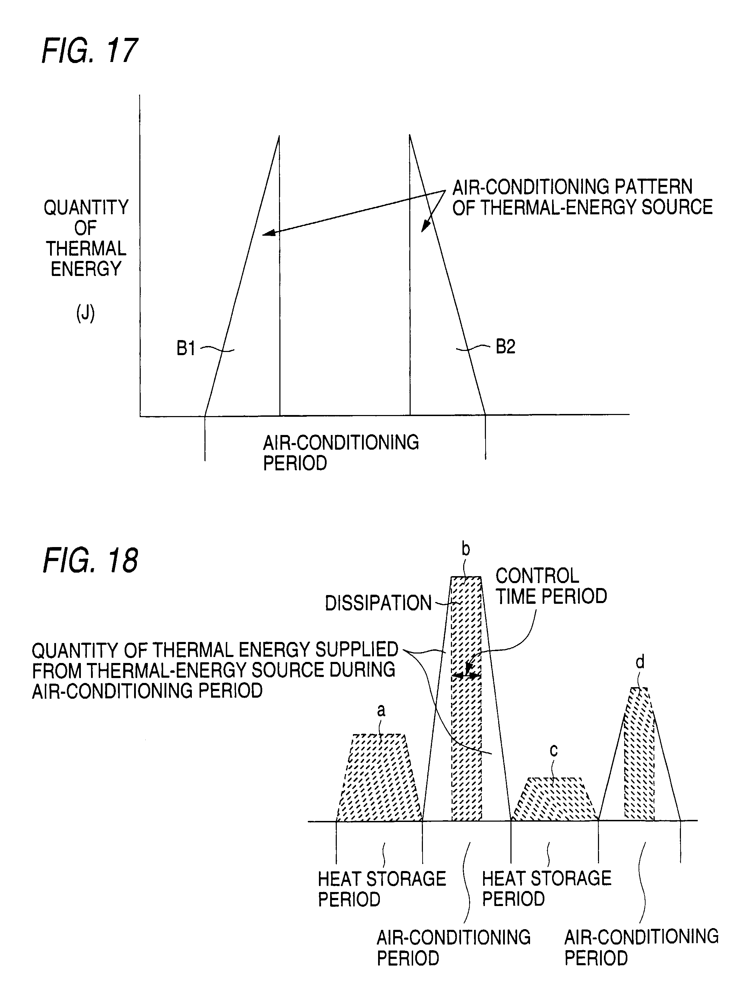

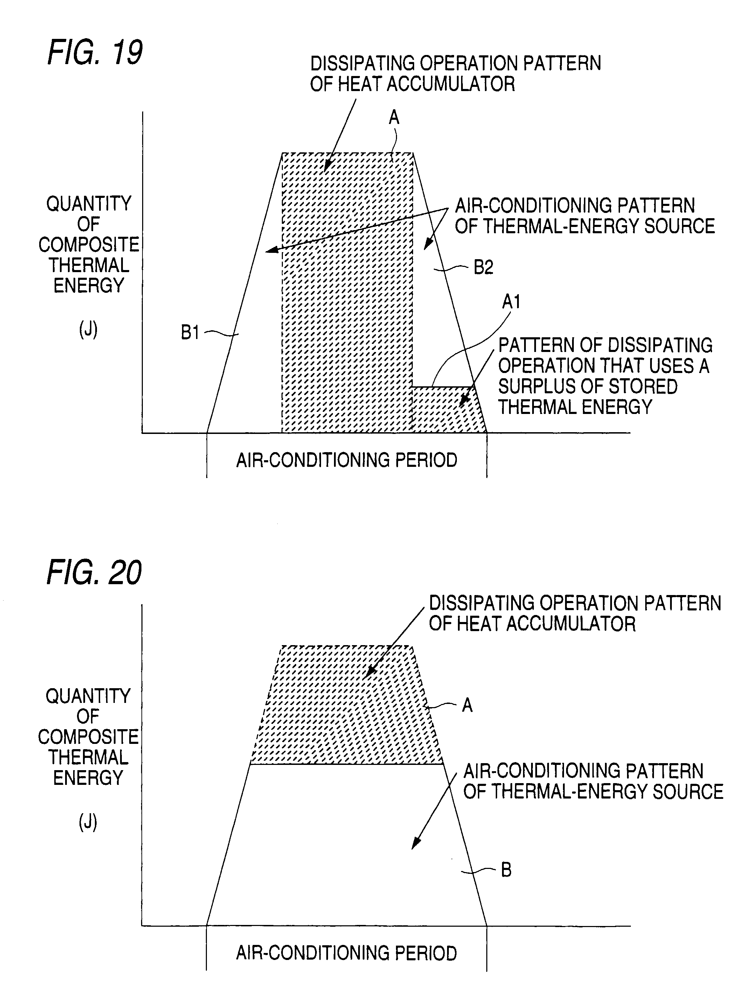

Fig. 10 is a basic block diagram of a heat storage air conditioner according to the present invention. Figs. 11 and 12 are flowcharts for use in describing processing operations of the heat storage air conditioner. Fig. 13 is a diagram for use in describing a method of estimating a power demand curve for the next day using pseudo data of the heat storage air conditioner. Fig. 14 is a table that shows an example of numerical values regarding the quantity of power electricity represented by the pseudo data used in the heat storage air conditioner of the third embodiment. Fig. 15 is a diagram showing a composite heat quantity pattern that is used in the heat storage air conditioner of the present invention and consists of the quantity of thermal energy defined by dissipating operation pattern A of a heat accumulator and the quantity of thermal energy defined by patterns B1 and B2 obtained at the time of air-conditioning operations of a heat source. Fig. 16 is a diagram showing the dissipating operation pattern A of the heat accumulator that corresponds to a hatched area of the composite heat quantity pattern shown in Fig. 15. Fig. 17 is a diagram showing the patterns B1 and B2 that are obtained at the time of the air-conditioning operations of the heat source and correspond to outlined portions of the composite heat quantity pattern shown in Fig. 15. Fig. 18 is an example of repetitive heat quantity pattern used in the heat storage air conditioner of the third embodiment. Fig. 19 is a diagram illustrating an example of composite heat quantity pattern including pattern A1 that uses a surplus of thermal energy. The elements shown in Fig. 10 that are the same as those used in the previously-described first embodiment shown in Fig. 1 are assigned the same reference numerals.

In Fig. 10, reference numeral 11 designates a power demand time-sequence data collecting unit for collecting power demand time-sequence data. Reference numeral 31 designates stored data amount determination unit that determines the amount of data stored by the power demand time-sequence data collecting unit 11. If a predetermined amount of stored data (e.g., 60 days' worth of data) has not been achieved yet, the stored data amount determination unit sends pseudo data 32A to the power demand time-sequence data collecting unit 11. The following descriptions of the third embodiment will be based on an example wherein very-analogous theoretical time-sequence data (60 days' worth of data) are used as the pseudo data 32A. Since the amount of the pseudo data 32A is not limited to 60 days, it may be more or less than 60 days. Reference numeral 12 designates a power demand curve estimating unit for estimating the power demand curve that is obtained by subjecting the power demand time-sequence data, that have been collected by the power demand time-sequence data collecting unit 11, or the pseudo data 32A to Chaos Analysis which is one example of a method of analyzing the power demand time-sequence data. Reference numeral 23 designates a demand control time setting unit for setting a control time period during which thermal energy load is covered by the stored thermal energy of the heat accumulator 15 on the basis of the power demand curve. Reference numeral 13A designates thermal energy load demand estimating unit that estimates thermal energy load demand of the control time period on the basis of the time control period set by the demand control time setting unit 23 and the power demand curve estimated by the power demand curve estimating unit 12. Reference numeral 14A designates operation unit of a heat source that supplies cooling/heating energy. Reference numeral 15 designates a heat accumulator that stores the cooling/heating energy received from the operation unit 14A of the heat source. Reference numeral 16 designates stored heat utilizing operation unit for utilizing the thermal energy stored in the heat accumulator 15; 17A, a cold/hot air discharger for dissipating the thermal energy stored in the heat accumulator 15 and/or the thermal energy received from the operation unit 14A of the heat source; and 18A, operation control unit controls the operation unit 14A and the stored heat utilizing operation unit 16. The detailed function of this operation control unit will be described later.

Reference numeral 19B designates cooling/heating energy quantity detection unit that detects the quantity of cooling/heating energy dissipated from the heat accumulator 15 through the cold/hot air discharger 17A, from the thermal energy remaining in the heat accumulator 15. In the case of the thermal energy stored in the form of ice, it is necessary to detect cooling energy (latent heat) and heating energy (sensible heat) in order to obtain the quantity of ice or hot water remaining in the heat accumulator 5. In the third embodiment, a water level sensor 24 is used for detecting the cooling energy (latent heat), whereas a temperature sensor 25 is used for detecting the heating energy (sensible heat). Specifically, the cooling/heating energy quantity detection unit 19B detects (or calculates) the quantity of cooling/heating energy dissipated from the heat accumulator 15 through the cold/hot air discharger 17A by comparing the residual thermal energy of the current heat accumulator 15 detected by the water level sensor 24 and the temperature sensor 25 with the thermal energy load demand estimated on the previous day by the thermal energy load demand estimating unit 13A.

Reference numeral 26 designates stored heat utilization determination unit that determines the state of utilization of the stored thermal energy during the control time period of the air-conditioning periods, from the quantity of cooling/heating energy detected by the cooling/heating energy quantity detection unit 19B and the thermal energy load demand estimated by the thermal energy load estimating unit 13A. The stored heat utilization determination unit 26 sends a result of the determination to the operation control unit 18A. Reference numeral 22 designates a heat-to-electric-power converter that converts the quantity of cooling or heating energy detected by the cooling/heating energy quantity calculating unit 19B into the quantity of electric power, as well as sending the thus-converted electric power to the power demand time-sequence data collecting unit 11.

The operation control unit 18A has the following functions of:
(1) controlling the operation unit 14A of the heat source during the night to store the quantity of cooling/heating energy corresponding to the thermal energy load demand in the heat accumulator 15 via the cooling/heating energy path on the basis of the thermal energy load demand estimated by the thermal energy load demand estimating unit 13A;
(2) determining an operation pattern for use in the air-conditioning periods on the basis of the power demand curve estimated by the power demand curve estimating unit 12 and the control time period set by the demand control time setting unit 23; controlling the operation unit 14A of the heat source during the preset time period of the air-conditioning periods so as to supply cooling/heating energy directly to the cold/hot air discharger 17A via the cooling/heating energy path as well as the quantity of thermal energy dissipated from the heat source at this time to the power demand time-sequence data collecting unit 11; and controlling the stored heat utilizing operation unit 16 during the control time of the air-conditioning periods so as to supply the stored thermal energy of the heat accumulator 15 directly to the cold/hot air discharger 17A via the cooling/heating energy path; and
(3) controlling the stored heat utilizing operation unit 16 so as to perform operations utilizing a surplus of stored thermal energy during the time period after the control time period of the air-conditioning periods set by the demand control time setting unit 23, when the stored heat utilization determination unit 26 has notified the operation control unit 18A of a surplus of stored thermal energy occurred after the dissipation of the thermal energy from the heat accumulator 15.

With reference to Figs. 10 and 13 through 19, the operation of the heat storage air conditioner of the third embodiment will be described on the basis of Figs. 11 and 12. When the heat storage air conditioner starts to operate, the power demand time-sequence data collecting unit 11 collects power demand time-sequence data in the time period during which a living space is air-conditioned (step 301). The stored data amount determination unit 31 determines the amount of data stored by the power demand time-sequence data collecting unit 11 (step 302). The stored data amount determination unit 31 constantly monitors whether or not the amount of data stored by the power demand time-sequence data collecting unit 11 corresponds to a period of time more than 60 days (step 303). If the stored data amount determination unit 31 decides that the amount of stored data corresponds to a period of time less than 60 days, the heat storage air conditioner will be judged as being in a start-up condition or a recovery condition after a power failure. As a result, the pseudo data 32A are supplied to the power demand time-sequence data collecting unit 11, and the power demand time-sequence data collecting unit 11 takes the thus-received pseudo data 32A as the collected data (step 304). The power demand curve estimating unit 12 analyzes the pseudo data 32A using Chaos Analysis (step 305).

If the amount of power demand time-sequence data collected by the power demand time-sequence data collecting unit 11 is as being for a period of time more than 60 days in step 303, the power demand curve estimating unit 12 analyzes the thus-collected power demand time-sequence data using Chaos Analysis (step 306).

In this way, the power demand curve estimating unit 12 analyzes the power demand time-sequence data or the pseudo data 32A using Chaos Analysis, whereby a power demand curve during the air-conditioning periods for the next day is estimated (step 307). The demand control time setting unit 23 previously sets the control time period during which thermal energy load is covered by the thermal energy stored in the heat accumulator 15, to a specific time period on the basis of the power demand curve estimated by the power demand curve estimating unit 12 (step 308). The operation control unit 18A determines the operation pattern (see Fig. 15) of the air-conditioning periods on the basis of the control time period and the estimated power demand curve (step 309). Simultaneously, the thermal energy load demand estimating unit 13A estimates the thermal energy load required during the cooling or heating periods on the basis of the control time period and the estimated power demand curve (step 310). The control time period that has been previously set to a specific time period by the demand control time setting unit 23 is made so as to be capable of being fixed or changed.

The operation control unit 18A controls the operation unit 14A of the heat source so as to cause the heat source to perform heat storage operations during the night in order to store the quantity of thermal energy, which is equivalent to the thermal energy load demand estimated by the thermal energy load demand estimating unit 13A, in the heat accumulator 15 through the cooling/heating energy path (step 311). Then, the water previously stored in the heat accumulator 15 changes to ice using cooling energy or to hot water using heating energy with lapse of time, whereby the resultant ice or hot water is stored in the heat accumulator 15 (step 312).

During the air-conditioning periods on the next day, the operation unit 14A of the heat source is initially controlled in accordance with pattern B1 (see Fig. 15) of the operation patterns determined by the operation control unit 18A so as to cause the heat source to perform operations (step 313). The cooling/heating energy of by the heat source is directly supplied to the cold/hot air discharger 17A through the cooling/heating energy path (step 314). The power demand time-sequence data of the heat source are supplied to the power demand time-sequence data collecting unit 11. Consequently, the cooling/heating energy received from the heat source is dissipated from the cold/hot air discharger 17A (step 315), thereby making it possible to cool or heat the living space. The direct supply of cooling/heating energy to the cold/hot air discharger 17A from the heat source is carried out immediately before the control time period within the air-conditioning period, as shown in Fig. 15. The supply of cooling/heating energy is temporarily suspended when the time control period commences.

When the control time period commences, the operation control unit 18A controls the stored heat utilizing operation unit 16 according to the pattern A of the operation patterns (see Fig. 15) so as to carry out dissipating operations (step 316). The cooling/heating energy of the heat accumulator 15 is supplied to the cold/hot air discharger 17A via the cooling/heating path (step 317). As a result, the cooling/heating energy received from the heat accumulator 15 is dissipated from the cold/hot air discharger 17A (step 318), thereby making it possible to cool or heat the living space. The cooling/heating energy detection unit 19B detects, in time sequence, the quantity of cooling energy of ice or heating energy of hot water supplied to the cold/hot air discharger 17A, from the residual thermal energy (cooling or heating energy) of the current heat accumulator 15 detected by the water level sensor 24 and the temperature 25 and the thermal energy load demand estimated on the previous day by the thermal energy load demand estimating unit 13A (step 319). The data on the cooling/heating energy detected in time sequence are input to the heat-to-electric-power converter 22. The data on the cooling/heating energy are converted into the data on the quantity of electric power by the heat-to-electric-power converter 22 (step 320). The time-sequence data on the quantity of electric power converted by the heat-to-electric-power converter 22 are supplied to the power demand time-sequence time-sequence data collecting unit 11. The thus-output data are collected again as power demand time-sequence data in the same manner as previously described in step 301.

When the control time period terminates, the control operation unit 18A stops the dissipating operations of the stored heat utilizing operation unit 16. The control operation unit 18A again controls the operation unit 14A of the heat source according to pattern B2 (see Fig. 15) of the operation patterns so as to cause the heat source to perform operations. The cooling/heating energy of the heat source is directly supplied to the cold/hot air discharger 17A through the cooling/heating energy path. The time-sequence data on the quantity of electric power dissipated from the heat source at this time are supplied to the power demand time-sequence data collecting unit 11. Consequently, the cooling/heating energy received again from the heat source is dissipated from the cold/hot air discharger 17A, thereby making it possible to cool or heat the living space. The re-supply of cooling/heating energy to the cold/hot air discharger 17A from the thermal-air discharger is carried out until the air-conditioning periods shown in Fig. 15 complete. The supply of cooling/heating energy is terminated when the time control period completes.

A resident of the living space often sets the temperature of a room to a lower level at the time of air-conditioning operations. In this case, the thermal energy load actually used in air-conditioning operations becomes smaller than the thermal energy load demand previously estimated by the thermal energy load demand estimating unit 13A. As a result, there arises a surplus of the stored thermal energy after the dissipation of the thermal energy of the heat accumulator 15. For this reason, the stored heat utilization determination unit 26 determines the state of utilization of the stored thermal energy during the control time period of the air-conditioning periods, from the quantity of cooling/heating energy detected by the cooling/heating energy quantity detection unit 19B and the thermal energy load demand estimated by the thermal energy load estimating unit 13A (step 321). If there is a surplus of stored thermal energy after the dissipation of the stored thermal energy of the heat accumulator 15 (step 322), the operation control unit 18A is notified of the surplus of stored thermal energy. Upon notification of the surplus of stored thermal energy of the heat accumulator 15 by the stored heat utilization determination unit 26, the operation control unit 18A sets pattern Al regarding a dissipating operation which utilizes the surplus of stored thermal energy, in the remaining time period after the control time period of the air-conditioning periods set by the demand control time setting unit 23, as shown in Fig. 19. The operation control unit 18A controls the stored heat utilization determination unit 16 so as to perform dissipating operations based on the pattern Al together with the air-conditioning operation (pattern B2) of the heat source (step 323). The surplus of stored thermal energy of the heat accumulator 15 is supplied to the cold/hot air discharger 17A via the cooling/heating energy path (step 324). The surplus of stored cooling/heating energy received from the heat accumulator 15 is dissipated from the cold/hot air discharger 17A (step 325). The thus-dissipated cooling/heating energy is utilized in cooling or heating the living space. It goes without saying that the load of pattern B2 placed on the heat source during the air-conditioning periods is mitigated as a result of the dissipating operation that is carried out together with the air-conditioning operation with use of the surplus of stored thermal energy (pattern A1).

If it has been determined in step 322 that there is not any surplus of stored thermal energy after the dissipation of thermal energy from the heat accumulator 15, return to step 302 takes place. The stored data amount determination unit 31 again determines the amount of power demand time-sequence data collected by the power demand time-sequence data collecting unit 11.

The surplus of stored thermal energy received from the heat accumulator 15 is dissipated from the cold/hot air discharger 17A in step 325, return to step 319 takes place. The cooling/heating energy quantity detection unit 19B detects, in time sequence, the quantity of cooling energy of ice or heating energy of hot water that corresponds to the surplus of stored thermal energy supplied to the cold/hot air discharger 17A. The quantity of cooling/heating energy that corresponds to the surplus of stored thermal energy and has been detected in time sequence is converted into the data on the quantity of electric power in step 320. The thus-converted data are supplied to the power demand time-sequence data collecting unit 11 and are collected again as the power demand time-sequence data. The same processing as has been previously described is repeated hereinbelow.

In the repetitive heat quantity pattern shown in Fig. 18, heat storage quantity pattern "a" corresponds to heat dissipation quantity pattern "b" during an air-conditioning period on the next day. Further, heat storage quantity pattern "c" corresponds to heat dissipation quantity pattern "d" during an air-conditioning period on the next day. By virtue of these heat quantity patterns, the stored thermal energy can be prevented from running short or becoming excessive during the air-conditioning periods. Even if the stored thermal energy runs short or becomes excessive, the shortage or surplus of the thermal energy can be reduced. Furthermore, if there arises a surplus of stored thermal energy, that surplus of stored thermal energy can be effectively utilized at the time of air-conditioning operations without natural diffusion of the surplus of stored thermal energy to the outside. For these reasons, it is possible to use an appropriate quantity of electric power in producing thermal energy to be stored during the night as well as sufficiently maintaining the amenity of the living space. Further, the operations of the heat source are completely stopped during the control time period within the cooling or heating periods during which thermal energy load is covered by only the quantity of thermal energy stored in the heat accumulator 15. Consequently, the running costs of the heat source are reduced, which in turn makes it possible to reduce electricity costs.

Also in the heat storage air-conditioner of the present embodiment, the stored data amount determination unit 31 constantly monitors the amount of data stored by the power demand time-sequence data collecting unit 11. If the stored data amount determination unit 31 decides that the amount of stored data corresponds to a period of time less than 60 days, the pseudo data 32A consisting of very-analogous theoretical time-sequence data (e.g., 60 days' worth of data) are supplied to the power demand time-sequence data collecting unit 11. A estimate for the subsequent power demand is controlled using the pseudo data 32A as the collected data. Therefore, the estimate-based control operations can be started without any problems even in the case where the heat storage air conditioner starts up or recovers to its original state after a power failure.

The above embodiment has been described on the basis of an example of dissipating operation that utilizes the surplus of stored thermal energy, that is, the pattern Al (see Fig. 19) that utilizes a surplus of stored thermal energy during the remaining time period after the control time period of the air-conditioning periods while averaging it. However, the present invention is not limited to this embodiment. For example, the time period, during which dissipating operations are carried out using a surplus of stored thermal energy, is set to a specific time period within the remaining time period after the control time period of the air-conditioning operations. It is also possible to dissipate all of the surplus of stored thermal energy at one time during that specific time period. If the dissipating operation, in which all of the surplus of stored thermal energy is dissipated at one time, is employed, it goes without saying that the operations of the heat source are completely suspended during the time period of the dissipating operation that uses the surplus of stored thermal energy.

The third embodiment has been described using the stored data amount determination unit 31 having the following arrangement as an example. Specifically, the stored data amount determination unit 31 is arranged so as not to update very-analogous theoretical power demand time-sequence data (60 days' worth of data), i.e., the data for the system capable of carrying out the operations of the heat source together with the operations that use the stored thermal energy, until the amount of data stored by the power demand time-sequence data collecting unit 11 becomes so as to correspond to a period of time more than 60 days. That power demand time-sequence data are directly supplied to the power demand time-sequence data collecting unit 11. The stored data amount determination unit may be arranged so as to take practical data as the most recent data among the pseudo data every time the practical data are obtained as a result of the air-conditioning operations. Then, the pseudo data may be updated by deleting the oldest data corresponding to the quantity of most recent data. In this case, the contents of the pseudo data can be replaced with practical data with lapse of time. Therefore, it is possible to more smoothly shift the estimate-based control operations based on the pseudo data to the estimate-based control operations based on the practical data. The same also applies to the fourth, fifth, and eighth embodiments that will be described later.

It is also possible for the stored data amount determination unit to suspend the output of the pseudo data to the power demand time-sequence data collecting unit immediately after the amount of data practically obtained as a result of the air-conditioning operations has reached the amount (e.g., data for a period of one day) that permits estimate-based control operations. In this case, the estimate-based control operations based on the practical data are started when the amount of practical data is small. Only the contents of the data that are sufficient to make the heat storage air conditioner active are required as the pseudo data, which in turn makes it easy to prepare theoretical pseudo data. The same also applies to the fourth, fifth, and eighth embodiments that will be described later.

### FOURTH EMBODIMENT

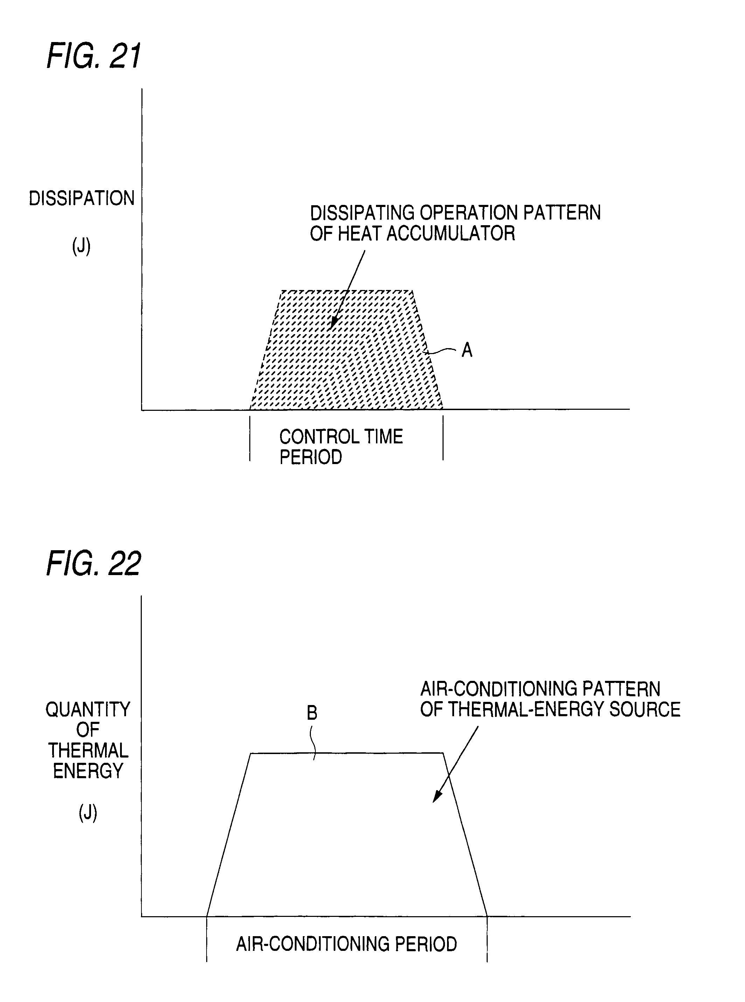

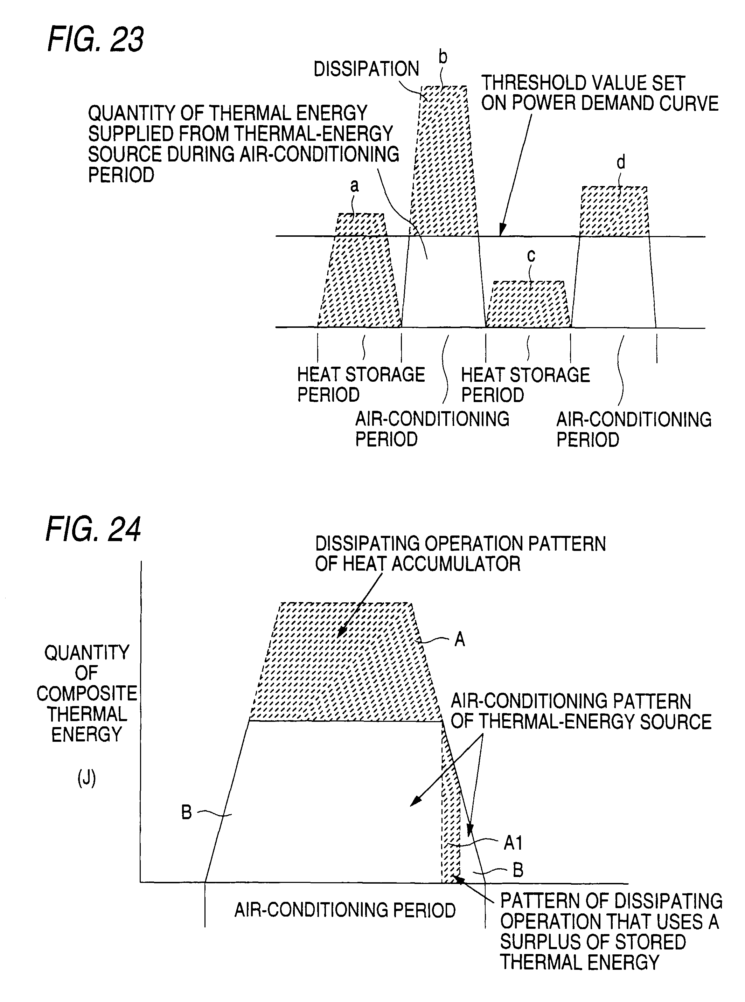

Fig. 20 is a diagram illustrating an example of composite heat quantity pattern that is used in a heat storage air conditioner according to the present invention and includes the quantity of thermal energy defined by dissipating operation pattern A of the heat accumulator and the quantity of thermal energy defined by the air-conditioning operation pattern B of the heat source. Fig. 21 is a diagram showing the dissipating operation pattern A of the heat accumulator that corresponds to a hatched portion of the composite heat quantity pattern shown in Fig. 20. Fig. 22 is a diagram showing the air-conditioning operation pattern B of the heat source that corresponds to an outlined portion of the composite heat quantity pattern shown in Fig. 20. Fig. 23 is a diagram illustrating an example of repetitive heat quantity pattern used in the heat storage air conditioner of the fourth embodiment. Fig. 24 is a diagram illustrating an example of composite heat quantity pattern including the pattern A1 that uses a surplus of thermal energy. The heat storage air conditioner of the fourth embodiment has basically the same configuration as that of the previously described third embodiment shown in Fig. 10. Therefore, Fig. 10 will be referred to during the course of the description of the present embodiment.

The heat storage air conditioner of the fourth embodiment is different from that of the previously described third embodiment in the following points: Specifically, the demand control time setting unit 23 sets the control time period during which thermal energy load is covered by the thermal energy of the heat accumulator 15 on the basis of the power demand curve estimated by the power demand curve estimating unit 12 shown in Fig. 10. This demand control time setting unit 23 is arranged so as to set a threshold value on the power demand curve as well as setting the control time period in the time period during which the power demand curve is in excess of the threshold value. Furthermore, if there is a surplus of stored thermal energy, the operation control unit 18A sets the pattern A1 regarding the dissipating operations that uses a surplus of stored thermal energy, in a specific time period within the remaining time period after the control time period of the air-condition periods, as shown in Fig. 24. All of the surplus of stored thermal energy is dissipated at one time during that specific time period. The operations of the heat source are completely suspended during the time period of the dissipating operation that uses the surplus of stored thermal energy. The control time period is arranged so as to be capable of being fixed or changed when the demand control time setting unit 23 sets the threshold value on the power demand curve.

By unit of the demand control setting unit 23 that sets the above-described control time period, the repetitive heat quantity pattern as shown in Fig. 23 is obtained. In the repetitive heat quantity pattern shown in Fig. 23, heat storage quantity pattern "a" corresponds to heat dissipation quantity pattern "b" obtained during the control time period during which the power demand curve exceeds a threshold value in the air-conditioning period on the next day. Further, heat storage quantity pattern "c" corresponds to heat dissipation quantity pattern "d" obtained during the control time period during which the power demand curve exceeds a threshold value in the air-conditioning period on the next day. By virtue of these heat quantity patterns, the quantity of electric power that the heat source dissipates to cover the cooling/heating period within the extent in which the power demand does not exceed the threshold value, can be significantly reduced. Further, the contract power demand required during the cooling or heating periods can be reduced, which makes it possible to reduce electricity costs to a much greater extent. Furthermore, the stored thermal energy can be prevented from running short or becoming excessive during the control time period of the air-conditioning periods. For example, even if the stored thermal energy runs short or becomes excessive, the shortage or surplus of the thermal energy can be reduced. Furthermore, if there arises a surplus of stored thermal energy, that surplus of stored thermal energy can be effectively utilized at the time of air-conditioning operations without natural diffusion of the surplus of stored thermal energy to the outside. For these reasons, it is possible to use an appropriate quantity of electric power in producing thermal energy to be stored during the night as well as sufficiently maintaining the amenity of the living space.

Also in the heat storage air-conditioner of the fourth embodiment, the stored data amount determination unit 31 constantly monitors the amount of data stored by the power demand time-sequence data collecting unit 11. If the stored data amount determination unit 31 decides that the amount of stored data corresponds to a period of time less than 60 days, the pseudo data 32A consisting of very-analogous theoretical time-sequence data (e.g., 60 days' worth of data) are supplied to the power demand time-sequence data collecting unit 11. A estimate for the subsequent power demand is controlled using the pseudo data 32A as the collected data. Therefore, the estimate-based control operations can be started without any problems even in the case where the heat storage air conditioner starts up or recovers to its original state after a power failure.

The dissipating operation that uses a surplus of stored thermal energy has been described in the above embodiment. Specifically, the pattern A1 (see Fig. 24) is used as an example of dissipating operation, wherein a surplus of stored thermal energy is dissipated at one time in a specific time of the remaining time period after the time period (i.e., the control time period) during which the power demand curve is in excess of the threshold value in the air-conditioning period. However, the surplus of stored thermal energy may be utilized while being averaged, during the remaining time period after the control time period of the air-conditioning period, in the same manner as previously described in the third embodiment shown in Fig. 19.

### FIFTH EMBODIMENT

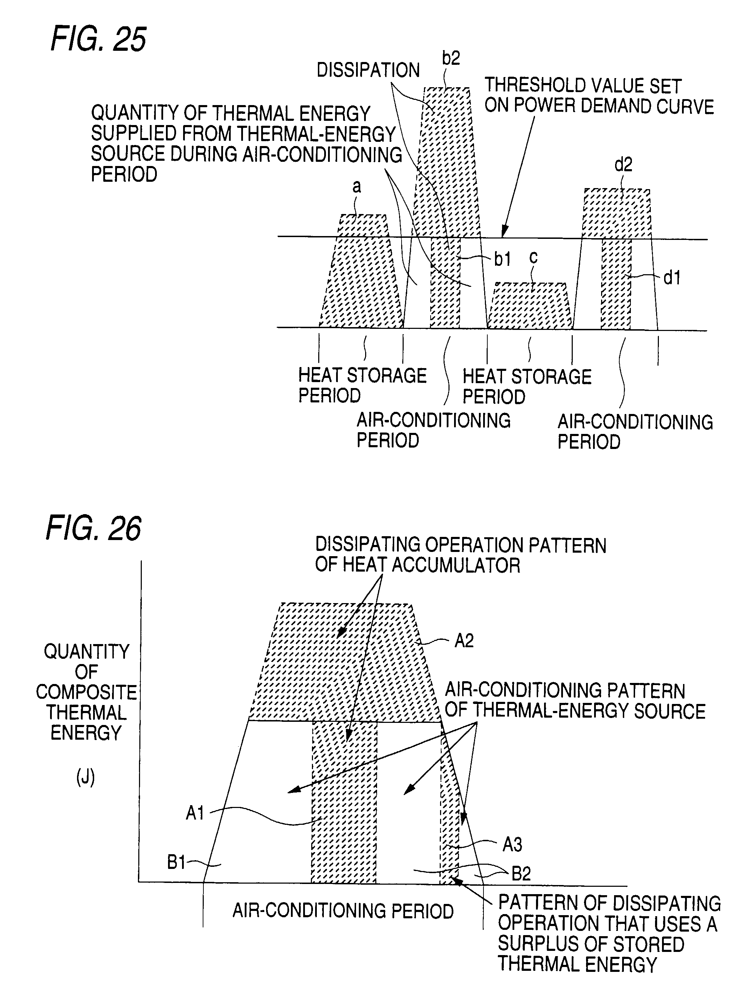

Fig. 25 is a diagram illustrating a repetitive heat quantity pattern used in a heat storage air conditioner according to the present invention. Fig. 26 is a diagram illustrating an example of composite heat quantity pattern including dissipating operation pattern A3 that uses a surplus of thermal energy. Also in the fifth embodiment, the heat storage air conditioner has basically the same configuration as that of the previously described third embodiment shown in Fig. 10. Therefore, Fig. 10 will be referred to during the course of the description of the present embodiment.

The heat storage air conditioner of the fifth embodiment is different from that of the previously described third and fourth embodiments in the following points: Specifically, the demand control time setting unit 23 sets the control time period during which thermal energy load is covered by the thermal energy of the heat accumulator 15 on the basis of the power demand curve estimated by the power demand curve estimating unit 12 shown in Fig. 10. This demand control time setting unit 23 is arranged so as to set a threshold value on the power demand curve as well as setting the control time period in the time period during which the power demand curve is in excess of the threshold value. Furthermore, if there is a surplus of stored thermal energy, the operation control unit 18A sets the pattern A3 regarding the dissipating operations that uses a surplus of stored thermal energy, in a specific time period within the remaining time period after the control period of the air-condition periods, i.e., a specific time period within the remaining time period after the time period during which the power demand curve is in excess the threshold value for the air-conditioning operations, as shown in Fig. 26. All of the surplus of stored thermal energy is dissipated at one time during that specific time period. The operations of the heat source are completely suspended during the time period of the dissipating operation that uses the surplus of stored thermal energy. The control time period is arranged so as to be capable of being fixed or changed when the demand control time setting unit 23 sets the threshold value on the power demand curve.

Hatched area A1 of the composite heat quantity pattern shown in Fig. 26 designates a dissipating operation pattern of the heat accumulator during the control time period that has previously been set to a specific time period. Hatched area A2 designates a dissipating operation pattern of the heat accumulator during the control time period set in the time period during which the power demand curve is in excess of the threshold value. Hatched area A3 designates a pattern regarding dissipating operations that use a surplus of stored thermal energy. Outlined areas B1 and B2 of the composite thermal energy quantity pattern respectively designate operation patterns at the time of the air-conditioning operations of the heat source.

By unit of the demand control setting unit 23 that sets the above-described control time period, the repetitive heat quantity pattern as shown in Fig. 25 is obtained. In the repetitive heat quantity pattern shown in Fig. 25, heat storage quantity pattern "a" corresponds to heat dissipation quantity patterns "b1" and "b2" obtained during the air-conditioning period on the next day. Further, heat storage quantity pattern "c" corresponds to heat dissipation quantity patterns "d1" and "d2" obtained during the air-conditioning period on the next day. By virtue of these heat quantity patterns, the quantity of electric power that the heat source dissipates to cover the control time period for air-conditioning operations except for the time period during which the power demand curve does not exceed the threshold value, can be significantly reduced. Further, the contract power demand required during the cooling or heating periods can be reduced, which makes it possible to reduce electricity costs to a much greater extent. Furthermore, the stored thermal energy can be prevented from running short or becoming excessive during the control time period of the air-conditioning periods. For example, even if the stored thermal energy runs short or becomes excessive, the shortage or surplus of the thermal energy can be reduced. Furthermore, if there arises a surplus of stored thermal energy, that surplus of stored thermal energy can be effectively utilized at the time of air-conditioning operations without natural diffusion of the surplus of stored thermal energy to the outside. For these reasons, it is possible to use an appropriate quantity of electric power in producing thermal energy to be stored during the night as well as sufficiently maintaining the amenity of the living space.

Also in the heat storage air-conditioner of the fifth embodiment, the stored data amount determination unit 31 constantly monitors the amount of data stored by the power demand time-sequence data collecting unit 11. If the stored data amount determination unit 31 decides that the amount of stored data corresponds to a period of time less than 60 days, the pseudo data 32A consisting of very-analogous theoretical time-sequence data (e.g., 60 days' worth of data) are supplied to the power demand time-sequence data collecting unit 11. A estimate for the subsequent power demand is controlled using the pseudo data 32A as the collected data. Therefore, the estimate-based control operations can be started without any problems even in the case where the heat storage air conditioner starts up or recovers to its original state after a power failure.

The dissipating operation that uses a surplus of stored thermal energy has been described in the above embodiment. Specifically, the pattern A3 is used as an example of dissipating operation, wherein a surplus of stored thermal energy is dissipated at one time during a specific period within the remaining time period after the time period during which the power demand curve is in excess of the threshold value for the air-conditioning operations. However, the surplus of stored thermal energy may be utilized while being averaged, during the remaining time period after the control time period during which the power demand curve is in excess of the threshold value for air-conditioning operations, in the same manner as previously described in the third embodiment shown in Fig. 19.

### SIXTH EMBODIMENT

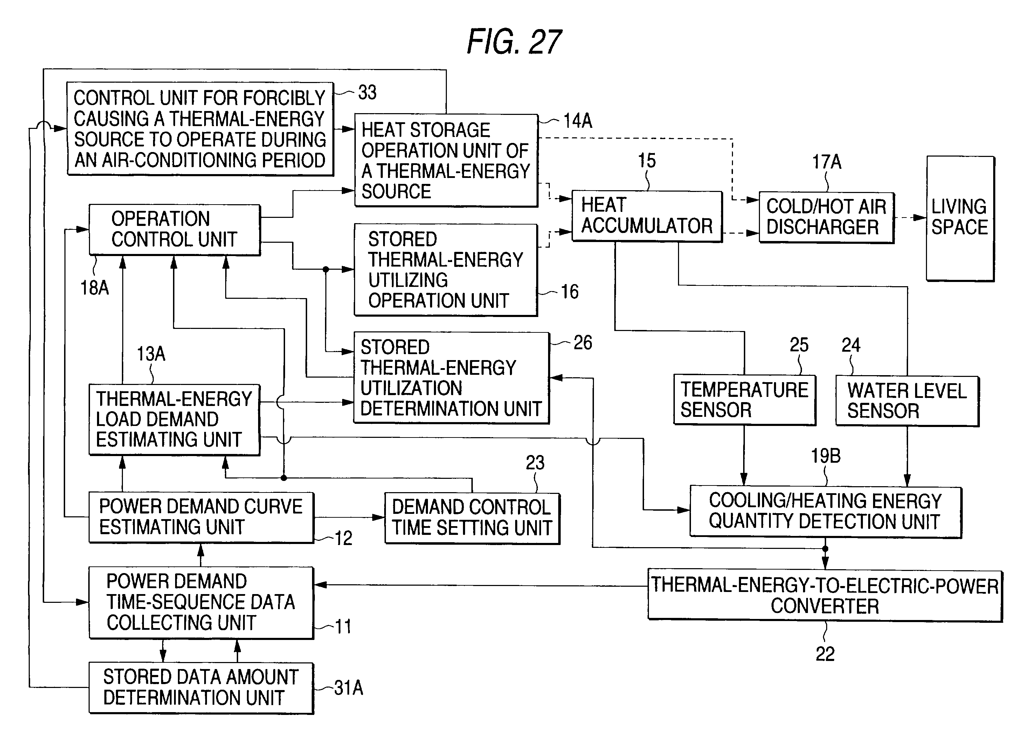

Fig. 27 is a block diagram of a heat storage air conditioner according to the present invention. In this drawing, the same elements as those of the previously-described third embodiment shown in Fig. 10 are assigned the same reference numerals. The heat storage air conditioner of the sixth embodiment has the function of being capable of setting an operation pattern to various forms by changing the control time period using the demand control time setting unit. This function is the same as that previously described in the third, fourth, and fifth embodiment, and therefore details of the setting of the operation pattern will be omitted here. The heat storage air conditioner of the present embodiment has the function of being capable of setting the dissipating operation pattern to various forms that utilize a surplus of stored thermal energy, by unit of the operation control unit. This function is also the same as that previously described in the third, fourth, and fifth embodiments. Hence, details of the setting of the dissipating operation pattern will be also omitted here.

In Fig. 27, reference numeral 11 designates a power demand time-sequence data collecting unit for collecting power demand time-sequence data. Reference numeral 31A designates stored data amount determination unit that determines the amount of data stored by the power demand time-sequence data collecting unit 11. If a predetermined amount of stored data (e.g., data for a period of one day) has not been achieved yet, the stored data amount determination unit instructs the power demand time-sequence data collecting unit 11 to suspend an output to a estimate-based control system, as well as sending a data shortage signal to the power demand time-sequence data collecting unit 11. Reference numeral 12 designates a power demand curve estimating unit for estimating a power demand curve that is obtained by subjecting the power demand time-sequence data received from the power demand time-sequence data collecting unit 11 to Chaos Analysis which is one example of a method of analyzing the power demand time-sequence data. Reference numeral 23 designates a demand control time setting unit for setting a control time period during which thermal energy load is covered by the stored thermal energy of the heat accumulator 15 on the basis of the power demand curve. The demand control time setting unit has the function of being capable of setting the operation pattern to various forms. Reference numeral 13A designates thermal energy load demand estimating unit that estimates thermal energy load demand of the control time period on the basis of the time control period set by the demand control time setting unit 23 and the power demand curve estimated by the power demand curve estimating unit 12. Reference numeral 14A designates operation unit of a heat source that supplies cooling/heating energy. Reference numeral 15 designates a heat accumulator that stores the cooling/heating energy received from the operation unit 14A of the heat source. Reference numeral 16 designates stored heat utilizing operation unit for utilizing the thermal energy stored in the heat accumulator 15; and 17A, a cold/hot air discharger for dissipating the thermal energy stored in the heat accumulator 15 and/or the thermal energy received from the operation unit 14A of the heat source.

Reference numeral 19B designates cooling/heating energy quantity detection unit that detects the quantity of cooling/heating energy dissipated from the heat accumulator 15 through the cold/hot air discharger 17A, from the thermal energy remaining in the heat accumulator 15. The quantity of cooling/heating energy is detected (or calculated) by comparing the thermal energy currently remaining in the heat accumulator 15 detected by the water level sensor 24 or the temperature sensor 25 with the thermal energy load demand estimated on the previous day by the thermal energy load demand estimating unit 13A.

Reference numeral 26 designates stored heat utilization determination unit that determines the state of utilization of the stored thermal energy during the control time period of the air-conditioning periods, from the quantity of cooling/heating energy detected by the cooling/heating energy quantity detection unit 19B and the thermal energy load demand estimated by the thermal energy load estimating unit 13A. The stored heat utilization determination unit 26 sends a result of the determination to the operation control unit 18A. Reference numeral 22 designates a heat-to-electric-power converter that converts the quantity of cooling or heating energy detected by the cooling/heating energy quantity calculating unit 19B into the quantity of electric power, as well as sending the thus-converted electric power to the power demand time-sequence data collecting unit 11.

Reference numeral 18A designates operation control unit for controlling the operation unit 14A and the stored heat utilizing operation unit 16. This operation control unit 18A also has the function of being capable of setting the dissipating operation pattern to various forms that utilize a surplus of stored thermal energy. In short, the operation control unit 18A has the functions (1), (2), and (3) previously described in the third embodiment.

Reference numeral 33 designates control unit for forcibly causing a heat source to operate at the time of air-conditioning operations. Upon receipt of a data shortage signal from the stored data amount determination unit 31A, the control unit 33 controls the operation unit 14A of the heat source during the air-conditioning period so as to directly supply cooling/heating energy to the cold/hot air discharger 17A. Further, the control unit 33 sends the quantity of electric power dissipated from the thermal energy source at this time to the power demand time-sequence data collecting unit 11. The present embodiment is described with reference to an example wherein the time period, during which the control unit 33 controls the operation unit 14 of the heat source so as to directly supply cooling/heating energy to the cold/hot air discharger 17A, is fixed to a period of time between eight o'clock and seventeen o'clock. In addition, the control unit 33 may be arranged so as to control the operation unit 14A of the heat source on the basis of a drive signal of a blower (not shown) of the cold/hot air discharger 17A.

In the heat storage air-conditioner of the sixth embodiment, the stored data amount determination unit 31A constantly monitors the amount of data stored by the power demand time-sequence data collecting unit 11. If the amount of stored data corresponds to a period of time less than one day, the control unit 33 instructs the suspension of an output to the estimate-based control system, as well as controlling the operation unit 14A of the heat source so as to directly supply cooling/heating energy to the cold/hot air discharger 17A. Therefore, the heat storage air conditioner can cope with cases where it starts up or where the previous data required to carry out estimate-based control operations are lost as a result of a power failure. In short, if the heat storage air conditioner starts up, or if the previous data are lost, the heat storage air conditioner can operate by switching to an ordinary operation (i.e., an operation which does not carry out control operations based on a estimate).

Time-sequence data on the quantity of electric power which the thermal energy source for directly supplying cooling/heating energy to the cold/hot air discharger 17A dissipates when being forcibly actuated, are sent to and collected by the power demand time-sequence data collecting unit 11. Therefore, it is possible to store the time-sequence data on the quantity of electric power during a period of ordinary operation (i.e., the operation that does not carry out control operations based on a estimate), as well as smoothly shifting the operation to estimate-based control operations when a predetermined amount of stored power demand time-sequence data (e.g., data for a period of one day) has been achieved.

### SEVENTH EMBODIMENT

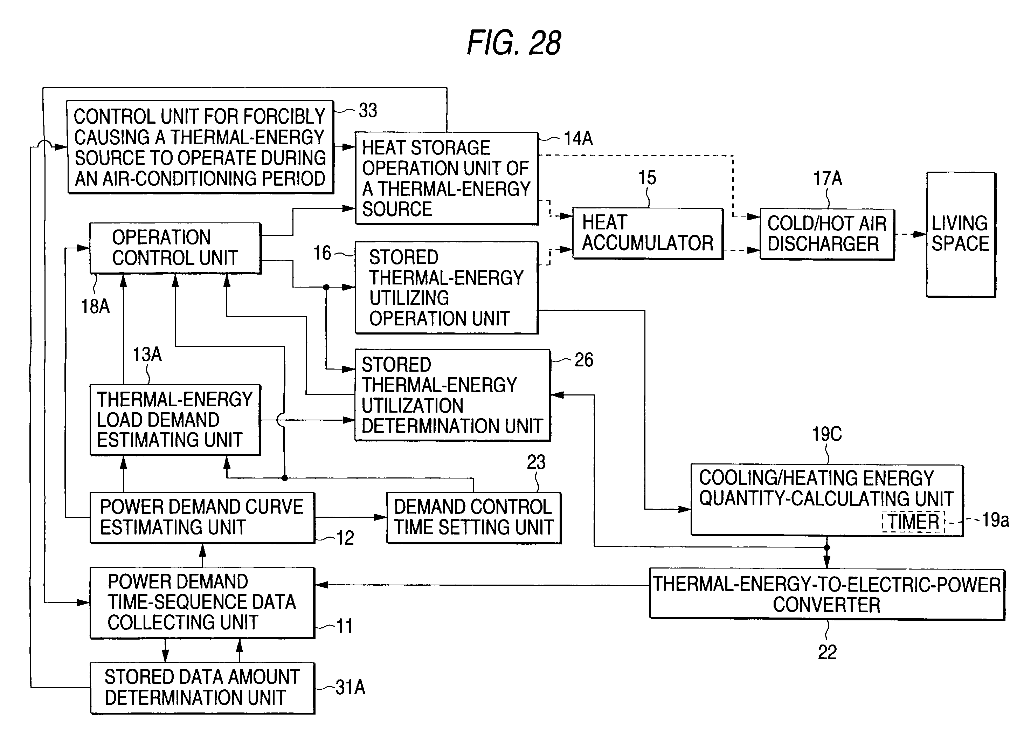

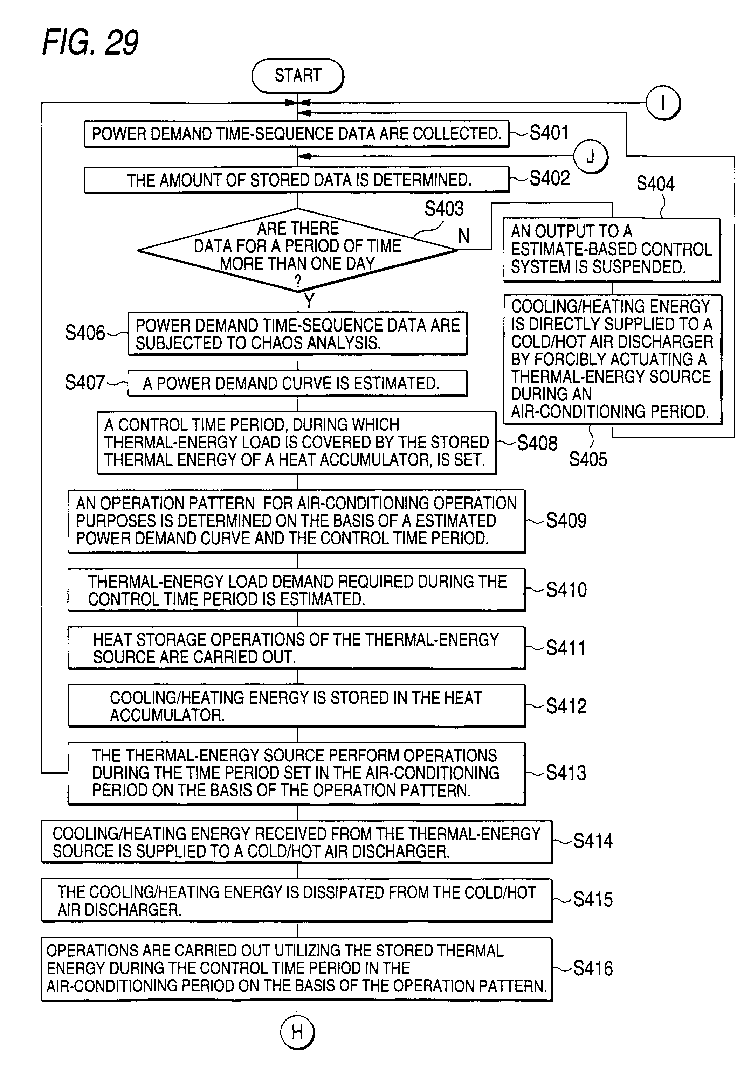

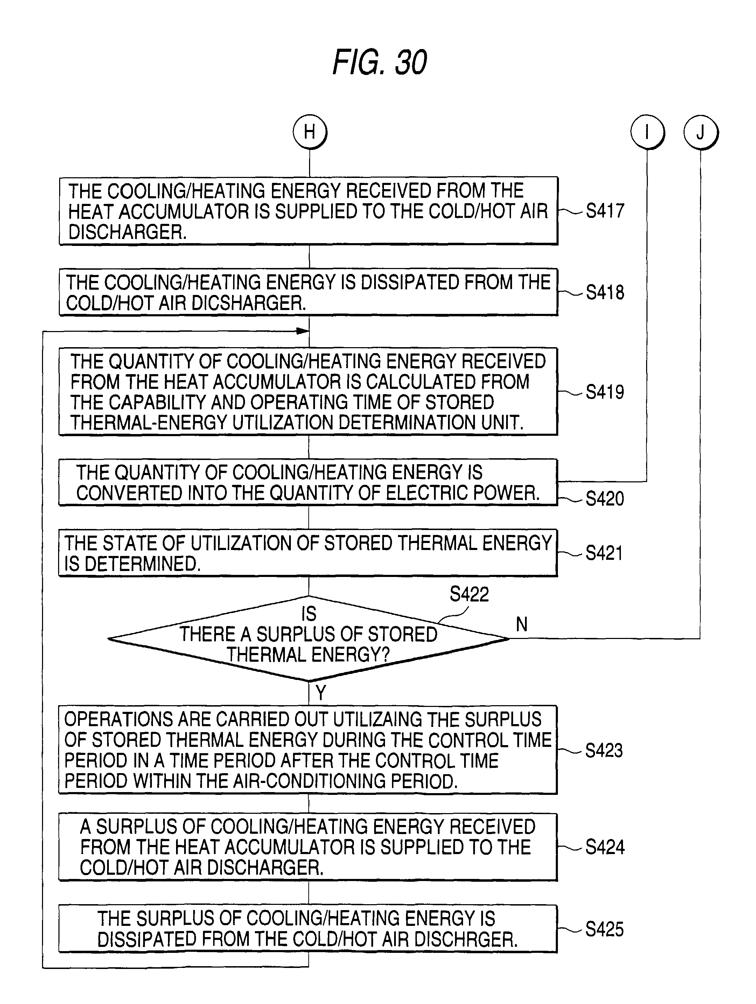

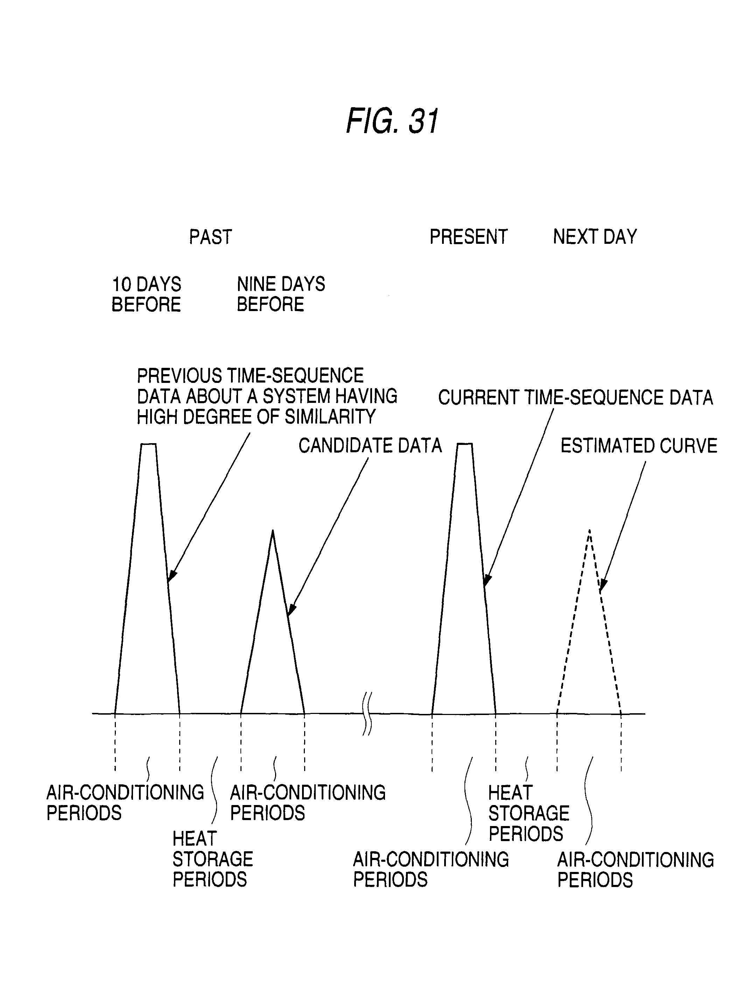

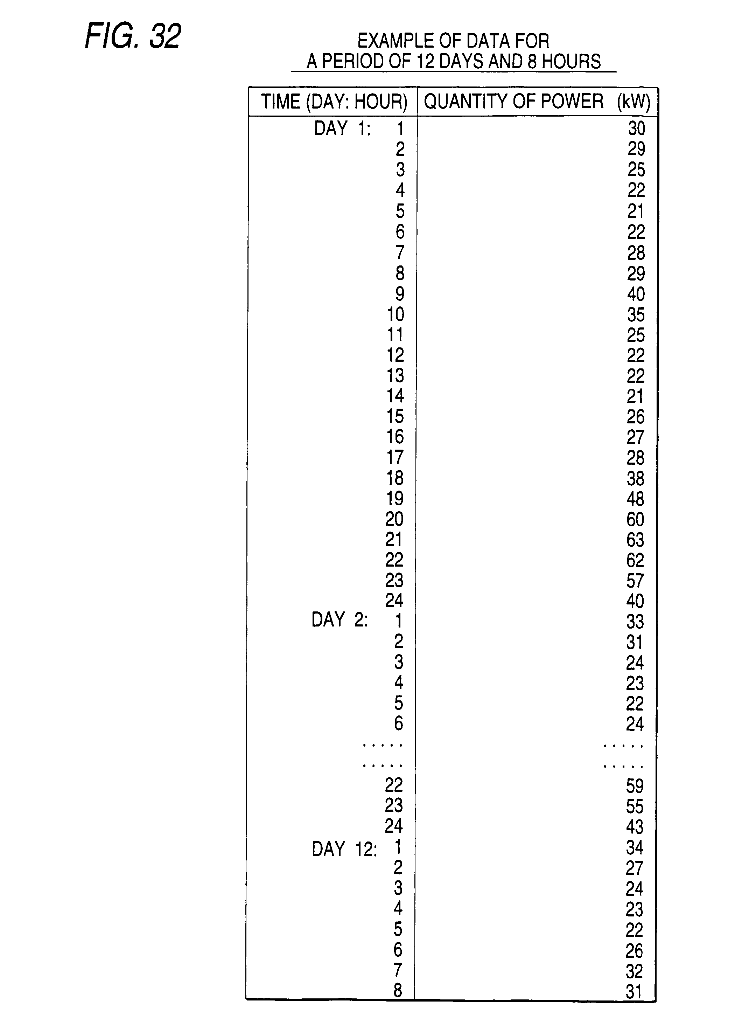

Fig. 28 is a block diagram of a heat storage air conditioner according to the present invention. Figs. 29 and 30 are flowcharts for use in describing processing operations of the heat storage air conditioner. Fig. 31 is a diagram for use in describing the method that estimates a power demand curve for the next day with use of power demand time-sequence data obtained when data are stored so as to correspond to a period of twelve days and eight hours. Fig. 32 is a table that shows an example of numerical values regarding the quantity of power electricity represented by the time-sequence data. In Fig. 28, the same elements as those of the previously-described sixth embodiment shown in Fig. 27 are assigned the same reference numerals. Also in the seventh embodiment, the heat storage air conditioner has the function of being capable of setting the operation pattern to various forms by changing the control time period using the demand control time setting unit. This function is the same as that previously described in the third, fourth, and fifth embodiments. Consequently, the present embodiment will be described using only the previously-described operation pattern shown in Fig. 15 as an example. Furthermore, the heat storage air conditioner has the function of being capable of setting the dissipating operation pattern to various forms that utilize a surplus of stored thermal energy by unit of the operation control unit. This function is the same as that previously described in the third, fourth, and fifth embodiments. Consequently, the present embodiment will be described using only the previously-described dissipating operation pattern that utilizes a surplus of stored thermal energy and is shown in Fig. 19, as an example.

In Fig. 28, reference numeral 11 designates a power demand time-sequence data collecting unit for collecting power demand time-sequence data. Reference numeral 31A designates stored data amount determination unit that determines the amount of data stored by the power demand time-sequence data collecting unit 11. If a predetermined amount of stored data (e.g., data for a period of one day) has not been achieved yet, the stored data amount determination unit instructs the power demand time-sequence data collecting unit 11 to suspend an output to a estimate-based control system, as well as sending a data shortage signal to the power demand time-sequence data collecting unit 11. Reference numeral 12 designates a power demand curve estimating unit for estimating a power demand curve that is obtained by subjecting the power demand time-sequence data received from the power demand time-sequence data collecting unit 11 to Chaos Analysis which is one example of a method of analyzing the power demand time-sequence data. Reference numeral 23 designates a demand control time setting unit for setting a control time period during which thermal energy load is covered by the stored thermal energy of the heat accumulator 15 on the basis of the power demand curve. The demand control time setting unit has the function of being capable of setting the operation pattern to various forms. Reference numeral 13A designates thermal energy load demand estimating unit that estimates thermal energy load demand of the control time period on the basis of the time control period set by the demand control time setting unit 23 and the power demand curve estimated by the power demand curve estimating unit 12. Reference numeral 14A designates operation unit of a heat source that supplies cooling/heating energy. Reference numeral 15 designates a heat accumulator that stores the cooling/heating energy received from the operation unit 14A of the heat source. Reference numeral 16 designates stored heat utilizing operation unit for utilizing the thermal energy stored in the heat accumulator 15; and 17A, a cold/hot air discharger for dissipating the thermal energy stored in the heat accumulator 15 and/or the thermal energy received from the operation unit 14A of the heat source.

Reference numeral 19C designates cooling/heating energy quantity calculating unit that calculates the quantity of cooling/heating energy dissipated from the heat accumulator 15 through the cold/hot air discharger 17A, from the capability and operating time of the stored heat utilizing operation unit 16.

Reference numeral 26 designates stored heat utilization determination unit that determines the state of utilization of the stored thermal energy during the control time period of the air-conditioning periods, from the quantity of cooling/heating energy calculated by the cooling/heating energy quantity calculating unit 19C and the thermal energy load demand estimated by the thermal energy load estimating unit 13A. The stored heat utilization determination unit 26 sends a result of the determination to the operation control unit 18A. Reference numeral 22 designates a heat-to-electric-power converter that converts the quantity of cooling or heating energy calculated by the cooling/heating energy quantity calculating unit 19C into the quantity of electric power, as well as sending the thus-converted electric power to the power demand time-sequence data collecting unit 11.

Reference numeral 18A designates operation control unit for controlling the operation unit 14A and the stored heat utilizing operation unit 16. This operation control unit 18A also has the function of being capable of setting the dissipating operation pattern to various forms that utilize a surplus of stored thermal energy. In short, the operation control unit 18A has the functions (1), (2), and (3) previously described in the third embodiment.

Reference numeral 33 designates control unit for forcibly causing a heat source to operate at the time of air-conditioning operations. Upon receipt of a data shortage signal from the stored data amount determination unit 31A, the control unit 33 controls the operation unit 14A of the heat source during the air-conditioning period (e.g., during a period of time between 8 o'clock and 17 o'clock) so as to directly supply cooling/heating energy to the cold/hot air discharger 17A. Further, the control unit 33 sends the quantity of electric power dissipated from the thermal energy source at this time to the power demand time-sequence data collecting unit 11. The present embodiment is also described with reference to an example wherein the time period, during which the control unit 33 controls the operation unit 14 of the heat source so as to directly supply cooling/heating energy to the cold/hot air discharger 17A, is fixed to a period of time between eight o'clock and seventeen o'clock. In addition, the control unit 33 may be arranged so as to control the operation unit 14A of the heat source on the basis of a drive signal of a blower (not shown) of the cold/hot air discharger 17A.

With reference to Figs. 28, 31 32, 15, and 19, the operation of the heat storage air conditioner of the seventh embodiment will be described on the basis of Figs. 29 and 30. When the heat storage air conditioner starts to operate, the power demand time-sequence data collecting unit 11 collects power demand time-sequence data in the time period during which a living space is air-conditioned (step 401). The stored data amount determination unit 31A determines the amount of data stored by the power demand time-sequence data collecting unit 11 (step 402). The stored data amount determination unit 31A constantly monitors whether or not the amount of data stored by the power demand time-sequence data collecting unit 11 corresponds to a period of time more than one day (step 403). If the stored data amount determination unit 31A decides that the amount of stored data corresponds to a period of time less than one day, a data short signal is sent to the control unit 33. Further, the stored data amount determination unit 31A instructs the power demand time-sequence data collecting unit 11 to prevent and suspend an output to a estimate-based control system (step 404). Upon notification of the shortage of data by the stored data amount determination unit 31A, the control unit 33 controls the operation unit 14A of the heat source so as to directly supply cooling/heating energy to the cold/hot air discharger 17A during the air-conditioning period (step 405). Then, the quantity of electric power dissipated by the heat source at this time is sent to and collected by the power demand time-sequence data collecting unit 11.

If the amount of storage of power demand time-sequence data regarding the quantity of electric power required when the heat source, which directly supplies cooling/heating energy to the cold/hot air discharger 17A during the air-condition period, is forcibly actuated, amounts to a period of time more than one day, the amount of stored power demand time-sequence data is determined as to correspond to a period of time more than one day in step 403. As a result, the output to the estimate-based control system from the power demand time-sequence data collecting unit 11 commences, and the power demand curve estimating unit 12 analyzes a small amount of power demand time-sequence data thus collected using Chaos Analysis (step 406).

In this way, the power demand curve estimating unit 12 analyzes power demand time-sequence data using Chaos Analysis when the amount of collected data is small, whereby a power demand curve during the air-conditioning periods for the next day is estimated (step 407). Therefore, the accuracy of estimate for a power demand curve is improved as the amount of stored data increases, and the accuracy of estimate becomes stable when the data for a period of about 60 days are collected.

When the power demand curve estimating unit 12 estimates the power demand curve, the demand control time setting unit 23 previously sets the control time period during which thermal energy load is covered by the thermal energy stored in the heat accumulator 15, to a specific time period on the basis of the power demand curve estimated by the power demand curve estimating unit 12 (step 408). The operation control unit 18A determines the operation pattern (see Fig. 15) of the air-conditioning periods on the basis of the control time period and the estimated power demand curve (step 409). Simultaneously, the thermal energy load demand estimating unit 13A estimates thermal energy load on the basis of the control time period and the estimated power demand curve (step 410). The control time period that has been previously set to a specific time period by the demand control time setting unit 23 is made so as to be capable of being fixed or changed.

The operation control unit 18A controls the operation unit 14A of the heat source so as to cause the heat source to perform storage operations during the night in order to store the quantity of thermal energy, which is equivalent to the thermal energy load demand estimated by the thermal energy load demand estimating unit 13A, in the heat accumulator 15 through the cooling/heating energy path (step 411). Then, the water previously stored in the heat accumulator 15 changes to ice using cooling energy or to hot water using heating energy with lapse of time, whereby the resultant ice or hot water is stored in the heat accumulator 15 (step 412).

During the air-conditioning periods on the next day, the operation unit 14A of the heat source is initially controlled in accordance with pattern B1 (see Fig. 15) of the operation patterns determined by the operation control unit 18A so as to cause the heat source to perform operations (step 413). The cooling/heating energy of the heat source is directly supplied to the cold/hot air discharger 17A through the cooling/heating energy path (step 414). The time-sequence data on the quantity of electric power dissipated from the heat source at this time are supplied to the power demand time-sequence data collecting unit 11. Consequently, the cooling/heating energy received from the heat source is dissipated from the cold/hot air discharger 17A (step 415), thereby making it possible to cool or heat the living space. The direct supply of cooling/heating energy to the cold/hot air discharger 17A from the heat source is carried out immediately before the control time period within the air-conditioning period, as shown in Fig. 15. The supply of cooling/heating energy is temporarily suspended when the time control period commences.

When the control time period commences, the operation control unit 18A controls the stored heat utilizing operation unit 16 according to the pattern A of the operation patterns (see Fig. 15) so as to carry out dissipating operations (step 416). The cooling/heating energy of the heat accumulator 15 is supplied to the cold/hot air discharger 17A via the cooling/heating path (step 417). As a result, the cooling/heating energy received from the heat accumulator 15 is dissipated from the cold/hot air discharger 17A (step 418), thereby making it possible to cool or heat the living space. The cooling/heating energy calculating unit 19C calculates, in time sequence, the quantity of cooling energy of ice or heating energy of hot water supplied to the cold/hot air discharger 17A, from the capability and operating time of the stored heat utilization unit 16 (step 419). The data on the cooling/heating energy calculated in time sequence are input to the heat-to-electric-power converter 22. The data on the cooling/heating energy are converted into the data on the quantity of electric power by the heat-to-electric-power converter 22 (step 420). The time-sequence data on the quantity of electric power converted by the heat-to-electric-power converter 22 are supplied to the power demand time-sequence time-sequence data collecting unit 11. The thus-output data are collected again as power demand time-sequence data in the same manner as previously described in step 401.

When the control time period terminates, the control operation unit 18A stops the dissipating operations of the stored heat utilizing operation unit 16. The control operation unit 18A again controls the operation unit 14A of the heat source according to pattern B2 (see Fig. 15) of the operation patterns so as to cause the heat source to perform operations. The cooling/heating energy of the heat source is directly supplied to the cold/hot air discharger 17A through the cooling/heating energy path. The time-sequence data on the quantity of electric power dissipated from the heat source at this time are supplied to the power demand time-sequence data collecting unit 11. Consequently, the cooling/heating energy received again from the heat source is dissipated from the cold/hot air discharger 17A, thereby making it possible to cool or heat the living space. The re-supply of cooling/heating energy to the cold/hot air discharger 17A from the thermal-air discharger is carried out until the air-conditioning periods shown in Fig. 15 complete. The supply of cooling/heating energy is terminated when the time control period completes.

The stored heat utilization determination unit 26 determines the state of utilization of the stored thermal energy during the control time period of the air-conditioning periods, from the quantity of cooling/heating energy calculated by the cooling/heating energy quantity calculating unit 19C and the thermal energy load demand estimated by the thermal energy load estimating unit 13A (step 421). If there is a surplus of stored thermal energy after the dissipation of the stored thermal energy of the heat accumulator 15 (step 422), the operation control unit 18A is notified of the surplus of stored thermal energy. Upon notification of the surplus of stored thermal energy of the heat accumulator 15 by the stored heat utilization determination unit 26, the operation control unit 18A sets pattern Al (see Fig. 19) regarding a dissipating operation which utilizes the surplus of stored thermal energy, in the remaining time period after the control time period of the air-conditioning periods set by the demand control time setting unit 23. The operation control unit 18A controls the stored heat utilization determination unit 16 so as to perform dissipating operations based on the pattern Al together with the air-conditioning operation (pattern B2) of the heat source (step 423). The surplus of stored thermal energy of the heat accumulator 15 is supplied to the cold/hot air discharger 17A via the cooling/heating energy path (step 424). The surplus of stored cooling/heating energy received from the heat accumulator 15 is dissipated from the cold/hot air discharger 17A (step 425). The thus-dissipated cooling/heating energy is utilized in cooling or heating the living space.

If it has been determined in step 422 that there is not any surplus of stored thermal energy after the dissipation of thermal energy from the heat accumulator 15, return to step 402 takes place. The stored data amount determination unit 31 again determines the amount of power demand time-sequence data collected by the power demand time-sequence data collecting unit 11.

The surplus of stored thermal energy received from the heat accumulator 15 is dissipated from the cold/hot air discharger 17A in step 425, return to step 419 takes place. The cooling/heating energy quantity calculating unit 19C calculates, in time sequence, the quantity of cooling energy of ice or heating energy of hot water that corresponds to the surplus of stored thermal energy supplied to the cold/hot air discharger 17A. The quantity of cooling/heating energy that corresponds to the surplus of stored thermal energy and has been calculated in time sequence, is converted into the data on the quantity of electric power in step 420. The thus-converted data are supplied to the power demand time-sequence data collecting unit 11 and are collected again as the power demand time-sequence data. The same processing as has been previously described is repeated hereinbelow.

Also in the heat storage air-conditioner of the seventh embodiment, the stored data amount determination unit 31A constantly monitors the amount of data stored by the power demand time-sequence data collecting unit 11. If the amount of stored data corresponds to a period of time less than one day, the control unit 33 instructs the suspension of an output to the estimate-based control system, as well as controlling the operation unit 14A of the heat source so as to directly supply cooling/heating energy to the cold/hot air discharger 17A. Therefore, the heat storage air conditioner can operate by switching to an ordinary operation (i.e., an operation which does not carry out control operations based on a estimate) even in the cases where it starts up or where the previous data required to carry out estimate-based control operations are lost as a result of a power failure.

Time-sequence data on the quantity of electric power that the thermal energy source for directly supplying cooling/heating energy to the cold/hot air discharger 17A dissipates when being forcibly actuated, are sent to and collected by the power demand time-sequence data collecting unit 11. Therefore, it is possible to store the time-sequence data on the quantity of electric power during a period of ordinary operation (i.e., the operation that does not carry out control operations based on a estimate), as well as smoothly shifting the operation to estimate-based control operations when a predetermined amount of stored power demand time-sequence data (e.g., data for a period of one day) has been achieved.

The cooling/heating energy calculating unit 19C calculates the quantity of cooling energy of ice or heating energy of hot water supplied to the cold/hot air discharger 17A from the heat accumulator 15, from the capability and operating time of the stored heat utilization unit 16. Consequently, the need for a temperature sensor and a water level sensor can be eliminated, and the cost of the heat storage air conditioner can be reduced accordingly.

### EIGHTH EMBODIMENT

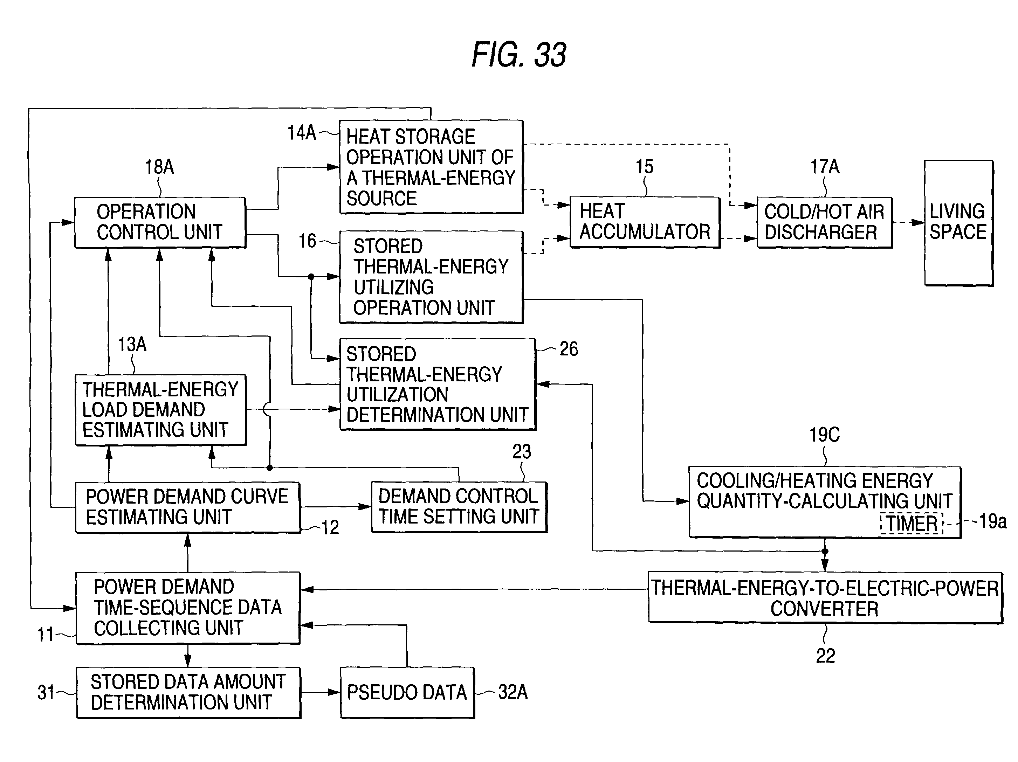

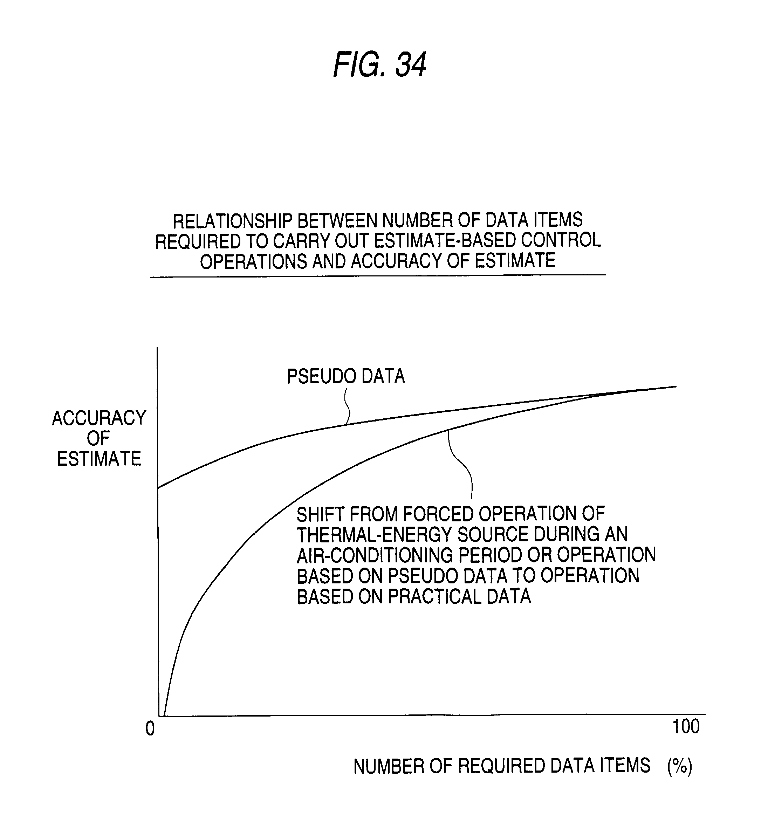

Fig. 33 is a block diagram of a heat storage air conditioner according to the present invention. Fig. 34 is a diagram wherein the accuracy of estimate obtained when pseudo data are used is compared with the accuracy of estimate obtained when an ordinary operation (i.e., an operation which does not carry out control operations based on a estimate) or an operation based on pseudo data shifts to a estimate-based control operation based on practical data. In Fig. 33, the same elements as those of the previously-described seventh embodiment shown in Fig. 28 are assigned the same reference numerals. Also in the eighth embodiment, the heat storage air conditioner has the function of being capable of setting the operation pattern to various forms by changing the control time period using the demand control time setting unit. This function is the same as that previously described in the third, fourth, and fifth embodiments. Consequently, details of the setting of the dissipating operation pattern will be omitted here. Furthermore, the heat storage air conditioner has the function of being capable of setting the dissipating operation pattern to various forms that utilize a surplus of stored thermal energy by unit of the operation control unit. This function is the same as that previously described in the third, fourth, and fifth embodiments. Consequently, details of the setting of the dissipating operation pattern will be also omitted here.

In Fig. 33, reference numeral 11 designates a power demand time-sequence data collecting unit for collecting power demand time-sequence data. Reference numeral 31 designates stored data amount determination unit that determines the amount of data stored by the power demand time-sequence data collecting unit 11. If a predetermined amount of stored data (e.g., 60 days' worth of data) has not been achieved yet, the stored data amount determination unit sends pseudo data 32A to the power demand time-sequence data collecting unit 11. In this embodiment, very-analogous theoretical time-sequence data (60 days' worth of data) shown in Figs. 13 and 14 are used as the pseudo data 32A. Reference numeral 12 designates a power demand curve estimating unit for estimating the power demand curve that is obtained by subjecting the power demand time-sequence data, that have been collected by the power demand time-sequence data collecting unit 11, or the pseudo data 32A to Chaos Analysis which is one example of a method of analyzing the power demand time-sequence data. Reference numeral 23 designates a demand control time setting unit for setting a control time period during which thermal energy load is covered by the stored thermal energy of the heat accumulator 15 on the basis of the power demand curve. The demand control time setting unit has the function of being capable of setting the operation pattern to various forms. Reference numeral 13A designates thermal energy load demand estimating unit that estimates thermal energy load demand of the control time period on the basis of the time control period set by the demand control time setting unit 23 and the power demand curve estimated by the power demand curve estimating unit 12. Reference numeral 14A designates operation unit of a heat source that supplies cooling/heating energy. Reference numeral 15 designates a heat accumulator that stores the cooling/heating energy received from the operation unit 14A of the heat source. Reference numeral 16 designates stored heat utilizing operation unit for utilizing the thermal energy stored in the heat accumulator 15; and 17A, a cold/hot air discharger for dissipating the thermal energy stored in the heat accumulator 15 and/or the thermal energy received from the operation unit 14A of the heat source.

Reference numeral 19C designates cooling/heating energy quantity calculating unit that calculates the quantity of cooling/heating energy dissipated from the heat accumulator 15 through the cold/hot air discharger 17A, from the capability and operating time of the stored heat utilizing operation unit 16.

Reference numeral 26 designates stored heat utilization determination unit that determines the state of utilization of the stored thermal energy during the control time period of the air-conditioning periods, from the quantity of cooling/heating energy calculated by the cooling/heating energy quantity calculating unit 19C and the thermal energy load demand estimated by the thermal energy load estimating unit 13A. The stored heat utilization determination unit 26 sends a result of the determination to the operation control unit 18A. Reference numeral 22 designates a heat-to-electric-power converter that converts the quantity of cooling or heating energy calculated by the cooling/heating energy quantity calculating unit 19C into the quantity of electric power, as well as sending the thus-converted electric power to the power demand time-sequence data collecting unit 11.

Reference numeral 18A designates operation control unit for controlling the operation unit 14A and the stored heat utilizing operation unit 16. This operation control unit 18A also has the function of being capable of setting the dissipating operation pattern to various forms that utilize a surplus of stored thermal energy. In short, the operation control unit 18A has the functions (1), (2), and (3) previously described in the third embodiment.

Also in the heat storage air-conditioner of the eight embodiment, the stored data amount determination unit 31 constantly monitors the amount of data stored by the power demand time-sequence data collecting unit 11. If the stored data does not correspond to data for a period of time more than 60 days, the stored data amount determination unit sends pseudo data 32A consisting of very-analogous theoretical time-sequence data (e.g., 60 days' worth of data) to the power demand time-sequence data collecting unit 11. A estimate for the subsequent power demand is controlled using the pseudo data 32A as the collected data. Therefore, the estimate-based control operations can be started without any problems even in the case where the heat storage air conditioner starts up or recovers to its original state after a power failure.

The cooling/heating energy calculating unit 19C calculates the quantity of cooling energy of ice or heating energy of hot water supplied to the cold/hot air discharger 17A from the heat accumulator 15, from the capability and operating time of the stored heat utilization unit 16. Consequently, the need for a temperature sensor and a water level sensor can be eliminated, and the cost of the heat storage air conditioner can be reduced accordingly.

In Fig. 34, reference symbol "a" designates the accuracy of estimate obtained when pseudo data are used, and "b" designates the accuracy of estimate obtained when an ordinary operation (i.e., an operation which does not carry out control operations based on a estimate) or an operation based on pseudo data shifts to a estimate-based control operation based on practical data. As is evident from this diagram, a comparatively high degree of accuracy of estimate is maintained from the initial stage in the case where the pseudo data are used. The accuracy of estimate becomes stable at a stage (where the data for a period of about 60 days are collected). Where the ordinary operation (i.e., an operation which does not carry out control operations based on a estimate) or an operation based on pseudo data shifts to a estimate-based control operation based on practical data, the accuracy of estimate for a power demand curve is improved as the amount of stored data increases, and the accuracy of estimate becomes stable at a stage where the data for a period of about 60 days are collected, as in the case of the estimate-based control that uses pseudo data.

The third through eighth embodiments have previously been described, using an example of operation pattern for air-conditioning operation purposes, wherein the heat source starts to operate first at the beginning of the air-conditioning operation. However, it is also possible to adopt an operation pattern in which a heat accumulator performs dissipating operations first at the beginning of the air-conditioning operation. Such an operation pattern is particularly effective as a heating pattern for use in the winter season.

The previously-described first through eighth embodiments have been described on the basis of the example of a cooling/heating system that utilizes the thermal energy stored in the form of ice. However, it goes without saying that the present invention can be applied to a system which utilizes the thermal energy stored in the form of water (i.e., a system which stores cooling energy in the form of cold water) or a cooling-only system.

The previously-described first through eighth embodiments have been described on the basis of the example in which Chaos Analysis is used as a method of estimating a power demand curve for the next day by analyzing the previous power demand time-sequence data. Needless to say, the power demand curve on the next day may be estimated by use of a neural network.

### NINTH EMBODIMENT

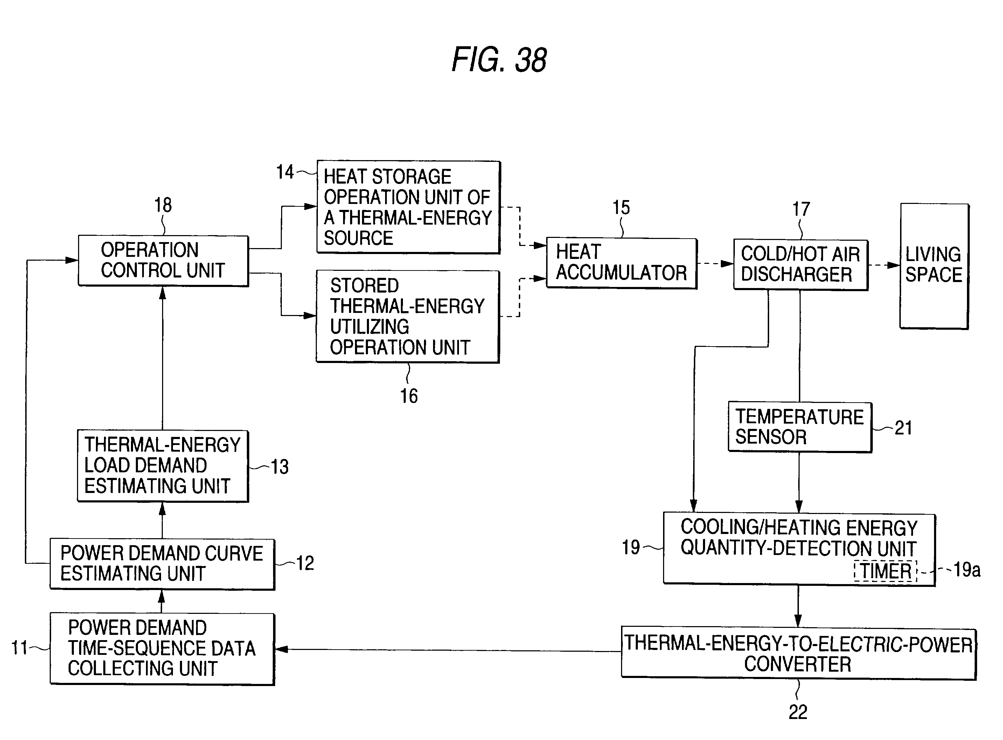

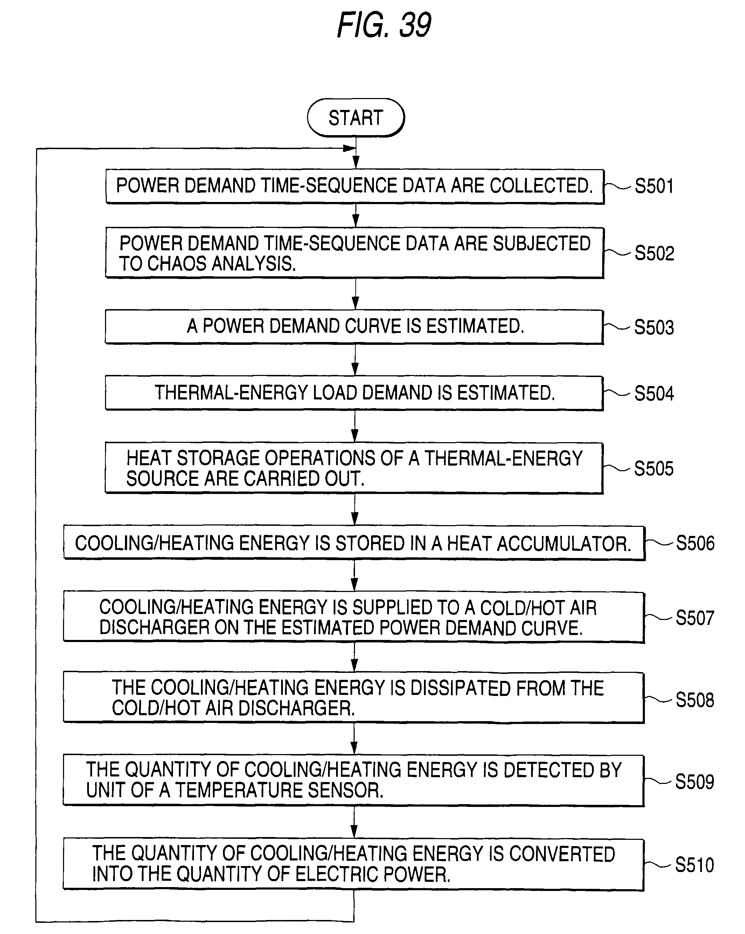

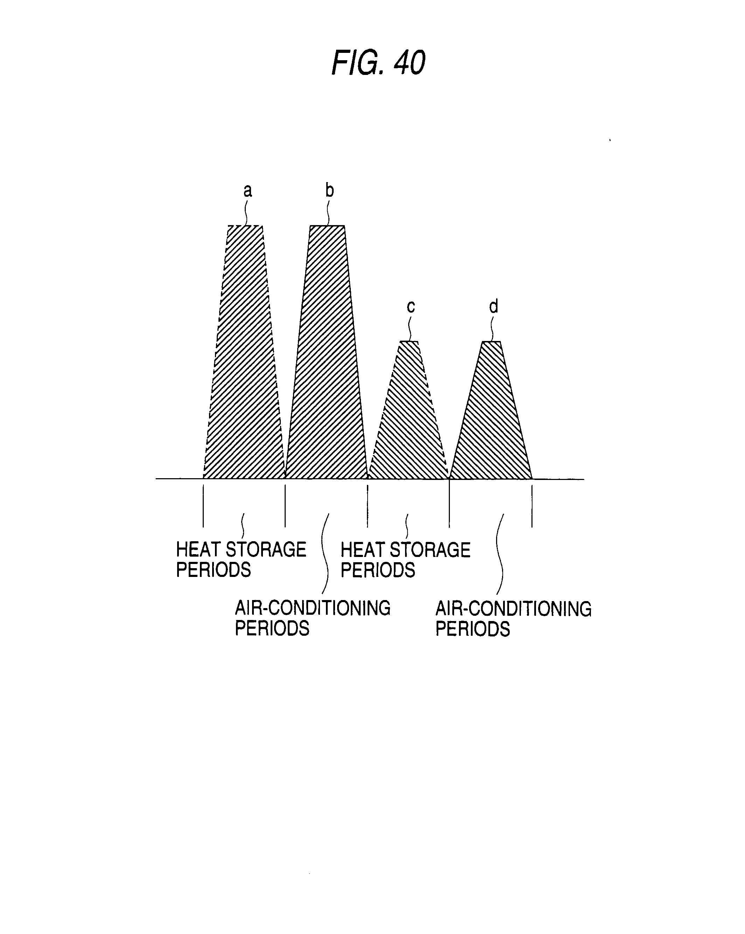

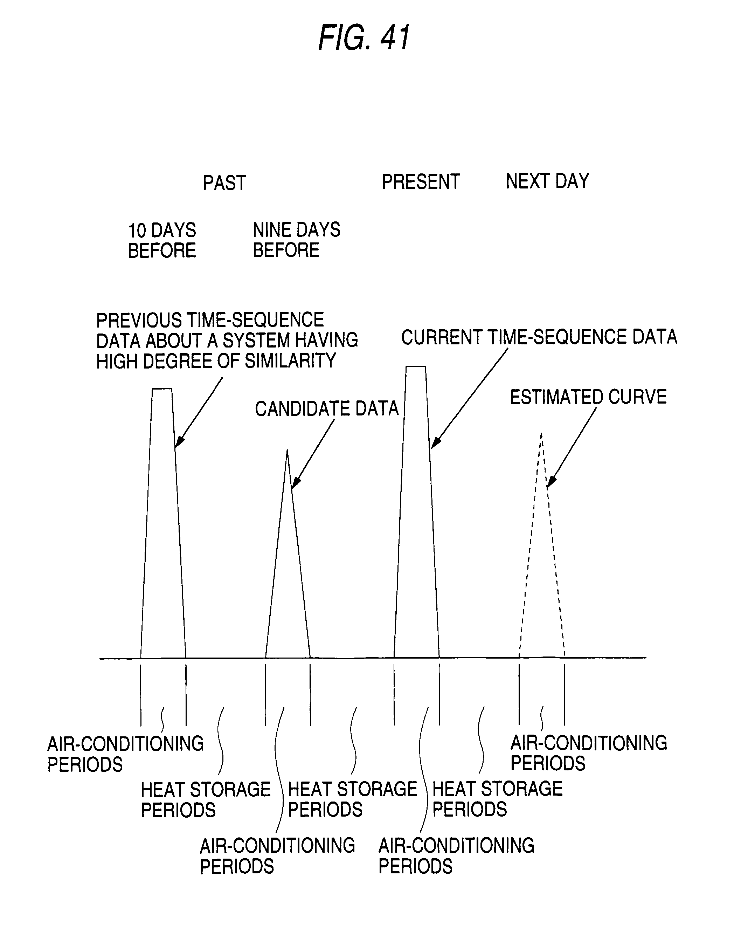

Fig. 38 is a basic block diagram of a heat storage air conditioner according to the present invention. Fig. 39 is a flowchart for use in describing processing operations of the heat storage air conditioner. Fig. 40 is an example of repetitive heat quantity pattern used in the heat storage air conditioner of the ninth embodiment. Fig. 41 is a graph showing time-sequence data for use in describing a method of estimating a power demand curve for the next day.

In Fig. 38, reference numeral 11 designates a power demand time-sequence data collecting unit for collecting power demand time-sequence data. Reference numeral 12 designates a power demand curve estimating unit for estimating the power demand curve that is obtained by subjecting the power demand time-sequence data to Chaos Analysis, which is one example of a method of analyzing the power demand time-sequence data. Reference numeral 13 designates thermal energy load demand estimating unit that estimates thermal energy load demand from the power demand curve; 14, heat storage operation unit of a heat source that stores cooling/heating energy in a heat accumulator 15 through a cooling/heating energy path; 16, stored heat utilizing operation unit for utilizing the thermal energy stored in the heat accumulator 15; 17, a cold/hot air discharger for dissipating the thermal energy stored in the heat accumulator 15; and 18, operation control unit for controlling the heat storage operation unit 14 and the stored energy utilizing operation unit 16 of the heat source.

The operation control unit 18 controls the heat storage operation unit 14 of the heat source on the basis of the thermal energy load demand estimated by the heat demand estimating unit 13 so as to cause the heat accumulator 15 to store the cooling/heating energy corresponding to the thermal energy load demand during the night. The power demand curve estimating unit 12 controls the stored heat utilizing operation unit 16 so as to cause the heat accumulator 15 to supply the stored thermal energy to the cold/hot air discharger 17 through the cooling/heating energy path during air-conditioning periods.

Reference numeral 19 designates cooling/heating energy quantity detection unit that detects the quantity of cooling/heating energy dissipated from the heat accumulator 15 through the cold/hot air discharger 17. Upon receipt of an operation signal from the cold/hot air discharger 17, the cooling/heating energy quantity detection unit 19 detects (or calculates) the quantity of cooling/heating energy by unit of a temperatures sensor 21 for detecting the temperature of the air discharged from the cold/hot air discharger 17 and a built-in timer 19a.

Reference numeral 22 designates a heat-to-electric-power converter that converts the quantity of cooling or heating energy detected by the cooling/heating energy quantity detection unit 19 into the quantity of electric power, as well as sending the thus-converted electric power to the power demand time-sequence data collecting unit 11.

With reference to Figs. 38 and 40, the operation of the heat storage air conditioner of the ninth embodiment will be described on the basis of Fig. 39. When the heat storage air conditioner starts to operate, the power demand time-sequence data collecting unit 11 collects power demand time-sequence data in the time period during which a living space is air-conditioned (step 501). The power demand curve estimating unit 12 analyzes the power demand time-sequence data thus collected by the power demand time-sequence data collecting unit 11, using Chaos Analysis (step 502). As a result, a power demand curve during the air-conditioning periods for the next day is estimated (step 503). Subsequently, the thermal energy load demand estimating unit 13 estimates the thermal energy load required during the cooling or heating period for the next day on the basis of the power demand curve estimated by the power demand curve estimating unit 12 (step 504).

In order to store the quantity of thermal energy, which is equivalent to the thermal energy load demand estimated by the thermal energy load demand estimating unit 13, in the heat accumulator 15 through the cooling/heating energy path, the operation control unit 18 controls the heat storage unit 14 of the heat source, on the basis of the thermal energy load demand estimated by the thermal energy load demand estimating unit 13, so as to perform heat storage operations during the night (step 505). Then, the water previously stored in the heat accumulator 15 changes to ice using cooling energy or to hot water using heating energy with lapse of time, whereby the resultant ice or hot water is stored in the heat accumulator 15 (step 508).

In order to supply the cooling energy of ice or the heating energy of hot water stored in the heat accumulator 15 to the cold/hot air discharger 17 through the cooling/heating energy path, the operation control unit 18 controls the stored heat utilizing operation unit 16 during the air-conditioning period on the next day on the basis of the power demand curve estimated by the power demand curve estimating unit 12, whereby the stored thermal energy of the heat accumulator 15 is supplied to the cold/hot air discharger 17 through the cooling/heating energy path (step 507). As a result, the thermal energy is dissipated from the cold/hot air discharger 17 (step 508), which enables the living room to be cooled or heated. Gas, a liquid, or a medium having a low boiling point is used as a medium for transmitting the cooling energy of ice or the heating energy of hot water stored in the heat accumulator 15 to the cold/hot air discharger 17. The same also applies to the tenth through fourteenth embodiments which will be described later. The cooling/heating energy quantity detection unit 19 detects the quantity of cooling energy of ice or the quantity of heating energy of hot water supplied to the cold/hot air discharger 17, in time sequence, by unit of the temperature sensor 21 for detecting the temperature of the air dissipated from the cold/hot air discharger 17 and the built-in timer 19a (step 509). The data on the quantity of cooling/heating energy detected in time sequence is input to the heat-to-electric-power converter 22. Consequently, the data on the quantity of cooling/heating energy are converted into data on the quantity of electric power by unit of the heat-to-electric-power converter 22 (step 510). The time-sequence data on the quantity of electric power converted by the heat-to-electric-power converter 22 are supplied to the power demand time-sequence data collecting unit 11. The thus-received time-sequence data are collected again as the power demand time-sequence data in the same manner as has been previously described in step 501. The same processing as has been previously described is repeated hereinbelow.

In the repetitive heat quantity pattern shown in Fig. 40, heat storage quantity pattern "a" corresponds to heat dissipation quantity pattern "b" during air-conditioning periods for the next day. Further, heat storage quantity pattern "c" corresponds to heat quantity dissipation pattern "d" during the air-conditioning periods for the next day. By virtue of these heat quantity patterns, the stored thermal energy can be prevented from running short or becoming excessive during the air-conditioning periods. Even if the stored thermal energy runs short or becomes excessive, the shortage or surplus of the thermal energy can be reduced. For these reasons, it is possible to use an appropriate quantity of electric power in producing thermal energy to be stored during the night as well as sufficiently maintaining the amenity of the living space. The quantity of electric power required during the cooling or heating periods is totally covered by the quantity of stored thermal energy, which in turn makes it possible to reduce electricity costs to a much greater extent.

The operation control unit 18 is set so as to complete the heat storage operations of the heat source carried out by the heat storage operation unit 14 of the heat source in step 505 immediately before the air-conditioning periods during which a cooling or heating operation commences. As a result, it is possible to effectively utilize the stored thermal energy of the heat accumulator 15 for carrying out an air-conditioning operation, i.e., a cooling or heating operation, before the cooling energy of ice or the heating energy of hot water stored in the heat accumulator 15 diffuses to the outside. Therefore, it is possible to commence air-conditioning operations using the thermal energy as previously set, which makes it possible to prevent the quantity of thermal energy stored in the heat accumulator 15 from running short during the air-conditioning periods as well as sufficiently maintaining the amenity of the living space. The same also applies to the tenth through fourteenth embodiments which will be described later.

With reference to Fig. 41, the example in which a power demand curve for the next day is estimated by use of Chaos Analysis will be described. Fig. 41 shows the previous power demand time-sequence data and the current power demand time-sequence data. For example, a local pattern of the previous power demand time-sequence data, which is most analogous to a local pattern of the current day's power demand time-sequence data obtained when the air-conditioning operation approaches completion, is extracted. If the local pattern of the power demand time-sequence data obtained ten days before is most analogous to the current day's local pattern, this local pattern is handled as candidate data for use in Chaos Analysis. Subsequently, where a power demand curve for the air-conditioning periods on the next day is estimated, the time-sequence data one day after the time-sequence data obtained ten days before, i.e., the power demand time-sequence data obtained nine days before, are handled as the power demand curve.

Alternatively, for example, a local pattern of the previous power demand time-sequence data, which is most analogous to a local pattern of the power demand time-sequence data at the beginning of the air condition operation, may be extracted. The same also applies to the tenth to fourteenth embodiments that will be described later.

### TENTH EMBODIMENT

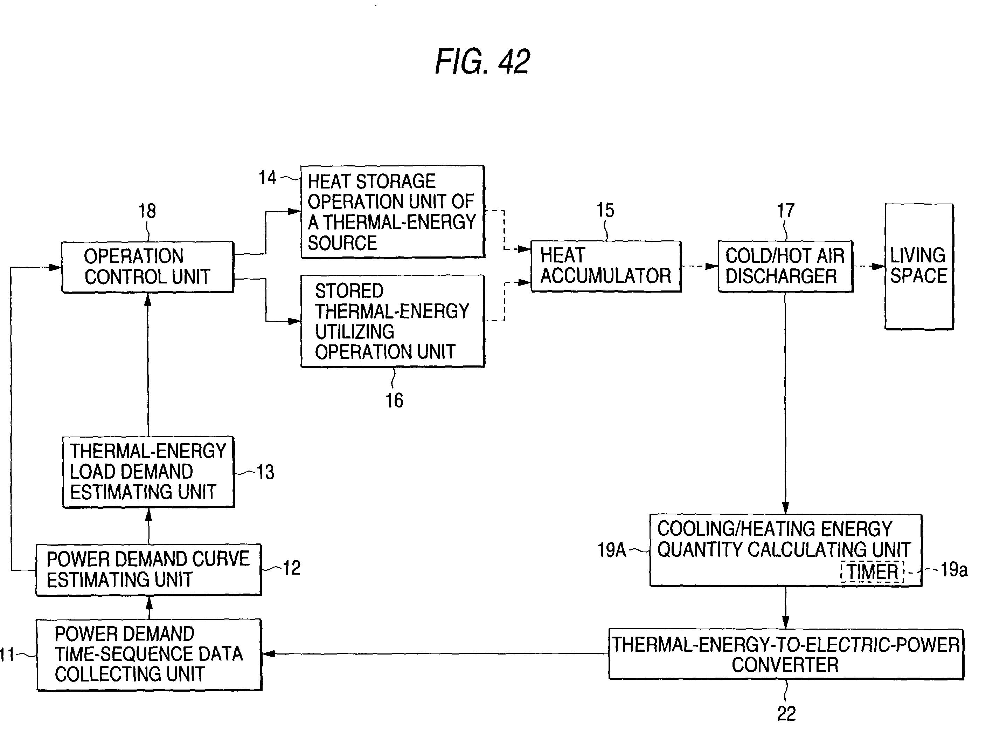

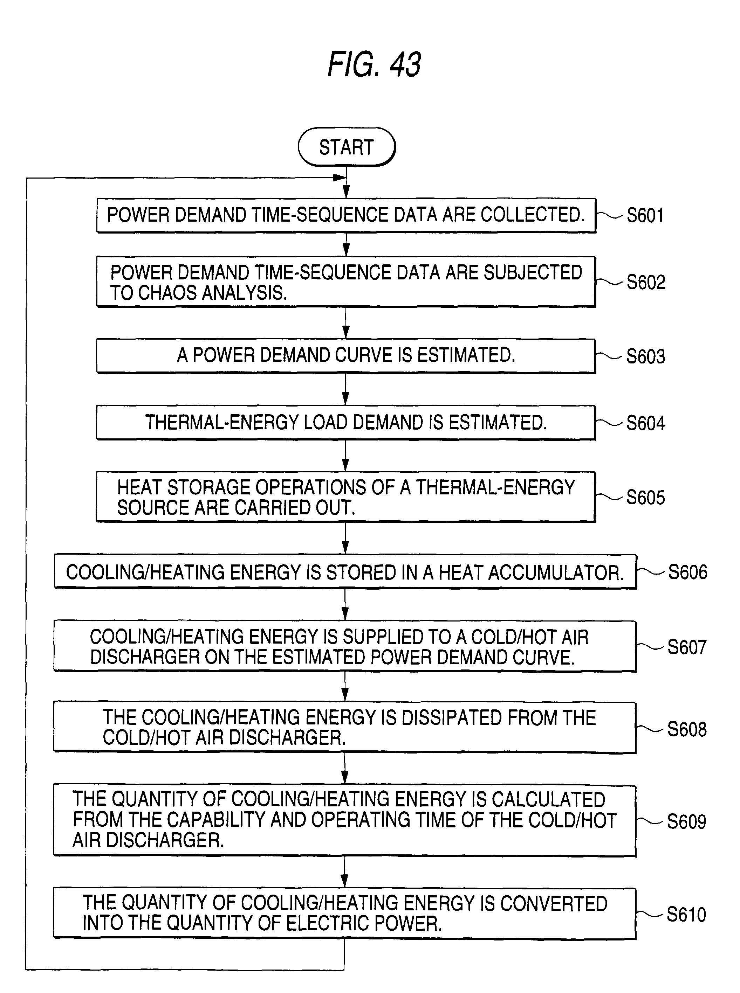

Fig. 42 is a basic block diagram of a heat storage air conditioner according to the present invention. Fig. 43 is a flowchart for use in describing processing operations of the heat storage air conditioner. The elements shown in Fig. 42 that are the same as those of the previously-described ninth embodiment shown in Fig. 38 are assigned the same reference numerals.

In Fig. 42, reference numeral 11 designates a power demand time-sequence data collecting unit for collecting power demand time-sequence data. Reference numeral 12 designates a power demand curve estimating unit for estimating the power demand curve that is obtained by subjecting the power demand time-sequence data to Chaos Analysis, which is one example of a method of analyzing the power demand time-sequence data. Reference numeral 13 designates thermal energy load demand estimating unit that estimates thermal energy load demand from the power demand curve; 14, heat storage operation unit of a heat source that stores cooling/heating energy in a heat accumulator 15 through a cooling/heating energy path; 16, stored heat utilizing operation unit for utilizing the thermal energy stored in the heat accumulator 15; 17, a cold/hot air discharger for dissipating the thermal energy stored in the heat accumulator 15; and 18, operation control unit which has the same function as the operation control unit of the previously-described ninth embodiment. This operation control unit 18 controls the heat storage operation unit 14 and the stored heat utilizing operation unit 16. Reference numeral 19A designates cooling/heating energy quantity calculating unit for calculating the quantity of cooling/heating energy of the heat accumulator 15 dissipated from the cold/hot air discharger 17. This cooling/heating energy quantity calculating unit 19A has the function of calculating the quantity of cooling/heating energy from the capability and operating time of the hot/cold air discharger 17. Reference numeral 22 designates a heat-to-electric-power converter that converts the quantity of cooling or heating energy calculated by the cooling/heating energy quantity calculating unit 19A into the quantity of electric power, as well as sending the thus-converted electric power to the power demand time-sequence data collecting unit 11.

With reference to Fig. 42, the operation of the heat storage air conditioner of the tenth embodiment will be described on the basis of Fig. 43. When the heat storage air conditioner starts to operate, the power demand time-sequence data collecting unit 11 collects power demand time-sequence data in the time period during which a living space is air-conditioned (step 601). The power demand curve estimating unit 12 analyzes the power demand time-sequence data thus collected by the power demand time-sequence data collecting unit 11, using Chaos Analysis (step 602). As a result, a power demand curve during the air-conditioning periods for the next day is estimated (step 603). Subsequently, the thermal energy load demand estimating unit 13 estimates the thermal energy load required during the cooling or heating period for the next day on the basis of the power demand curve estimated by the power demand curve estimating unit 12 (step 604).

The operation control unit 18 controls the heat storage unit 14 of the heat source, on the basis of the thermal energy load demand estimated by the thermal energy load demand estimating unit 13, so as to perform heat storage operations during the night (step 605). Then, the water previously stored in the heat accumulator 15 changes to ice using cooling energy or to hot water using heating energy with lapse of time, whereby the resultant ice or hot water is stored in the heat accumulator 15 (step 606).

The operation control unit 18 controls the stored heat utilizing operation unit 16 during the air-conditioning period on the next day on the basis of the power demand curve estimated by the power demand curve estimating unit 12, whereby the stored thermal energy of the heat accumulator 15 is supplied to the cold/hot air discharger 17 through the cooling/heating energy path (step 607). As a result, the thermal energy is dissipated from the cold/hot air discharger 17 (step 608), which enables the living room to be cooled or heated. The cooling/heating energy quantity calculating unit 19A calculates the quantity of cooling energy of ice or the quantity of heating energy of hot water supplied to the cold/hot air discharger 17 from the capability and operating time of the cold/hot air discharger 17 in time sequence (step 609). The data on the quantity of cooling/heating energy calculated in time sequence is input to the heat-to-electric-power converter 22. Consequently, the data on the quantity of cooling/heating energy are converted into data on the quantity of electric power by unit of the heat-to-electric-power converter 22 (step 610). The time-sequence data on the quantity of electric power converted by the heat-to-electric-power converter 22 are supplied to the power demand time-sequence data collecting unit 11. The thus-received time-sequence data are collected again as the power demand time-sequence data in the same manner as has been previously described in step 601. The same processing as has been previously described is repeated hereinbelow.

Also in the heat storage air-conditioner of the tenth embodiment, the heat quantity patterns of the night and the heat dissipation quantity pattern of the air-conditioning periods for the next day are determined by analysis of the previous time-sequence data. Consequently, the stored thermal energy can be prevented from running short or becoming excessive during the air-conditioning periods. Even if the stored thermal energy runs short or becomes excessive, the shortage or surplus of the thermal energy can be reduced. For these reasons, it is possible to use an appropriate quantity of electric power in producing thermal energy to be stored during the night as well as sufficiently maintaining the amenity of the living space. The quantity of electric power required during the cooling or heating periods is totally covered by the quantity of stored thermal energy, which in turn makes it possible to reduce electricity costs to a much greater extent.

Furthermore, the cooling/heating energy quantity calculating unit 19A calculates the quantity of cooling energy of ice or the quantity of heating energy of hot water supplied to the cold/hot air discharger 17 from the heat accumulator 15, from the capability and operating time of the cold/hot air discharger 17 in time sequence. Therefore, the need for a temperature sensor can be eliminated, and the cost of the heat storage air conditioner can be reduced accordingly.

### ELEVENTH EMBODIMENT

### Eleventh embodiment

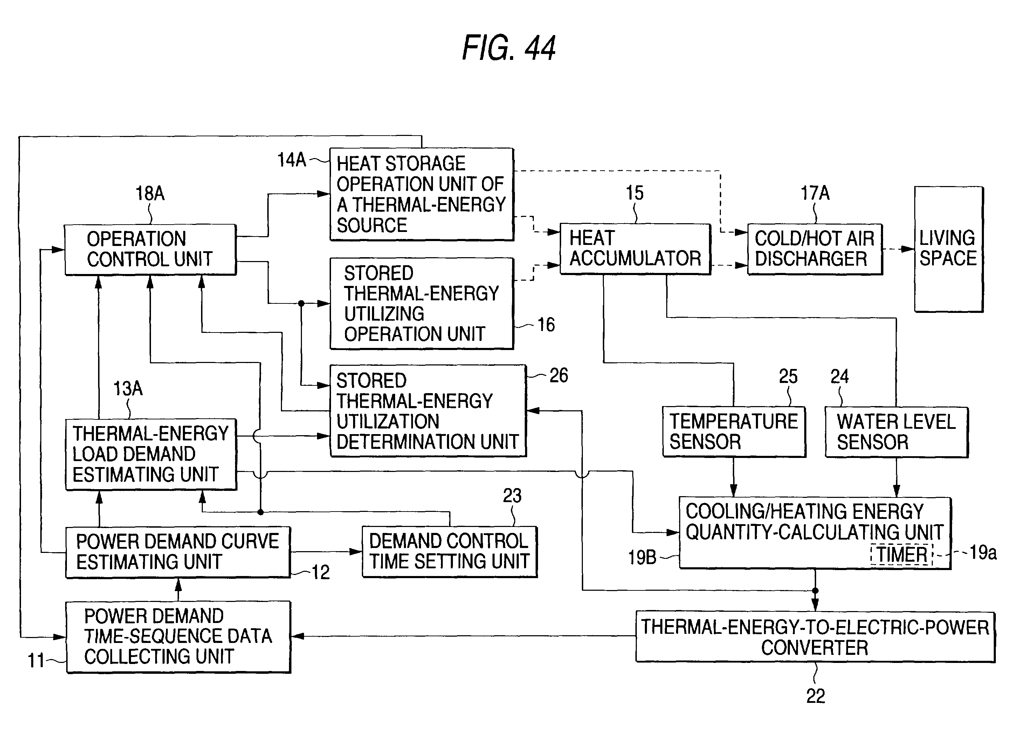

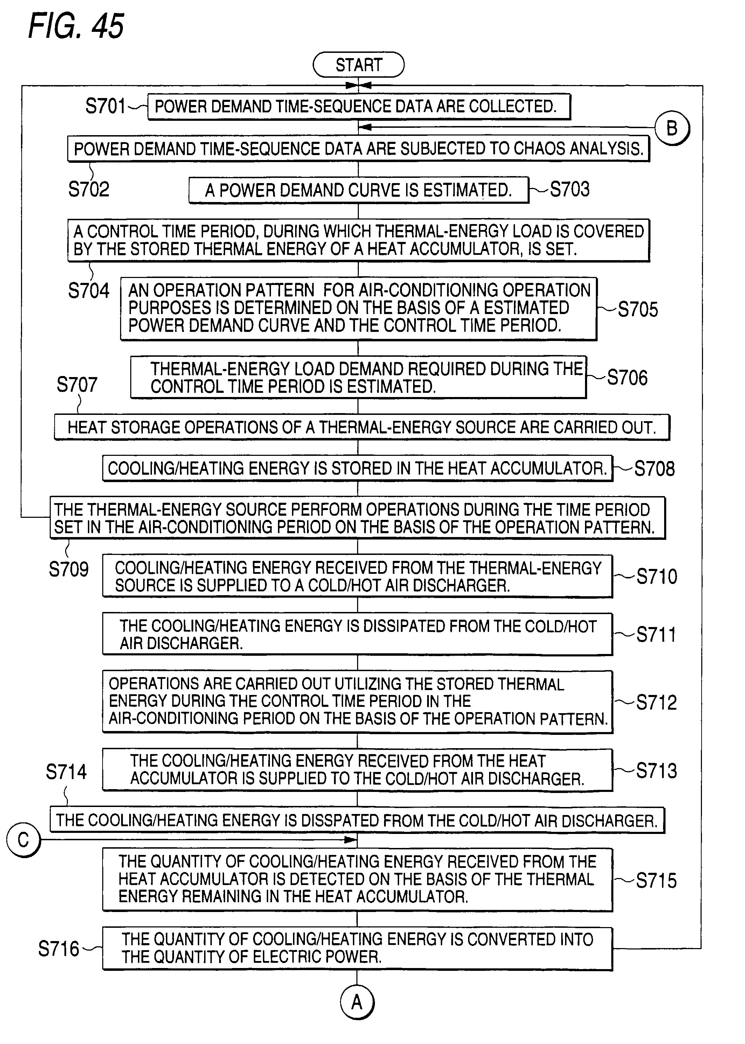

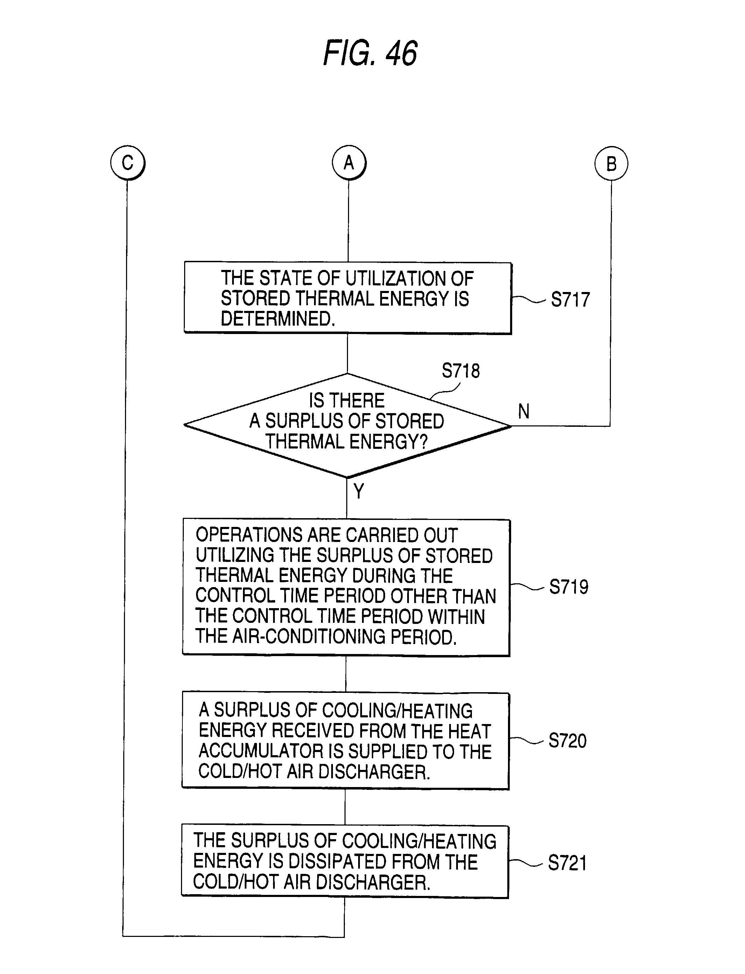

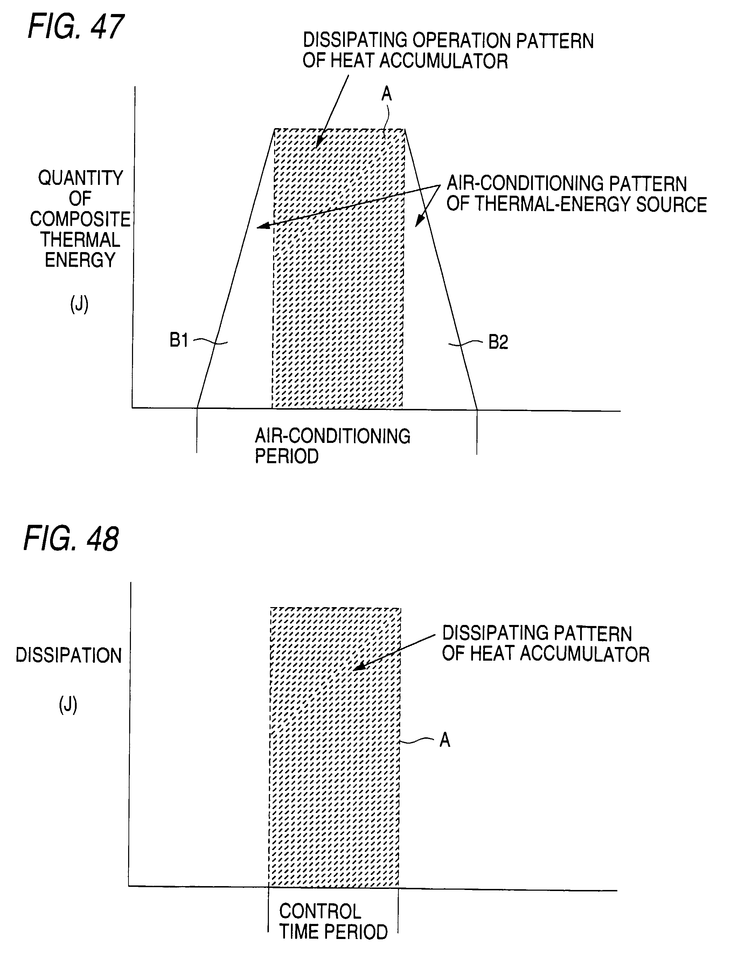

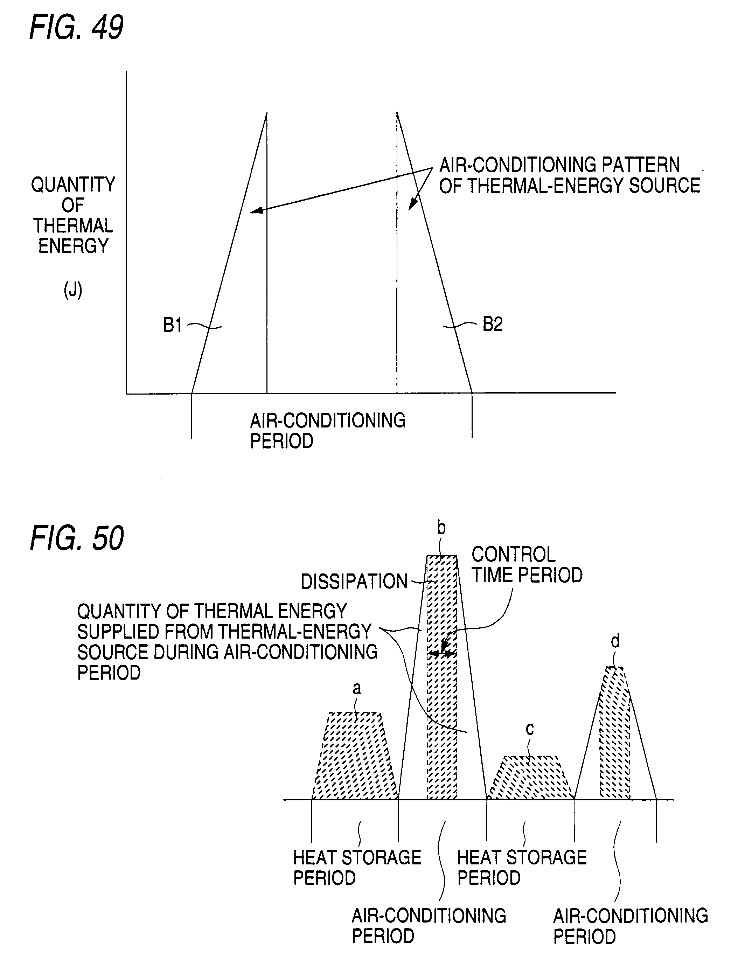

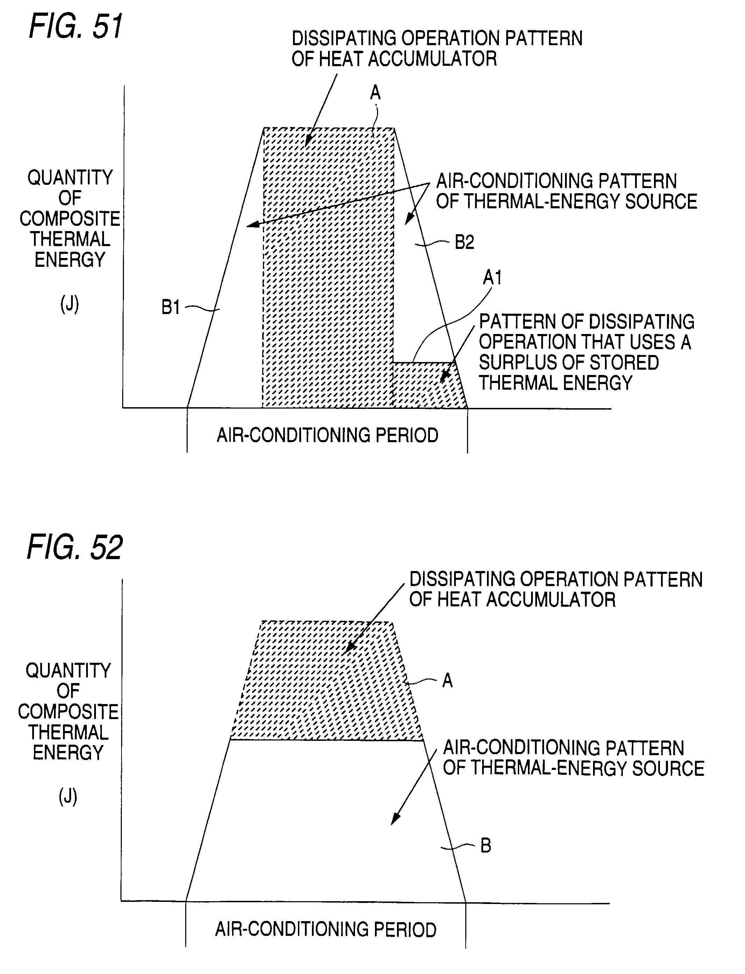

Fig. 44 is a basic block diagram of a heat storage air conditioner according to the present invention. Figs. 45 and 46 are flowcharts for use in describing processing operations of the heat storage air conditioner. Fig. 47 is a graph showing a composite heat quantity pattern that is used in the heat storage air conditioner of the present embodiment and consists of the quantity of thermal energy defined by dissipating operation pattern A of a heat accumulator and the quantity of thermal energy defined by patterns B1 and B2 obtained at the time of air-conditioning operations of a heat source. Fig. 48 is a graph showing the dissipating operation pattern A of the heat accumulator that corresponds to a hatched area of the composite heat quantity pattern shown in Fig. 47. Fig. 49 is a graph showing the patterns B1 and B2 that are obtained at the time of the air-conditioning operations of the heat source and correspond to outlined portions of the composite heat quantity pattern shown in Fig. 47. Fig. 50 is an example of repetitive heat quantity pattern used in the heat storage air conditioner of the eleventh embodiment. Fig. 51 is a graph illustrating an example of composite heat quantity pattern including pattern Al that uses a surplus of thermal energy. The elements shown in Fig. 44 that are the same as those used in the previously-described ninth embodiment shown in Fig. 38 are assigned the same reference numerals.

In Fig. 44, reference numeral 11 designates a power demand time-sequence data collecting unit for collecting power demand time-sequence data. Reference numeral 12 designates a power demand curve estimating unit for estimating the power demand curve that is obtained by subjecting the power demand time-sequence data to Chaos Analysis which is one example of a method of analyzing the power demand time-sequence data. Reference numeral 23 designates a demand control time setting unit for setting a control time period during which thermal energy load is covered by the stored thermal energy of the heat accumulator 15 on the basis of the power demand curve. Reference numeral 13A designates thermal energy load demand estimating unit that estimates thermal energy load demand of the control time period on the basis of the time control period set by the demand control time setting unit 23 and the power demand curve estimated by the power demand curve estimating unit 12. Reference numeral 14A designates operation unit of a heat source that supplies cooling/heating energy. Reference numeral 15 designates a heat accumulator that stores the cooling/heating energy received from the operation unit 14A of the heat source. Reference numeral 16 designates stored heat utilizing operation unit for utilizing the thermal energy stored in the heat accumulator 15; 17A, a cold/hot air discharger for dissipating the thermal energy stored in the heat accumulator 15 and/or the thermal energy received from the operation unit 14A of the heat source; and 18A, operation control unit controls the operation unit 14A and the stored heat utilizing operation unit 16. The detailed function of this operation control unit will be described later.

Reference numeral 19B designates cooling/heating energy quantity detection unit that detects the quantity of cooling/heating energy dissipated from the heat accumulator 15 through the cold/hot air discharger 17A, from the thermal energy remaining in the heat accumulator 15. In the case of the thermal energy stored in the form of ice, it is necessary to detect cooling energy (latent heat) and heating energy (sensible heat) in order to obtain the quantity of ice or hot water remaining in the heat accumulator 5. In the eleventh embodiment, a water level sensor 24 is used for detecting the cooling energy (latent heat), whereas a temperature sensor 25 is used for detecting the heating energy (sensible heat). Specifically, the cooling/heating energy quantity detection unit 19B detects (or calculates) the quantity of cooling/heating energy dissipated from the heat accumulator 15 through the cold/hot air discharger 17A by comparing the residual thermal energy of the current heat accumulator 15 detected by the water level sensor 24 and the temperature sensor 25 with the thermal energy load demand estimated on the previous day by the thermal energy load demand estimating unit 13A.

Reference numeral 26 designates stored heat utilization determination unit that determines the state of utilization of the stored thermal energy during the control time period of the air-conditioning periods, from the quantity of cooling/heating energy detected by the cooling/heating energy quantity detection unit 19B and the thermal energy load demand estimated by the thermal energy load estimating unit 13A. The stored heat utilization determination unit 26 sends a result of the determination to the operation control unit 18A. Reference numeral 22 designates a heat-to-electric-power converter that converts the quantity of cooling or heating energy detected by the cooling/heating energy quantity calculating unit 19B into the quantity of electric power, as well as sending the thus-converted electric power to the power demand time-sequence data collecting unit 11.

The operation control unit 18A has the following functions of:
(1) controlling the operation unit 14A of the heat source during the night to store the quantity of cooling/heating energy corresponding to the thermal energy load demand in the heat accumulator 15 via the cooling/heating energy path on the basis of the thermal energy load demand estimated by the thermal energy load demand estimating unit 13A;
(2) determining an operation pattern for use in the air-conditioning periods on the basis of the power demand curve estimated by the power demand curve estimating unit 12 and the control time period set by the demand control time setting unit 23; controlling the operation unit 14A of the heat source during the preset time period of the air-conditioning periods so as to supply cooling/heating energy directly to the cold/hot air discharger 17A via the cooling/heating energy path as well as the quantity of thermal energy dissipated from the heat source at this time to the power demand time-sequence data collecting unit 11; and controlling the stored heat utilizing operation unit 16 during the control time of the air-conditioning periods so as to supply the stored thermal energy of the heat accumulator 15 directly to the cold/hot air discharger 17A via the cooling/heating energy path; and
(3) controlling the stored heat utilizing operation unit 16 so as to perform operations utilizing a surplus of stored thermal energy during the time period after the control time period of the air-conditioning periods set by the demand control time setting unit 23, when the stored heat utilization determination unit 26 has notified the operation control unit 18A of a surplus of stored thermal energy occurred after the dissipation of the thermal energy from the heat accumulator 15.

With reference to Figs. 47 through 51, the operation of the heat storage air conditioner of the eleventh embodiment will be described on the basis of Figs. 45 and 46. When the heat storage air conditioner starts to operate, the power demand time-sequence data collecting unit 11 collects power demand time-sequence data in the time period during which a living space is air-conditioned (step 701). The power demand curve estimating unit 12 analyzes the power demand time-sequence data thus collected by the power demand time-sequence data, using Chaos Analysis (step 702). As a result, a power demand curve during the air-conditioning periods for the next day is estimated (step 703). Subsequently, the demand control time setting unit 23 previously sets the control time period during which thermal energy load is covered by the thermal energy stored in the heat accumulator 15, to a specific time period on the basis of the power demand curve estimated by the power demand curve estimating unit 12 (step 704). The operation control unit 18A determines the operation pattern (see Fig. 47) of the air-conditioning periods on the basis of the control time period and the estimated power demand curve (step 705). Simultaneously, the thermal energy load demand estimating unit 13A estimates the thermal energy load required during the cooling or heating periods on the basis of the control time period and the estimated power demand curve (step 706). The control time period that has been previously set to a specific time period by the demand control time setting unit 23 is made so as to be capable of being fixed or changed.

The operation control unit 18A controls the operation unit 14A of the heat source so as to cause the heat source to perform heat storage operations during the night in order to store the quantity of thermal energy, which is equivalent to the thermal energy load demand estimated by the thermal energy load demand estimating unit 13A, in the heat accumulator 15 through the cooling/heating energy path (step 707). Then, the water previously stored in the heat accumulator 15 changes to ice using cooling energy or to hot water using heating energy with lapse of time, whereby the resultant ice or hot water is stored in the heat accumulator 15 (step 708).

During the air-conditioning periods on the next day, the operation unit 14A of the heat source is initially controlled in accordance with pattern B1 (see Fig. 47) of the operation patterns determined by the operation control unit 18A so as to cause the heat source to perform operations (step 709). The cooling/heating energy of by the heat source is directly supplied to the cold/hot air discharger 17A through the cooling/heating energy path (step 710). The power demand time-sequence data of the heat source are supplied to the power demand time-sequence data collecting unit 11. Consequently, the cooling/heating energy received from the heat source is dissipated from the cold/hot air discharger 17A (step 711), thereby making it possible to cool or heat the living space. The direct supply of cooling/heating energy to the cold/hot air discharger 17A from the heat source is carried out immediately before the control time period within the air-conditioning period, as shown in Fig. 47. The supply of cooling/heating energy is temporarily suspended when the time control period commences.

When the control time period commences, the operation control unit l8A controls the stored heat utilizing operation unit 16 according to the pattern A of the operation patterns (see Fig. 47) so as to carry out dissipating operations (step 712). The cooling/heating energy of the heat accumulator 15 is supplied to the cold/hot air discharger 17A via the cooling/heating path (step 713). As a result, the cooling/heating energy received from the heat accumulator 15 is dissipated from the cold/hot air discharger 17A (step 714), thereby making it possible to cool or heat the living space. The cooling/heating energy detection unit 19B detects, in time sequence, the quantity of cooling energy of ice or heating energy of hot water supplied to the cold/hot air discharger 17A, from the residual thermal energy (cooling or heating energy) of the current heat accumulator 15 detected by the water level sensor 24 and the temperature 25 and the thermal energy load demand estimated on the previous day by the thermal energy load demand estimating unit 13A (step 715). The data on the cooling/heating energy detected in time sequence are input to the heat-to-electric-power converter 22. The data on the cooling/heating energy are converted into the data on the quantity of electric power by the heat-to-electric-power converter 22 (step 716). The time-sequence data on the quantity of electric power converted by the heat-to-electric-power converter 22 are supplied to the power demand time-sequence time-sequence data collecting unit 11. The thus-output data are collected again as power demand time-sequence data in the same manner as previously described in step 701.

When the control time period terminates, the control operation unit 18A stops the dissipating operations of the stored heat utilizing operation unit 16. The control operation unit 18A again controls the operation unit 14A of the heat source according to pattern B2 (see Fig. 47) of the operation patterns so as to cause the heat source to perform operations. The cooling/heating energy of the heat source is directly supplied to the cold/hot air discharger 17A through the cooling/heating energy path. The time-sequence data on the quantity of electric power dissipated from the heat source at this time are supplied to the power demand time-sequence data collecting unit 11. Consequently, the cooling/heating energy received again from the heat source is dissipated from the cold/hot air discharger 17A, thereby making it possible to cool or heat the living space. The re-supply of cooling/heating energy to the cold/hot air discharger 17A from the thermal-air discharger is carried out until the air-conditioning periods shown in Fig. 47 complete. The supply of cooling/heating energy is terminated when the time control period completes.

A resident of the living space often sets the temperature of a room to a lower level at the time of air-conditioning operations. In this case, the thermal energy load actually used in air-conditioning operations becomes smaller than the thermal energy load demand previously estimated by the thermal energy load demand estimating unit 13A. As a result, there arises a surplus of the stored thermal energy after the dissipation of the thermal energy of the heat accumulator 15. For this reason, the stored heat utilization determination unit 26 determines the state of utilization of the stored thermal energy during the control time period of the air-conditioning periods, from the quantity of cooling/heating energy detected by the cooling/heating energy quantity detection unit 19B and the thermal energy load demand estimated by the thermal energy load estimating unit 13A (step 717). If there is a surplus of stored thermal energy after the dissipation of the stored thermal energy of the heat accumulator 15 (step 718), the operation control unit 18A is notified of the surplus of stored thermal energy. Upon notification of the surplus of stored thermal energy of the heat accumulator 15 by the stored heat utilization determination unit 26, the operation control unit 18A sets pattern A1 regarding a dissipating operation which utilizes the surplus of stored thermal energy, in the remaining time period after the control time period of the air-conditioning periods set by the demand control time setting unit 23, as shown in Fig. 51. The operation control unit 18A controls the stored heat utilization determination unit 16 so as to perform dissipating operations based on the pattern A1 together with the air-conditioning operation (pattern B2) of the heat source (step 719). The surplus of stored thermal energy of the heat accumulator 15 is supplied to the cold/hot air discharger 17A via the cooling/heating energy path (step 720). The surplus of stored cooling/heating energy received from the heat accumulator 15 is dissipated from the cold/hot air discharger 17A (step 721). The thus-dissipated cooling/heating energy is utilized in cooling or heating the living space. It goes without saying that the load of pattern B2 placed on the heat source during the air-conditioning periods is mitigated as a result of the dissipating operation that is carried out together with the air-conditioning operation with use of the surplus of stored thermal energy (pattern A1).

If it has been determined in step 718 that there is not any surplus of stored thermal energy after the dissipation of thermal energy from the heat accumulator 15, return to step 702 takes place. The power demand curve estimating unit 12 again analyzes the power demand time-sequence data collected by the power demand time-sequence data collecting unit 11.

The surplus of stored thermal energy received from the heat accumulator 15 is dissipated from the cold/hot air discharger 17A in step 721, return to step 715 takes place. The cooling/heating energy quantity detection unit 19B detects, in time sequence, the quantity of cooling energy of ice or heating energy of hot water that corresponds to the surplus of stored thermal energy supplied to the cold/hot air discharger 17A. The quantity of cooling/heating energy that corresponds to the surplus of stored thermal energy and has been detected in time sequence is converted into the data on the quantity of electric power in step 716. The thus-converted data are supplied to the power demand time-sequence data collecting unit 11 and are collected again as the power demand time-sequence data. The same processing as has been previously described is repeated hereinbelow.

In the repetitive heat quantity pattern shown in Fig. 50, heat storage quantity pattern "a" corresponds to heat dissipation quantity pattern "b" during an air-conditioning period on the next day. Further, heat storage quantity pattern "c" corresponds to heat dissipation quantity pattern "d" during the an air-conditioning period on the next day. By virtue of these heat quantity patterns, the stored thermal energy can be prevented from running short or becoming excessive during the air-conditioning periods. Even if the stored thermal energy runs short or becomes excessive, the shortage or surplus of the thermal energy can be reduced. Furthermore, if there arises a surplus of stored thermal energy, that surplus of stored thermal energy can be effectively utilized at the time of air-conditioning operations without natural diffusion of the surplus of stored thermal energy to the outside. For these reasons, it is possible to use an appropriate quantity of electric power in producing thermal energy to be stored during the night as well as sufficiently maintaining the amenity of the living space. Further, the operations of the heat source are completely stopped during the control time period within the cooling or heating periods during which thermal energy load is covered by only the quantity of thermal energy stored in the heat accumulator 15. Consequently, the running costs of the heat source are reduced, which in turn makes it possible to reduce electricity costs.

The above embodiment has been described on the basis of an example of dissipating operation that utilizes the surplus of stored thermal energy, that is, the pattern A1 that utilizes a surplus of stored thermal energy during the remaining time period after the control time period of the air-conditioning periods while averaging it. However, the present invention is not limited to this embodiment. For example, the time period, during which dissipating operations are carried out using a surplus of stored thermal energy, is set to a specific time period within the remaining time period after the control time period of the air-conditioning operations. It is also possible to dissipate all of the surplus of stored thermal energy at one time during that specific time period. If the dissipating operation, in which all of the surplus of stored thermal energy is dissipated at one time, is employed, it goes without saying that the operations of the heat source are completely suspended during the time period of the dissipating operation that uses the surplus of stored thermal energy.

### TWELFTH EMBODIMENT

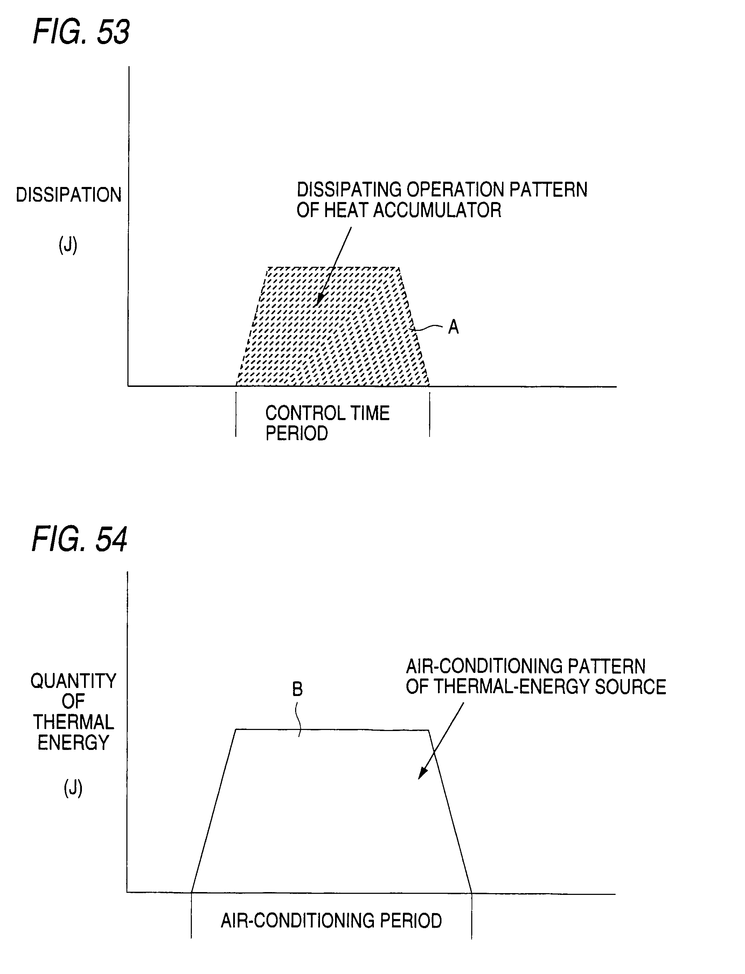

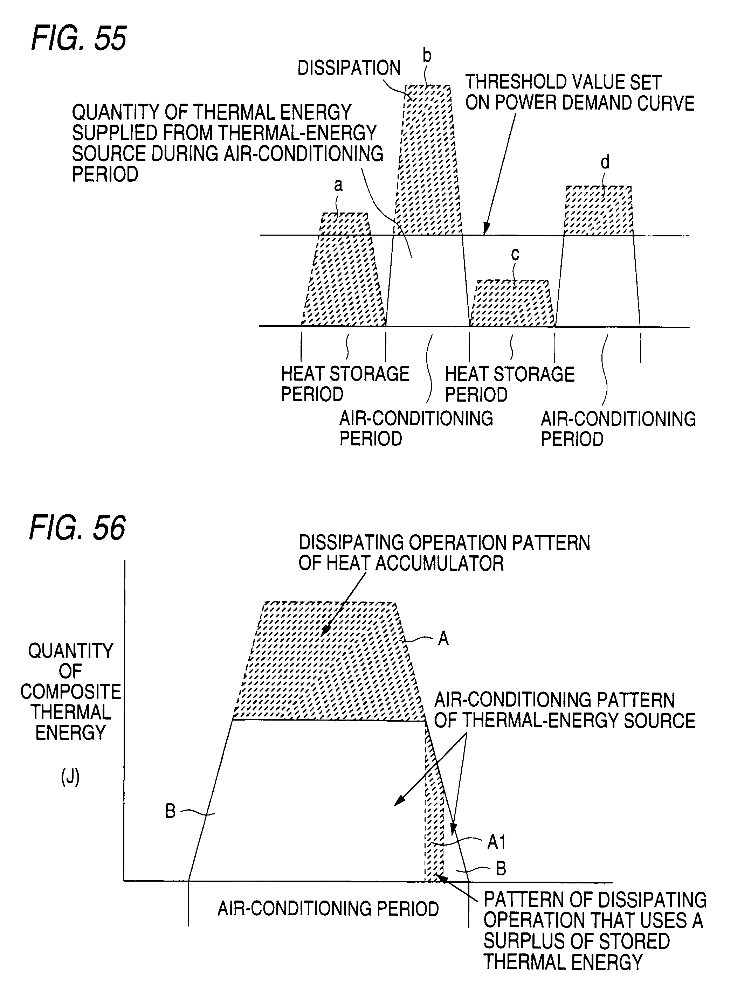

Fig. 52 is a graph illustrating an example of composite heat quantity pattern that is used in a heat storage air conditioner according to the present invention and includes the quantity of thermal energy defined by dissipating operation pattern A of the heat accumulator and the quantity of thermal energy defined by the air-conditioning operation pattern B of the heat source. Fig. 53 is a graph showing the dissipating operation pattern A of the heat accumulator that corresponds to a hatched portion of the composite heat quantity pattern shown in Fig. 52. Fig. 54 is a graph showing the air-conditioning operation pattern B of the heat source that corresponds to an outlined portion of the composite heat quantity pattern shown in Fig. 52. Fig. 55 is a graph illustrating an example of repetitive heat quantity pattern used in the heat storage air conditioner of the twelfth embodiment. Fig. 56 is a graph illustrating an example of composite heat quantity pattern including the pattern A1 that uses a surplus of thermal energy. The heat storage air conditioner of the twelfth embodiment has basically the same configuration as that of the previously described eleventh embodiment shown in Fig. 44. Therefore, Fig. 44 will be referred to during the course of the description of the present embodiment.

The heat storage air conditioner of the twelfth embodiment is different from that of the previously described eleventh embodiment in the following points: Specifically, the demand control time setting unit 23 sets the control time period during which thermal energy load is covered by the thermal energy of the heat accumulator 15 on the basis of the power demand curve estimated by the power demand curve estimating unit 12 shown in Fig. 44. This demand control time setting unit 23 is arranged so as to set a threshold value on the power demand curve as well as setting the control time period in the time period during which the power demand curve is in excess of the threshold value. Furthermore, if there is a surplus of stored thermal energy, the operation control unit 18A sets the pattern A1 regarding the dissipating operations that uses a surplus of stored thermal energy, in a specific time period within the remaining time period after the control time period of the air-condition periods, as shown in Fig. 56. All of the surplus of stored thermal energy is dissipated at one time during that specific time period. The operations of the heat source are completely suspended during the time period of the dissipating operation that uses the surplus of stored thermal energy. The control time period is arranged so as to be capable of being fixed or changed when the demand control time setting unit 23 sets the threshold value on the power demand curve.

By unit of the demand control setting unit 23 that sets the above-described control time period, the repetitive heat quantity pattern as shown in Fig. 55 is obtained. In the repetitive heat quantity pattern shown in Fig. 55, heat storage quantity pattern "a" corresponds to heat dissipation quantity pattern "b" obtained during the control time period during which the power demand curve exceed a threshold value in the air-conditioning period on the next day. Further, heat storage quantity pattern "c" corresponds to heat dissipation quantity pattern "d" obtained during the control time period during which the power demand curve exceeds a threshold value in the air-conditioning period on the next day. By virtue of these heat quantity patterns, the operations of the heat source can be completely stopped during the control time period during which thermal energy load is covered by the stored thermal energy of the heat accumulator in the extent in which the power demand curve does not exceed the threshold value. Hence, the contract power demand required during the cooling or heating periods can be reduced, which makes it possible to reduce electricity costs. Furthermore, the stored thermal energy can be prevented from running short or becoming excessive during the control time period of the air-conditioning periods. For example, even if the stored thermal energy runs short or becomes excessive, the shortage or surplus of the thermal energy can be reduced. Furthermore, if there arises a surplus of stored thermal energy, that surplus of stored thermal energy can be effectively utilized at the time of air-conditioning operations without natural diffusion of the surplus of stored thermal energy to the outside. For these reasons, it is possible to use an appropriate quantity of electric power in producing thermal energy to be stored during the night as well as sufficiently maintaining the amenity of the living space.

The dissipating operation that uses a surplus of stored thermal energy has been described in the above embodiment. Specifically, the pattern Al is used as an example of dissipating operation, wherein a surplus of stored thermal energy is dissipated at one time during a specific time period in the remaining time period after the control time of the air-conditioning period. However, the surplus of stored thermal energy may be utilized while being averaged, during the remaining time period after the control time period of the air-conditioning period, in the same manner as previously described in the eleventh embodiment shown in Fig. 51.

### THIRTEENTH EMBODIMENT

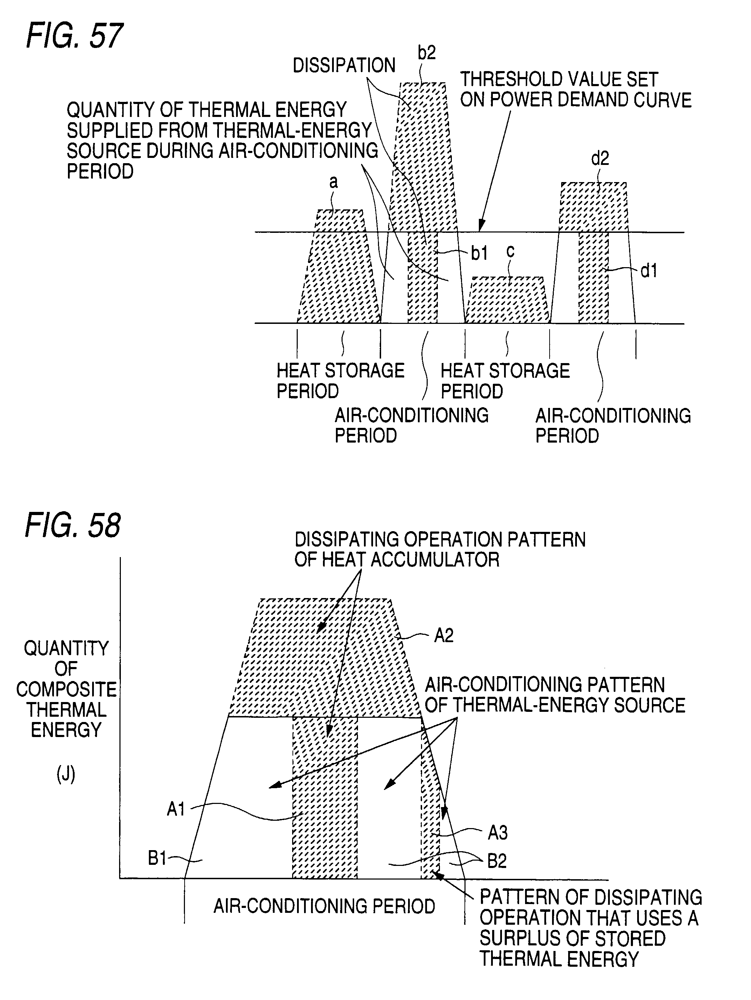

Fig. 57 is a graph illustrating a repetitive heat quantity pattern used in a heat storage air conditioner according to the present invention. Fig. 58 is a graph illustrating an example of composite heat quantity pattern including dissipating operation pattern A3 that uses a surplus of thermal energy. Also in the thirteenth embodiment, the heat storage air conditioner has basically the same configuration as that of the previously described eleventh embodiment shown in Fig. 44. Therefore, Fig. 44 will be referred to during the course of the description of the present embodiment.

The heat storage air conditioner of the thirteenth embodiment is different from that of the previously described eleventh and twelfth embodiments in the following points: Specifically, the demand control time setting unit 23 sets the control time period during which thermal energy load is covered by the thermal energy of the heat accumulator 15 on the basis of the power demand curve estimated by the power demand curve estimating unit 12 shown in Fig. 44. This demand control time setting unit 23 is arranged so as to set a threshold value on the power demand curve as well as setting the control time period in the time period during which the power demand curve is in excess of the threshold value. Furthermore, if there is a surplus of stored thermal energy, the operation control unit 18A sets the pattern A3 regarding the dissipating operations that uses a surplus of stored thermal energy, in a specific time period within the remaining time period after the control period of the air-condition periods, i.e., a specific time period within the remaining time period after the time period during which the power demand curve is in excess the threshold value for the air-conditioning operations, as shown in Fig. 58. All of the surplus of stored thermal energy is dissipated at one time during that specific time period. The operations of the heat source are completely suspended during the time period of the dissipating operation that uses the surplus of stored thermal energy. The control time period is arranged so as to be capable of being fixed or changed when the demand control time setting unit 23 sets the threshold value on the power demand curve.

Hatched area A1 of the composite heat quantity pattern shown in Fig. 58 designates a dissipating operation pattern of the heat accumulator during the control time period that has previously been set to a specific time period. Hatched area A2 designates a dissipating operation pattern of the heat accumulator during the control time period set in the time period during which the power demand curve is in excess of the threshold value. Hatched area A3 designates a pattern regarding dissipating operations that use a surplus of stored thermal energy. Outlined areas B1 and B2 of the composite thermal energy quantity pattern respectively designate operation patterns at the time of the air-conditioning operations of the heat source.

By unit of the demand control setting unit 23 that sets the above-described control time period, the repetitive heat quantity pattern as shown in Fig. 57 is obtained. In the repetitive heat quantity pattern shown in Fig. 57, heat storage quantity pattern "a" corresponds to heat dissipation quantity patterns "b1" and "b2" obtained during the air-conditioning period on the next day. Further, heat storage quantity pattern "c" corresponds to heat dissipation quantity patterns "d1" and "d2" obtained during the air-conditioning period on the next day. By virtue of these heat quantity patterns, the stored thermal energy can be prevented from running short or becoming excessive during the control time period of the air-conditioning periods. For example, even if the stored thermal energy runs short or becomes excessive, the shortage or surplus of the thermal energy can be reduced. Furthermore, if there arises a surplus of stored thermal energy, that surplus of stored thermal energy can be effectively utilized at the time of air-conditioning operations without natural diffusion of the surplus of stored thermal energy to the outside. For these reasons, it is possible to use an appropriate quantity of electric power in producing thermal energy to be stored during the night as well as sufficiently maintaining the amenity of the living space. Hence, the contract power demand required during the cooling or heating periods can be reduced, which makes it possible to reduce electricity costs.

The dissipating operation that uses a surplus of stored thermal energy has been described in the above embodiment. Specifically, the pattern A3 is used as an example of dissipating operation, wherein a surplus of stored thermal energy is dissipated at one time during a specific period within the remaining time period after the time period during which the power demand curve is in excess of the threshold value for the air-conditioning operations. However, the surplus of stored thermal energy may be utilized while being averaged, during the remaining time period after the control time period during which the power demand curve is in excess of the threshold value for air-conditioning operations, in the same manner as previously described in the eleventh embodiment shown in Fig. 51.

### FOURTEENTH EMBODIMENT

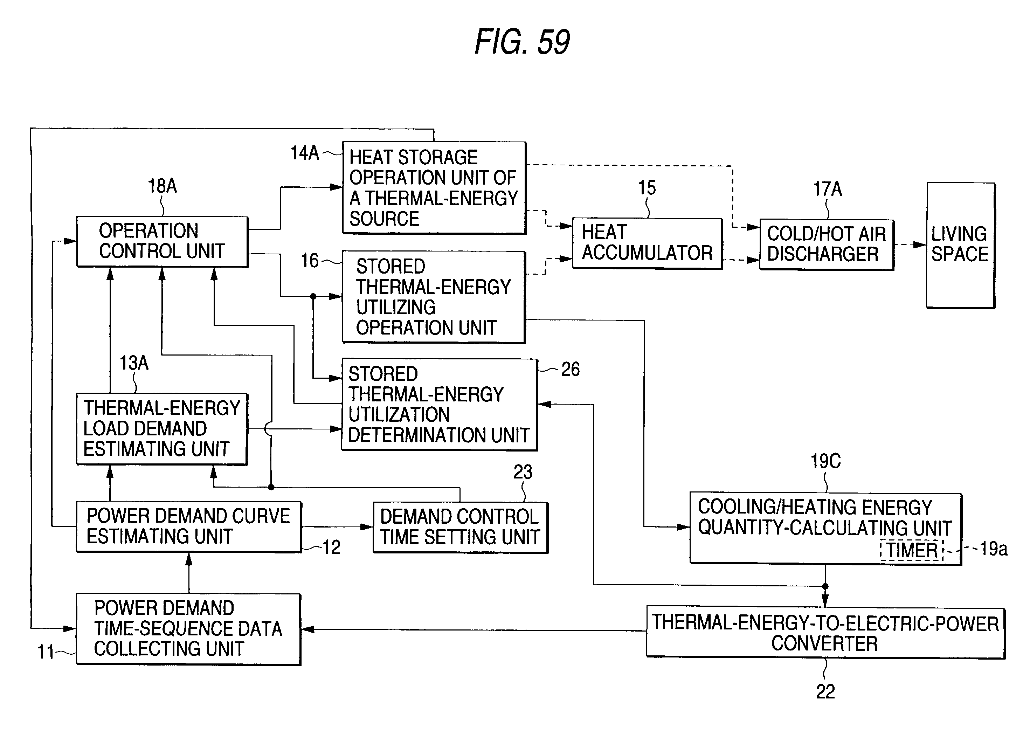

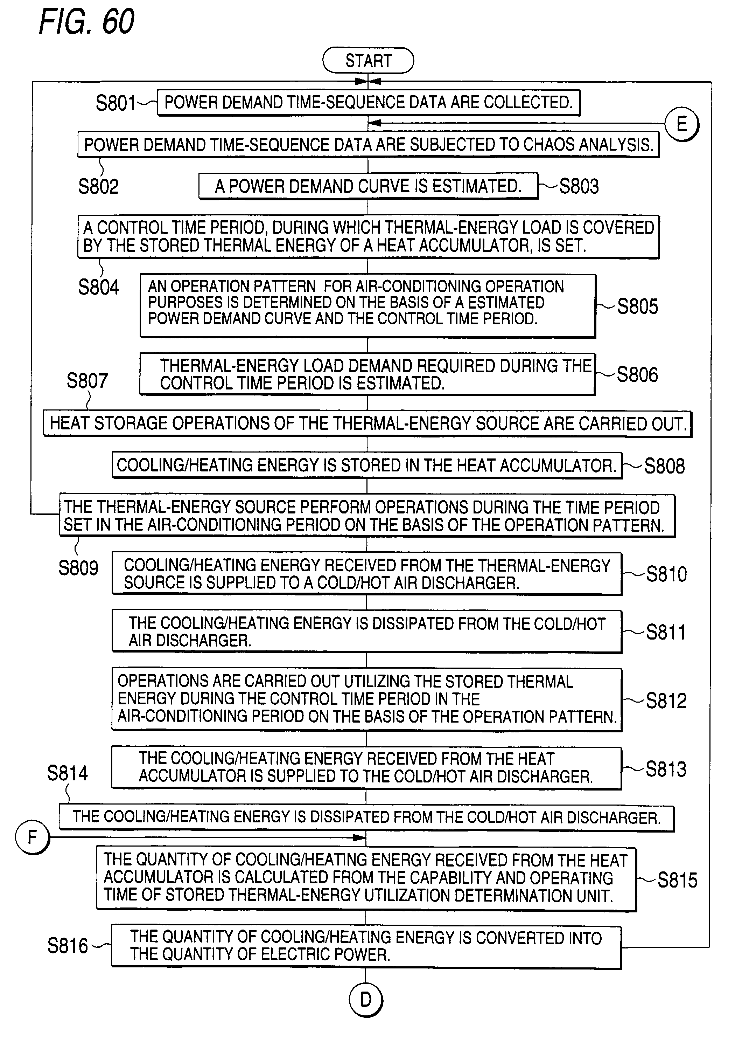

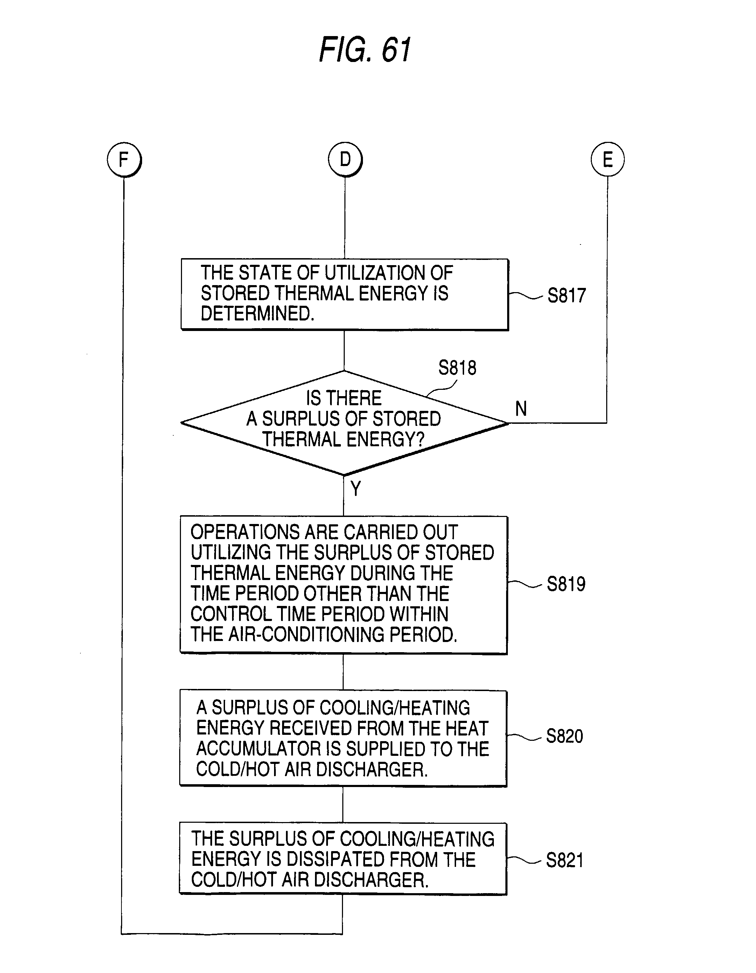

Fig. 59 is a block diagram of a heat storage air conditioner according to the present invention. Figs. 60 and 61 are flowcharts for use in describing processing operations of the heat storage air conditioner. In Fig. 59, the same elements as those of the previously-described eleventh embodiment shown in Fig. 44 are assigned the same reference numerals. Also in the fourteenth embodiment, the heat storage air conditioner has the function of being capable of setting the operation pattern to various forms by changing the control time period using the demand control time setting unit. This function is the same as that previously described in the eleventh, twelfth, and thirteenth embodiments. Consequently, details of the setting of the operation pattern will be omitted here. Furthermore, the heat storage air conditioner has the function of being capable of setting the dissipating operation pattern to various forms that utilize a surplus of stored thermal energy by unit of the operation control unit. This function is the same as that previously described in the eleventh, twelfth, and thirteenth embodiments. Consequently, details of the setting of dissipating operation pattern that utilizes a surplus of stored thermal energy will also be omitted here.

In Fig. 59, reference numeral 11 designates a power demand time-sequence data collecting unit for collecting power demand time-sequence data. Reference numeral 12 designates a power demand curve estimating unit for estimating a power demand curve that is obtained by subjecting the power demand time-sequence data received from the power demand time-sequence data collecting unit 11 to Chaos Analysis which is one example of a method of analyzing the power demand time-sequence data. Reference numeral 23 designates a demand control time setting unit for setting a control time period during which thermal energy load is covered by the stored thermal energy of the heat accumulator 15 on the basis of the power demand curve. The demand control time setting unit has the function of being capable of setting the operation pattern to various forms. Reference numeral 13A designates thermal energy load demand estimating unit that estimates thermal energy load demand of the control time period on the basis of the time control period set by the demand control time setting unit 23 and the power demand curve estimated by the power demand curve estimating unit 12. Reference numeral 14A designates operation unit of a heat source that supplies cooling/heating energy. Reference numeral 15 designates a heat accumulator that stores the cooling/heating energy received from the operation unit 14A of the heat source. Reference numeral 16 designates stored heat utilizing operation unit for utilizing the thermal energy stored in the heat accumulator 15; and 17A, a cold/hot air discharger for dissipating the thermal energy stored in the heat accumulator 15 and/or the thermal energy received from the operation unit 14A of the heat source. Reference numeral 18A designates operation control unit for controlling the operation unit 14A and the stored heat utilizing operation unit 16. This operation control unit 18A also has the function of being capable of setting the dissipating operation pattern to various forms that utilize a surplus of stored thermal energy. In short, the operation control unit 18A has the functions (1), (2), and (3) previously described in the eleventh embodiment.

Reference numeral 19C designates cooling/heating energy quantity calculating unit that calculates the quantity of cooling/heating energy dissipated from the heat accumulator 15 through the cold/hot air discharger 17A, from the capability and operating time of the stored heat utilizing operation unit 16. Reference numeral 26 designates stored heat utilization determination unit that determines the state of utilization of the stored thermal energy during the control time period of the air-conditioning periods, from the quantity of cooling/heating energy calculated by the cooling/heating energy quantity calculating unit 19C and the thermal energy load demand estimated by the thermal energy load estimating unit 13A. The stored heat utilization determination unit 26 sends a result of the determination to the operation control unit 18A. Reference numeral 22 designates a heat-to-electric-power converter that converts the quantity of cooling or heating energy calculated by the cooling/heating energy quantity calculating unit 19C into the quantity of electric power, as well as sending the thus-converted electric power to the power demand time-sequence data collecting unit 11.

With reference to Fig. 59, the operation of the heat storage air conditioner of the fourteenth embodiment will be described on the basis of Figs. 60 and 61. The present embodiment will be described on the basis of the assumption that the air-conditioning operation pattern is set to the pattern shown in Fig. 47, and that the dissipation operation pattern that uses a surplus of stored thermal energy is set to the pattern shown in Fig. 51. When the heat storage air conditioner starts to operate, the power demand time-sequence data collecting unit 11 collects power demand time-sequence data in the time period during which a living space is air-conditioned (step 801). The power demand curve estimating unit 12 analyzes the power demand time-sequence data thus collected by the power demand time-sequence data collecting unit 11, using Chaos Analysis (step 802). As a result, a power demand curve during the air-conditioning period on the next day is estimated (step 803). Subsequently, the demand control time setting unit 23 previously sets the control time period during which thermal energy load is covered by the thermal energy stored in the heat accumulator 15, to a specific time period on the basis of the power demand curve estimated by the power demand curve estimating unit 12 (step 804). The operation control unit 18A determines the operation pattern (see Fig. 47) of the air-conditioning periods on the basis of the control time period and the estimated power demand curve (step 805). Simultaneously, the thermal energy load demand estimating unit 13A estimates thermal energy load on the basis of the control time period and the estimated power demand curve (step 806). The control time period that has been previously set to a specific time period by the demand control time setting unit 23 is made so as to be capable of being fixed or changed.

The operation control unit 18A controls the operation unit 14A of the heat source so as to cause the heat source to perform storage operations during the night in order to store the quantity of thermal energy, which is equivalent to the thermal energy load demand estimated by the thermal energy load demand estimating unit 13A, in the heat accumulator 15 through the cooling/heating energy path (step 807). Then, the water previously stored in the heat accumulator 15 changes to ice using cooling energy or to hot water using heating energy with lapse of time, whereby the resultant ice or hot water is stored in the heat accumulator 15 (step 808).

During the air-conditioning periods on the next day, the operation unit 14A of the heat source is initially controlled in accordance with pattern B1 (see Fig. 47) of the operation patterns determined by the operation control unit 18A so as to cause the heat source to perform operations (step 809). The cooling/heating energy of the heat source is directly supplied to the cold/hot air discharger 17A through the cooling/heating energy path (step 810). The time-sequence data on the quantity of electric power dissipated from the heat source at this time are supplied to the power demand time-sequence data collecting unit 11. Consequently, the cooling/heating energy received from the heat source is dissipated from the cold/hot air discharger 17A (step 811), thereby making it possible to cool or heat the living space. The direct supply of cooling/heating energy to the cold/hot air discharger 17A from the heat source is carried out immediately before the control time period within the air-conditioning period, as shown in Fig. 47. The supply of cooling/heating energy is temporarily suspended when the time control period commences.

When the control time period commences, the operation control unit 18A controls the stored heat utilizing operation unit 16 according to the pattern A of the operation patterns (see Fig. 47) so as to carry out dissipating operations (step 812). The cooling/heating energy of the heat accumulator 15 is supplied to the cold/hot air discharger 17A via the cooling/heating path (step 813). As a result, the cooling/heating energy received from the heat accumulator 15 is dissipated from the cold/hot air discharger 17A (step 814), thereby making it possible to cool or heat the living space. The cooling/heating energy calculating unit 19C calculates, in time sequence, the quantity of cooling energy of ice or heating energy of hot water supplied to the cold/hot air discharger 17A, from the capability and operating time of the stored heat utilization unit 16 (step 815). The data on the cooling/heating energy calculated in time sequence are input to the heat-to-electric-power converter 22. The data on the cooling/heating energy are converted into the data on the quantity of electric power by the heat-to-electric-power converter 22 (step 816). The time-sequence data on the quantity of electric power converted by the heat-to-electric-power converter 22 are supplied to the power demand time-sequence time-sequence data collecting unit 11. The thus-output data are collected again as power demand time-sequence data in the same manner as previously described in step 801.

When the control time period terminates, the control operation unit 18A stops the dissipating operations of the stored heat utilizing operation unit 16. The control operation unit 18A again controls the operation unit 14A of the heat source according to pattern B2 (see Fig. 47) of the operation patterns so as to cause the heat source to perform operations. The cooling/heating energy of the heat source is directly supplied to the cold/hot air discharger 17A through the cooling/heating energy path. The time-sequence data on the quantity of electric power dissipated from the heat source at this time are supplied to the power demand time-sequence data collecting unit 11. Consequently, the cooling/heating energy received again from the heat source is dissipated from the cold/hot air discharger 17A, thereby making it possible to cool or heat the living space. The re-supply of cooling/heating energy to the cold/hot air discharger 17A from the thermal-air discharger is carried out until the air-conditioning periods shown in Fig. 47 complete. The supply of cooling/heating energy is terminated when the time control period completes.

The stored heat utilization determination unit 26 determines the state of utilization of the stored thermal energy during the control time period of the air-conditioning periods, from the quantity of cooling/heating energy calculated by the cooling/heating energy quantity calculating unit 19C and the thermal energy load demand estimated by the thermal energy load estimating unit 13A (step 817). If there is a surplus of stored thermal energy after the dissipation of the stored thermal energy of the heat accumulator 15 (step 818), the operation control unit 18A is notified of the surplus of stored thermal energy. Upon notification of the surplus of stored thermal energy of the heat accumulator 15 by the stored heat utilization determination unit 26, the operation control unit 18A sets pattern Al (see Fig. 51) regarding a dissipating operation which utilizes the surplus of stored thermal energy, in the remaining time period after the control time period of the air-conditioning periods set by the demand control time setting unit 23. The operation control unit 18A controls the stored heat utilization determination unit 16 so as to perform dissipating operations based on the pattern Al together with the air-conditioning operation (pattern B2) of the heat source (step 819). The surplus of stored thermal energy of the heat accumulator 15 is supplied to the cold/hot air discharger 17A via the cooling/heating energy path (step 820). The surplus of stored cooling/heating energy received from the heat accumulator 15 is dissipated from the cold/hot air discharger 17A (step 821). The thus-dissipated cooling/heating energy is utilized in cooling or heating the living space.

If it has been determined in step 818 that there is not any surplus of stored thermal energy after the dissipation of thermal energy from the heat accumulator 15, return to step 802 takes place. The power demand curve estimating unit 12 again analyzes the power demand time-sequence data collected by the power demand time-sequence data collecting unit 11, using Chaos Analysis.

The surplus of stored thermal energy received from the heat accumulator 15 is dissipated from the cold/hot air discharger 17A in step 821, return to step 815 takes place. The cooling/heating energy quantity calculating unit 19C calculates, in time sequence, the quantity of cooling energy of ice or heating energy of hot water that corresponds to the surplus of stored thermal energy supplied to the cold/hot air discharger 17A. The quantity of cooling/heating energy that corresponds to the surplus of stored thermal energy and has been calculated in time sequence, is converted into the data on the quantity of electric power in step 816. The thus-converted data are supplied to the power demand time-sequence data collecting unit 11 and are collected again as the power demand time-sequence data. The same processing as has been previously described is repeated hereinbelow.

A control time period during which heat demand is covered by the stored thermal energy of the heat accumulator is set on the basis of the power demand curve that is obtained as a result of analysis of previous power demand time-sequence data. Thermal energy load demand required during the control time period is estimated on the basis of the power demand curve and the control time period. The control operation unit 18A controls the operation unit 14A and the stored heat utilizing operation unit 16 on the basis of the power demand curve and the control time period, whereby the stored thermal energy of the heat accumulator 15 and/or the thermal energy of the heat source are dissipated from the cold/hot air discharger 17A. For these reasons, it is possible to use an appropriate quantity of electric power in producing thermal energy to be stored during the night as well as sufficiently maintaining the amenity of the living space. Further, the stored thermal energy can be prevented from running short or becoming excessive during the air-conditioning periods. Even if the stored thermal energy runs short or becomes excessive, the shortage or surplus of the thermal energy can be reduced.

The stored thermal energy utilization determination unit 26 determines whether or not there is a surplus of stored thermal energy after the dissipation of stored thermal energy of the heat accumulator 15 during the control time period at the time of air-conditioning operation. Therefore, if there arises a surplus of stored thermal energy, that surplus of stored thermal energy can be effectively utilized at the time of air-conditioning operations without natural diffusion of the surplus of stored thermal energy to the outside. Consequently, the amenity of the living space can be sufficiently maintained.

The cooling/heating energy calculating unit 19C calculates the quantity of cooling energy of ice or heating energy of hot water supplied to the cold/hot air discharger 17A from the heat accumulator 15, from the capability and operating time of the stored heat utilization unit 16. Consequently, the need for a temperature sensor and a water level sensor can be eliminated, and the cost of the heat storage air conditioner can be reduced accordingly.

The eleventh through fourteenth embodiments have previously been described, using an example of operation pattern for air-conditioning operation purposes, wherein the heat source starts to operate first at the beginning of the air-conditioning operation. However, it is also possible to adopt an operation pattern in which a heat accumulator performs dissipating operations first at the beginning of the air-conditioning operation. Such an operation pattern is particularly effective as a heating pattern for use in the winter season.

The previously-described ninth through fourteenth embodiments have been described on the basis of the example of a cooling/heating system that utilizes the thermal energy stored in the form of ice. However, it goes without saying that the present invention can be applied to a system which utilizes the thermal energy stored in the form of water (i.e., a system which stores cooling energy in the form of cold water) or a cooling-only system.

The previously-described ninth through fourteenth embodiments have been described on the basis of the example in which Chaos Analysis is used as a method of estimating a power demand curve for the next day by analyzing the previous power demand time-sequence data. Needless to say, the power demand curve on the next day may be estimated by use of a neural network.

### FIFTEENTH EMBODIMENT

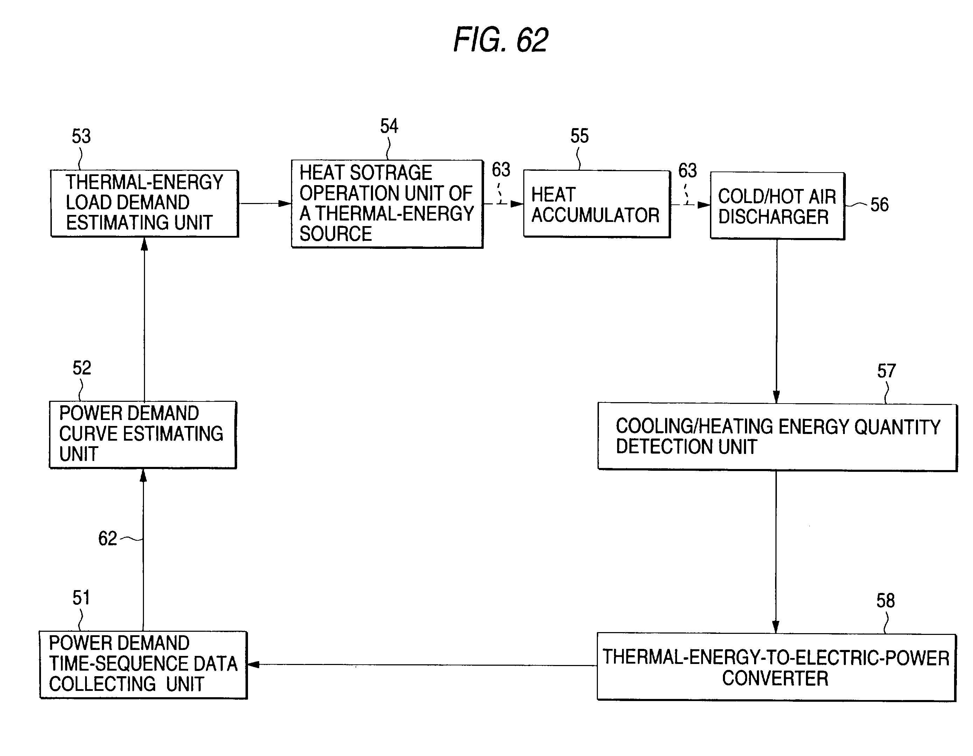

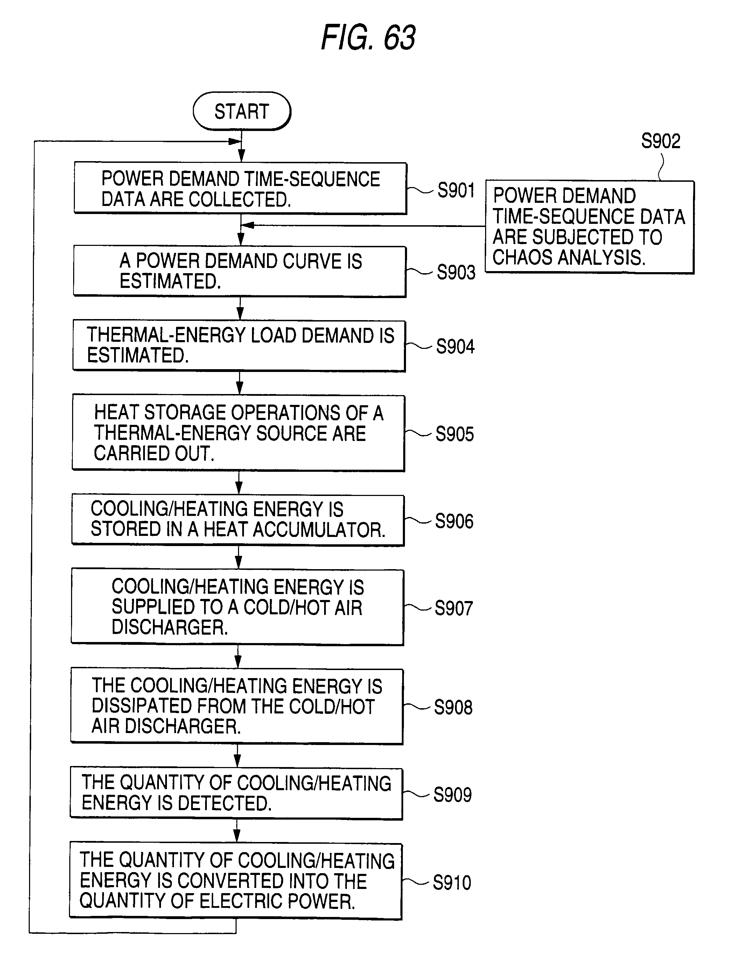

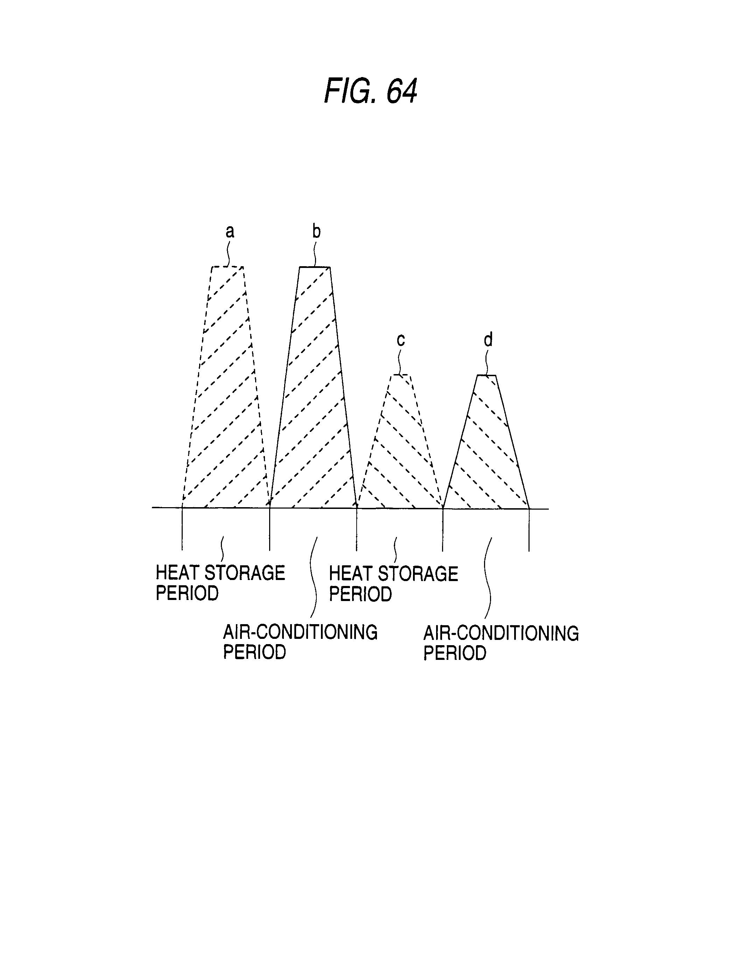

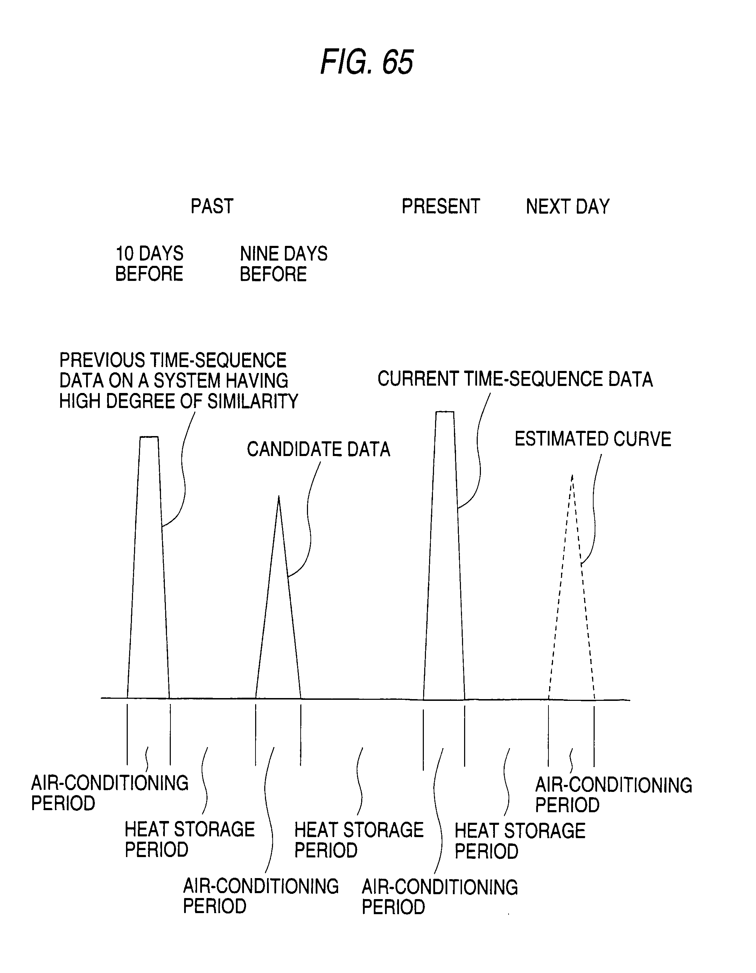

With reference to Figs. 62 through 65, a heat storage air conditioner of the present invention and a heat storage estimating method of the present invention will be described. Fig. 62 is a block diagram of a heat storage air conditioner according to a fifteenth embodiment of the present invention. Fig. 63 is a flowchart for describing a heat storage estimating method as well as the processing and operations of the heat storage air conditioner of the fifteenth embodiment. Fig. 64 is an example of repetitive heat quantity pattern used in the heat storage air conditioner of the fifteenth embodiment. Fig. 65 is a graph showing time-sequence data for use in describing a method of estimating a power demand curve for the next day.

In Fig. 62, reference numeral 51 designates a power demand time-sequence data collecting unit for collecting power demand time-sequence data; 52 designates a power demand curve estimating unit for estimating the power demand curve obtained by adoption of Chaos Analysis, which is one example of a method of analyzing the power demand time-sequence data; 53 designates thermal energy load demand estimating unit that estimates thermal energy load demand from the power demand curve; 54 designates heat storage operation unit of a heat source that stores the quantity of thermal energy equivalent to the thermal energy load demand in a heat accumulator 55 through a cooling/heating energy path 63; 56 designates a cold/hot air discharger for discharging the thermal energy stored in the heat accumulator 55; and 57 designates a cooling/heating energy quantity detection unit for detecting the quantity of cooling/heating energy discharged from the cold/hot air discharger 56. The quantity of cooling/heating energy discharged from the cold/hot air discharger 56 is detected by unit of, e.g., a temperature sensor and a timer. Reference numeral 58 designates a heat-to-electric-power converter that converts the quantity of cooling or heating energy into the quantity of electric power. Reference numeral 62 designates an information signal path.

With reference to Figs. 62 and 64, the operation of the heat storage air conditioner and the heat storage estimating method of the fifteenth embodiment will be described on the basis of Fig. 63. When the heat storage air conditioner starts to operate, the power demand time-sequence data collecting unit 51 collects power demand time-sequence data in the time period during which a living space is air-conditioned (step 901). The power demand curve estimating unit 52 analyzes the power demand time-sequence data thus collected by the power demand time-sequence data collecting unit 51 using Chaos Analysis (step 902), whereby a power demand curve during the air-conditioning periods of the next day is estimated (step 903). The thermal energy load demand estimating unit 53 estimates the thermal energy load required during the cooling or heating periods of the next day, on the basis of the power demand curve estimated by the power demand curve estimating unit 52 (step 904).

The heat storage operation unit 54 of the heat source carries out the heat storage operation of the heat source in order to store the quantity of thermal energy, which is equivalent to the thermal energy load demand estimated by the thermal energy load demand estimating unit 53, in the heat accumulator 55 through the cooling/heating energy path 63 during the night (step 905). Then, the water previously stored in the heat accumulator 55 changes to ice using cooling energy or to hot water using heating energy with lapse of time, whereby the resultant ice or hot water is stored in the heat accumulator 55 (step 906).

The cooling energy of ice or the heating energy of hot water stored in the heat accumulator 55 is supplied to the cold/hot air discharger 56 through the cooling/heating energy path 63 during the air-conditioning periods of the next day (step 907). As a result, the thermal energy is discharged from the cold/hot air discharger 56 (step 908), which enables the living room to be cooled or heated. Gas or a liquid is used as a medium for transmitting the cooling energy of ice or the heating energy of hot water stored in the heat accumulator 55 to the cold/hot air discharger 56. The same also applies to sixteenth to nineteenth embodiments which will be described later. The cooling/heating energy quantity detection unit 57 detects the quantity of cooling energy of ice or the quantity of heating energy of hot water supplied to the cold/hot air discharger 56, in time sequence by unit of a temperature sensor and a timer (neither of them is shown in the drawings) (step 909). The data on the quantity of cooling/heating energy detected in time sequence is input to the heat-to-electric-power converter 58. Consequently, the data on the quantity of cooling/heating energy is converted into data on the quantity of electric power by unit of the heat-to-electric-power converter 58 (step 910). The time-sequence data on the quantity of electric power converted by the heat-to-electric-power converter 58 are supplied to the power demand time-sequence data collecting unit 51. The thus-received time-sequence data are collected again as the power demand time-sequence data in the same manner as has been previously described in step 901. The same processing as has been previously described is repeated hereinbelow.

The data on the quantity of thermal energy input to the heat-to-electric-power converter 58 may be the quantity of thermal energy that is obtained by thermally converting the quantity of ice or hot water in the heat accumulator 55. In short, the data on the quantity of cooling/heating energy can be obtained by reverse operation of the residual thermal energy that results from thermal conversion of the quantity of ice or hot water remaining in the heat accumulator 55. This example will be described more specifically in the seventeenth to nineteenth embodiments which will be described later.

In the repetitive heat quantity pattern shown in Fig. 64, heat storage quantity pattern "a" corresponds to heat quantity pattern "b" during air-conditioning periods of the next day. Further, heat storage quantity pattern "c" corresponds to heat quantity pattern "d" during the air-conditioning periods of the next day. By virtue of these heat quantity patterns, the stored thermal energy is prevented from running short or becoming excessive during the air-conditioning periods. For these reasons, it is possible to use an appropriate quantity of electric power in producing thermal energy to be stored during the night as well as to sufficiently maintain the amenity of the living space. The quantity of electric power required during the cooling or heating periods is totally covered by the quantity of stored thermal energy, which in turn makes it possible to reduce electricity costs to a much greater extent.

In step 905, the heat storage operation unit 54 of the heat source is set so as to complete the heat storage operation of the heat source immediately before the air-conditioning periods during which a cooling or heating operation is started. As a result, it is possible to effectively utilize the stored thermal energy of the heat accumulator 55 for carrying out an air-conditioning operation, i.e., a cooling or heating operation, before the cooling energy of ice or the heating energy of hot water stored in the heat accumulator 55 diffuses to the outside. Therefore, the quantity of thermal energy stored in the heat accumulator 55 is prevented from running short during the air-conditioning periods, which in turn enables the amenity of the living space to be sufficiently maintained. The same applies to the sixteenth to nineteenth embodiments which will be described later.

With reference to Fig. 65, the example in which a power demand curve for the next day is estimated by use of Chaos Analysis will be described. Fig. 65 shows the previous power demand time-sequence data and the current power demand time-sequence data.

In Fig. 65, for example, a local pattern of the previous power demand time-sequence data, which is most analogous to a local pattern of the current day's power demand time-sequence data obtained when the air-conditioning operation approaches completion, is extracted. If the local pattern of the power demand time-sequence data obtained ten days before is most analogous to the current day's local pattern, this local pattern is handled as a candidate for use in Chaos Analysis. Subsequently, where a power demand curve for the air-conditioning periods of the next day is estimated, the time-sequence data one day after the time-sequence data obtained ten days before, i.e., the power demand time-sequence data obtained nine days before, are handled as the power demand curve.

Alternatively, for example, a local pattern of the previous power demand time-sequence data, which is most analogous to a local pattern of the power demand time-sequence data at the beginning of the air condition operation, may be extracted. The same also applies to the sixteenth to nineteenth embodiments that will be described later.

### SIXTEENTH EMBODIMENT

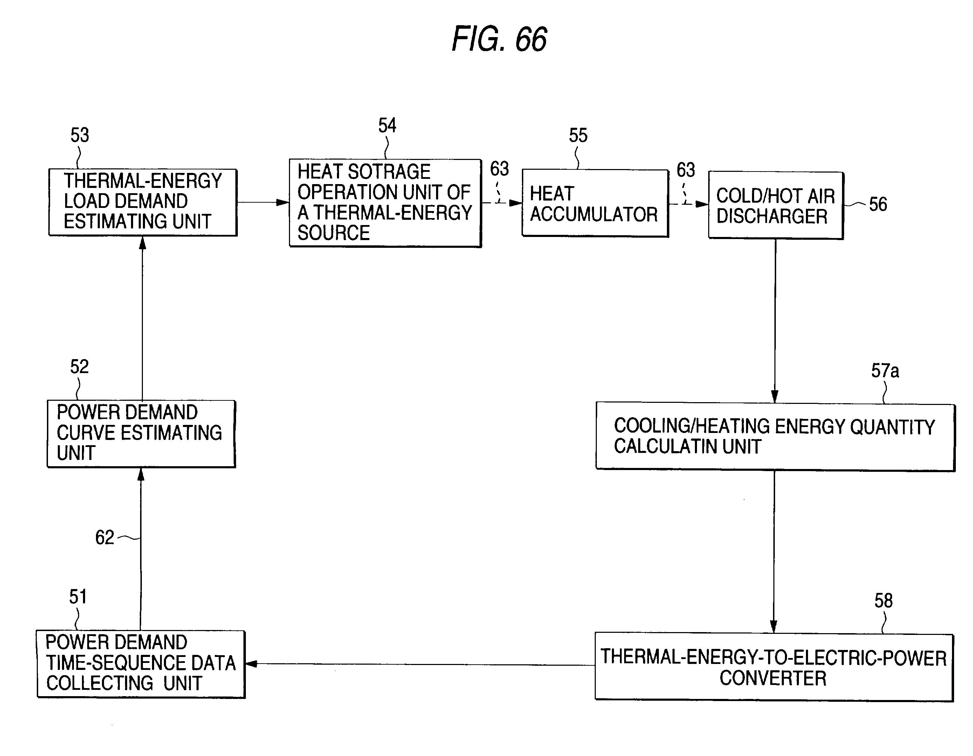

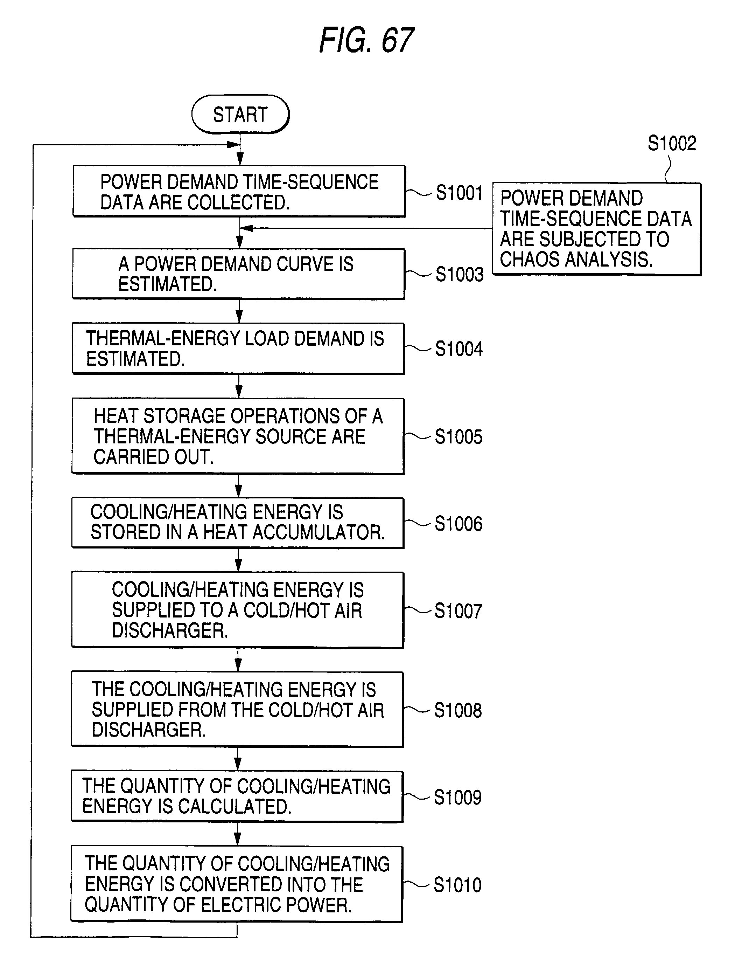

With reference to Figs. 66 and 67, a heat storage air conditioner of the present invention and a heat storage estimating method of the present invention will be described. Fig. 66 is a block diagram of the heat storage air conditioner of the sixteenth. Fig. 67 is a flowchart for describing the heat storage estimating method for use in the heat storage air conditioner as well as the processing and operations of the heat storage air conditioner. The elements shown in Fig. 66 that are the same as those used in the previously-described fifteenth embodiment shown in Fig. 62 are assigned the same reference numerals.

In Fig. 66, reference numeral 51 designates a power demand time-sequence data collecting unit for collecting power demand time-sequence data; 52 designates a power demand curve estimating unit for estimating the power demand curve obtained by adoption of Chaos Analysis, which is one example of a method of analyzing the power demand time-sequence data; 53 designates thermal energy load demand estimating unit that estimates thermal energy load demand from the power demand curve; 54 designates heat storage operation unit of the heat source that stores the quantity of thermal energy equivalent to the thermal energy load demand in a heat accumulator 55 through a cooling/heating thermal energy path 63; 56 designates a cold/hot air discharger for discharging the thermal energy stored in the heat accumulator 55; and57a designates cooling/heating energy quantity calculating unit for calculating the quantity of cooling/heating energy discharged from the cold/hot air discharger 56. The quantity of cooling/heating energy discharged from the cold/hot air discharger 56 is calculated from, e.g., the performance and operating time of the cold/hot air discharger 56. Reference numeral 58 designates a heat-to-electric-power converter that converts the quantity of cooling or heating energy into the quantity of electric power. Reference numeral 62 designates an information signal path.

With reference to Fig. 66, the operation of the heat storage air conditioner and the heat storage estimating method of the sixteenth will be described on the basis of Fig. 67. When the heat storage air conditioner starts to operate, the power demand time-sequence data collecting unit 51 collects power demand time-sequence data in the time period during which a living space is air-conditioned (step 1001). The power demand curve estimating unit 52 analyzes the power demand time-sequence data thus collected by the power demand time-sequence data collecting unit 51 using Chaos Analysis (step 1002), whereby a power demand curve during the air-conditioning periods of the next day is estimated (step 1003). The thermal energy load demand estimating unit 53 estimates the thermal energy load required during the cooling or heating periods on the basis of the power demand curve estimated by the power demand curve estimating unit 52 (step 1004).

The heat storage operation unit 54 of the heat source carries out the heat storage operation of the heat source in order to store the quantity of thermal energy, which is equivalent to the thermal energy load demand estimated by the thermal energy load demand estimating unit 53, in the heat accumulator 55 through the cooling/heating energy path 63 during the night (step 1005). Then, the water previously stored in the heat accumulator 55 changes to ice using cooling energy or to hot water using heating energy with lapse of time, whereby the resultant ice or hot water is stored in the heat accumulator 55 (step 1006).

The cooling energy of ice or the heating energy of hot water stored in the heat accumulator 55 is supplied to the cold/hot air discharger 56 through the cooling/heating energy path 63 during the air-conditioning periods of the next day (step 1007). As a result, the thermal energy is discharged from the cold/hot air discharger 56 (step 1008), which enables the living room to be cooled or heated. The cooling/heating energy quantity calculating unit57a calculates the quantity of cooling energy of ice or the quantity of heating energy of hot water supplied to the cold/hot air discharger 56, from the capability and operating time of the cold/hot air discharger 56 in time sequence (step 1009). The data on the quantity of cooling/heating energy calculated in time sequence is input to the heat-to-electric-power converter 58. Consequently, the data on the quantity of cooling/heating energy is converted into data on the quantity of electric power by unit of the heat-to-electric-power converter 58 (step 1010). The time-sequence data on the quantity of electric power converted by the heat-to-electric-power converter 58 are supplied to the power demand time-sequence data collecting unit 51. The thus-received time-sequence data are collected again as the power demand time-sequence data in the same manner as has been previously described in step 1001. The same processing as has been previously described is repeated hereinbelow.

In heat storage air conditioner of the sixteenth, the stored thermal energy is prevented from running short or becoming excessive during the air-conditioning periods. For these reasons, it is possible to use an appropriate quantity of electric power in producing thermal energy to be stored during the night as well as to sufficiently maintain the amenity of the living space. The quantity of electric power required during the cooling or heating periods is totally covered by the quantity of stored thermal energy, which in turn makes it possible to reduce electricity costs to a much greater extent. Further, the quantity of cooling energy of ice or heating energy of hot water supplied to the cold/hot air discharger 56 is calculated from the capability and operating time of the cold/hot air discharger 56 in time sequence by unit of the cooling/heating energy quantity calculating unit57a. The need for the temperature sensor can be eliminated, and the cost of the heat storage air conditioner can be reduced accordingly.

### SEVENTEENTH EMBODIMENT

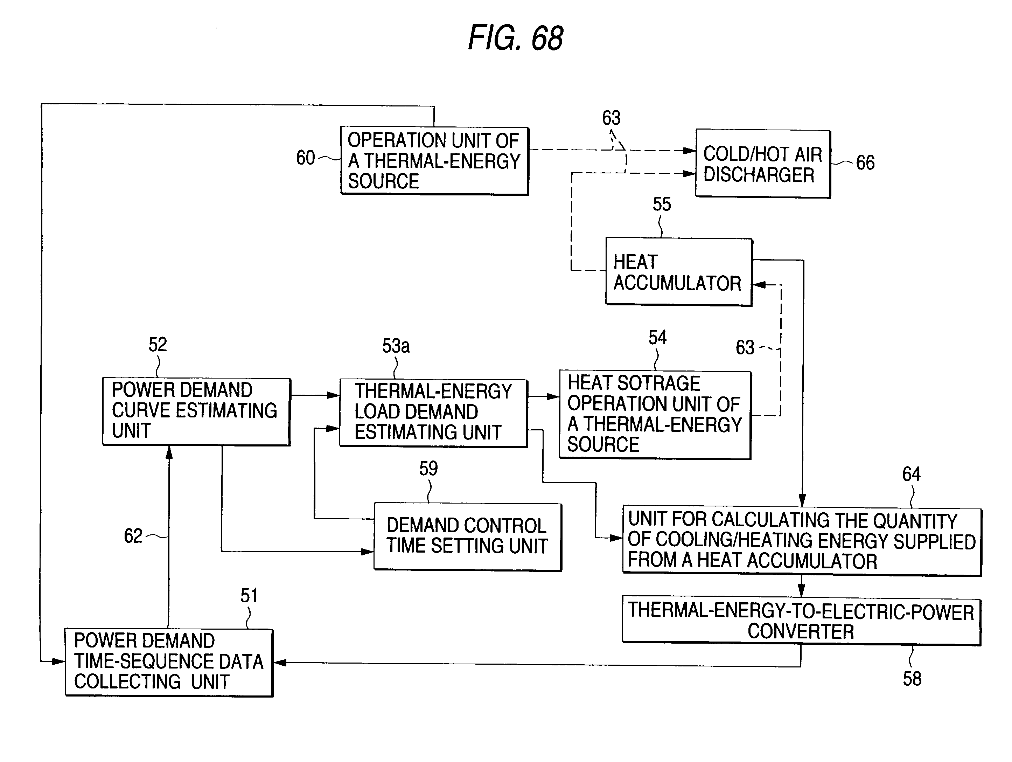

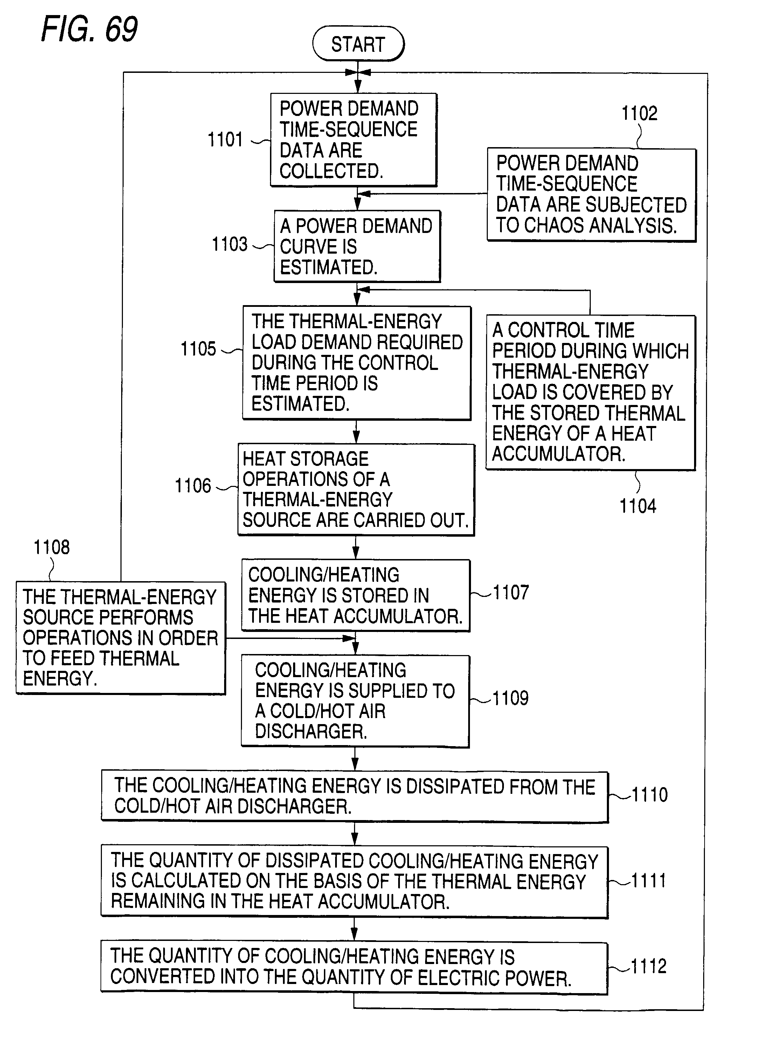

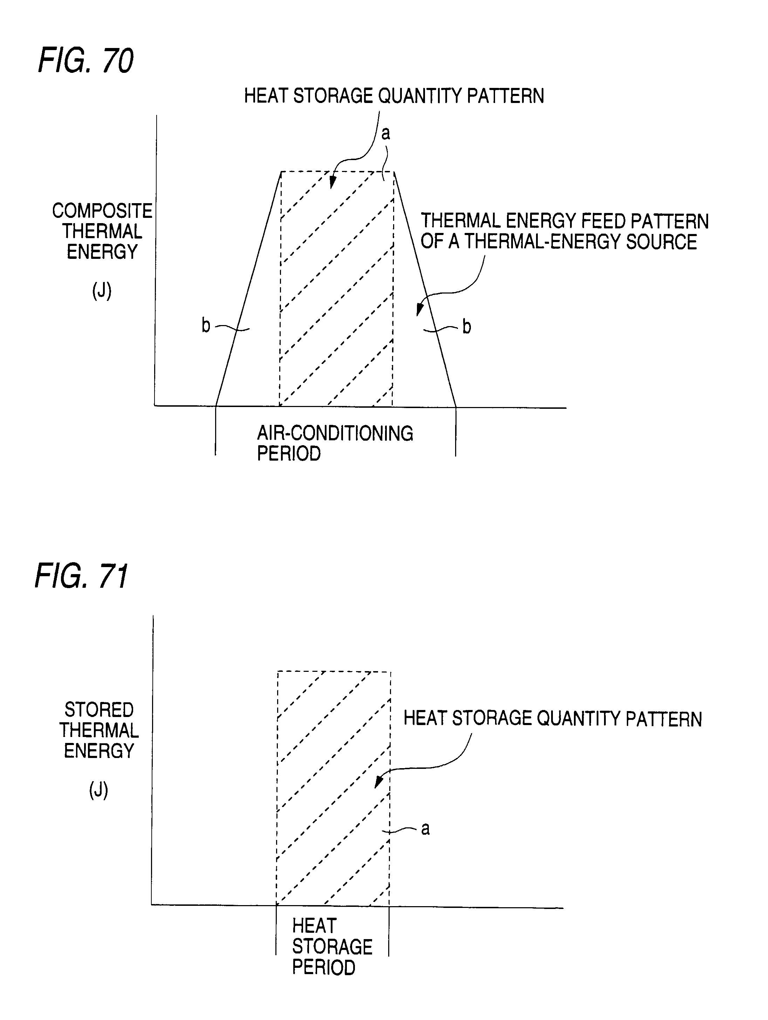

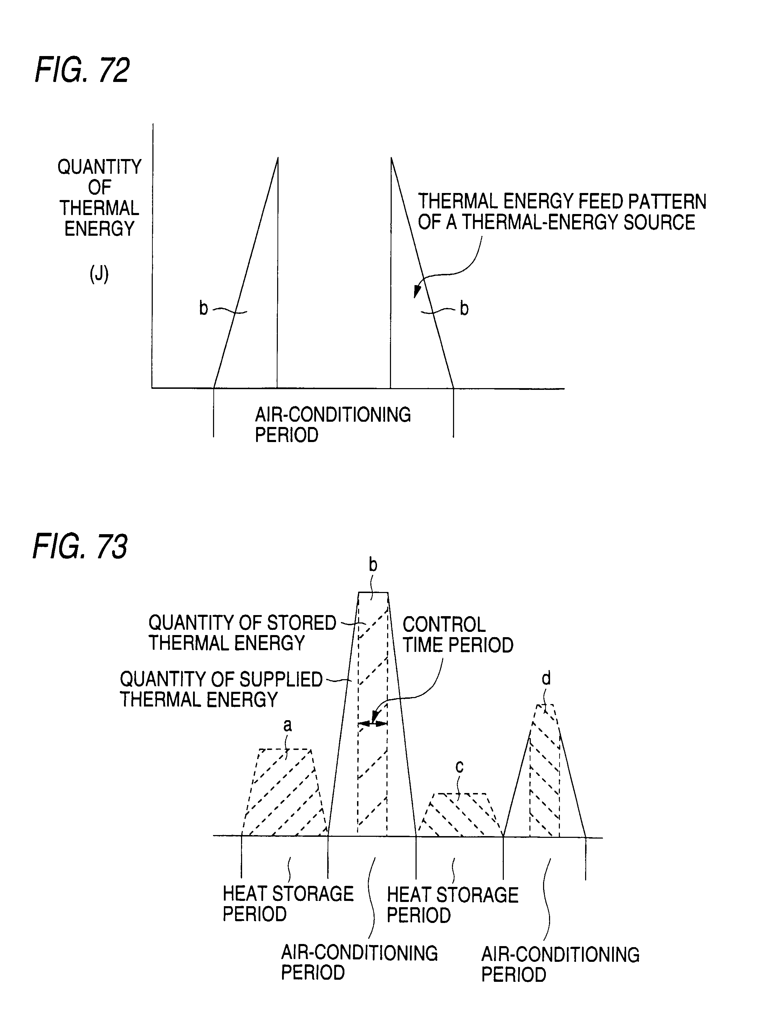

With reference to Figs. 68 through 73, a heat storage air conditioner of the present invention and a heat storage estimating method of the present invention will be described. Fig. 68 is a block diagram of the heat storage air conditioner of the seventeenth embodiment. Fig. 69 is a flowchart for describing the heat storage estimating method for use in the heat storage air conditioner as well as the processing and operations of the heat storage air conditioner. Fig. 70 is a graph of an example of a composite heat quantity pattern that consists of a pattern of the quantity of thermal energy to be stored and a pattern of the quantity of thermal energy to be supplied used in the heat storage air conditioner of the seventeenth embodiment. Fig. 71 is a graph showing a pattern of the quantity of thermal energy to be stored corresponding to a hatched area of the composite heat quantity pattern shown in Fig. 70. Fig. 72 is a graph showing the pattern of thermal energy to be supplied corresponding to outlined portions of the composite heat quantity pattern shown in Fig. 70. Fig. 73 is a repetitive heat quantity pattern of the heat storage air conditioner of the seventeenth embodiment. The elements shown in Fig. 68 that are the same as those used in the previously-described fifteenth embodiment shown in Fig. 62 are assigned the same reference numerals.

In Fig. 68, reference numeral 51 designates a power demand time-sequence data collecting unit for collecting power demand time-sequence data; 52 designates a power demand curve estimating unit for estimating the power demand curve obtained by adoption of Chaos Analysis, which is one example of a method of analyzing the power demand time-sequence data; 59 designates a demand control time setting unit for setting a control time period during which thermal energy load is covered by the thermal energy of the heat accumulator 55 on the basis of the power demand curve estimated by the power demand curve estimating unit 52; 53a designates thermal energy load demand estimating unit that estimates thermal energy load demand of the control time period estimated by the demand control time setting unit 59; 54 designates heat storage operation unit of the heat source that stores the quantity of thermal energy, which is equivalent to the thermal energy load demand estimated by the thermal energy load demand estimating unit 53, in a heat accumulator 55 through a cooling/heating thermal energy path 63; 56 designates a cold/hot air discharger for discharging the thermal energy stored in the heat accumulator 55; 14 designates cooling/heating energy quantity calculating unit that calculates the quantity of cooling/heating energy discharged from the heat accumulator 55 through the cold/hot air discharger 56, by inversion operation of the residual thermal energy obtained as a result of thermal conversion of the quantity of ice or hot water remaining in the heat accumulator 55; 58 designates a heat-to-electric-power converter that converts the quantity of cooling or heating energy into the quantity of electric power. Reference numeral 60 designates operation unit of the heat source that supplies the thermal energy to the cold/hot air discharger 56 from a heat source other than the heat accumulator 55 during a preset time period within the air-conditioning periods and supplies the quantity of electric power obtained at this time to the power demand time-sequence data collecting unit 51. Reference numeral 62 designates an information signal path. An operation pattern of the operation unit 60 of the heat source during the air-conditioning periods and a pattern of the thermal energy supplied from the heat accumulator 55 are determined by operating method determination unit (not shown) on the basis of the control time period estimated by the demand control time period setting unit 59.

In the case of the thermal energy stored in the form of ice, it is necessary to detect cooling energy (latent heat) and heating energy (sensible heat) in order to obtain the quantity of ice or hot water remaining in the heat accumulator 55. In the present embodiment, a water level sensor is used for detecting the cooling energy (latent heat), whereas a temperature sensor is used for detecting the heating energy (sensible heat). The residual thermal energy corresponding to the quantity of remaining ice or hot water detected by these sensors is compared with the thermal energy load demand estimated by the thermal energy load demand estimating unit 53a on the previous day. As a result, the quantity of cooling or heating energy dissipated from the heat accumulator 55 through the cold/hot air discharger 56 is obtained.

With reference to Figs. 68, and 70 through 73, the operation of the heat storage air conditioner and the heat storage estimating method of the seventeenth embodiment will be described on the basis of Fig. 69. When the heat storage air conditioner starts to operate, the power demand time-sequence data collecting unit 51 collects power demand time-sequence data in the time period during which a living space is air-conditioned (step 1101). The power demand curve estimating unit 52 analyzes the power demand time-sequence data thus collected by the power demand time-sequence data collecting unit 51 using Chaos Analysis (step 1102), whereby a power demand curve in the air-conditioning periods of the next day is estimated (step 1103). The demand control time setting unit 59 previously sets the control time period during which thermal energy load is covered by the thermal energy stored in the heat accumulator 55, to a specific time period on the basis of the power demand curve estimated by the power demand curve estimating unit 52 (step 1104). The thermal energy load demand estimating unit 53a estimates the thermal energy load required in the thus-set control time period (step 1105). The control time period that has been previously set to a specific time period by the demand control time setting unit 59 is made so as to be capable of being fixed or changed.

The heat storage operation unit 54 of the heat source carries out the heat storage operation of the heat source in order to store the quantity of thermal energy, which is equivalent to the thermal energy load demand estimated by the thermal energy load demand estimating unit 53a, in the heat accumulator 55 through the cooling/heating energy path 63 during the night (step 1106). Then, the water previously stored in the heat accumulator 55 changes to ice using cooling energy or to hot water using heating energy with lapse of time, whereby the resultant ice or hot water is stored in the heat accumulator 55 (step 1107).

During the air-conditioning periods of the next day, the operation unit 60 of the heat source initially operates according to the operation pattern determined by the operating method determination unit (not shown). The resultant thermal energy of the heat source is supplied to the cold/hot air discharger 56 through the cooling/heating energy path 63. In addition, the time-sequence data on the quantity of electric power output from the operation unit 60 of the heat source at this time is supplied to the power demand time-sequence data collecting unit 51 (step 1108). The operation of the operation unit 60 of the heat source continues immediately before the control time period within the air-conditioning periods, but it is stopped when the control time period commences. During the control time period, the cooling energy of ice or the heating energy of hot water stored in the heat accumulator 55 is supplied to the cold/hot air discharger 56 through the cooling/heating energy path 63 according to the pattern of the quantity of thermal energy to be supplied determined by the operating method determination unit (not shown) (step 1109). At this time, the heat accumulator 55 informs the cooling/heating energy calculating unit 14 of the quantity of remaining ice or hot water. Consequently, composite thermal energy is made using the thermal energy supplied from the cold/hot air discharger 56 by the operation unit 60 of the heat source and the thermal energy supplied from the heat accumulator 55 with time lag between them. The thus-produced composite thermal energy is dissipated (step 1110), which enables the living space to be cooled or heated.

When being informed of the quantity of remaining ice or hot water by the heat accumulator 55, the cooling/heating energy quantity calculating unit 14 thermally converts the thus-informed quantity of remaining ice or hot water, whereby residual thermal energy is obtained. The quantity of cooling energy of ice or heating energy of hot water supplied to the cold/hot air discharger 56 is calculated in time sequence by reverse operation of the residual thermal energy (step 1111). The data on the quantity of cooling or heating energy dissipated from the heat accumulator 55 that have been calculated in time sequence are input to the heat-to-electric-power converter 58. As a result, the data on the quantity of cooling/heating energy are converted into the data on the quantity of electric power by the heat-to-electric-power converter 58 (step 1112). The electric power time-sequence data converted by the heat-to-electric-power converter 58 are supplied to the power demand time-sequence data collecting unit 51. The electric power time-sequence data are collected again as the power demand time-sequence data in the same manner as has been previously described in step 1101. In short, the power demand time-sequence data collecting unit 51 collects the time-sequence data on the quantity of electric power received from the heat accumulator 55 converted by the heat-to-electric-power converter 58 as well as on the quantity of electric power output from the operation unit 60 of the heat source. The same processing as has been previously described is repeated hereinbelow.

In the repetitive heat quantity pattern shown in Fig. 73, heat storage quantity pattern "a" corresponds to heat quantity pattern "b" during a specific time period (i.e., the control time period) within the air-conditioning periods of the next day. Further, heat storage quantity pattern "c" corresponds to heat quantity pattern "d" during the control time period within the air-conditioning periods of the next day. By virtue of these heat quantity patterns, the stored thermal energy is prevented from running short or becoming excessive during the air-conditioning periods. For these reasons, it is possible to use an appropriate quantity of electric power in producing thermal energy to be stored during the night as well as to sufficiently maintain the amenity of the living space. The operations of the heat source are stopped during the control time period within the cooling or heating periods during which thermal energy load is covered by the quantity of thermal energy stored in the heat accumulator 55. Consequently, the running costs of the heat source are reduced, which in turn makes it possible to reduce electricity costs.

### EIGHTEENTH EMBODIMENT

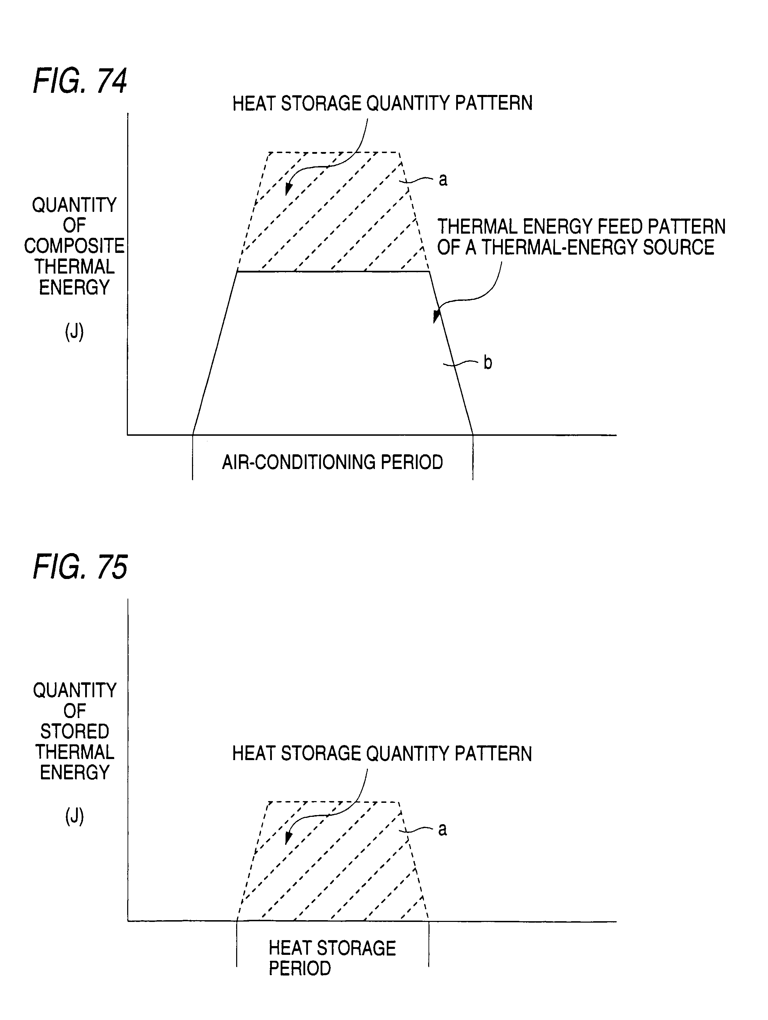

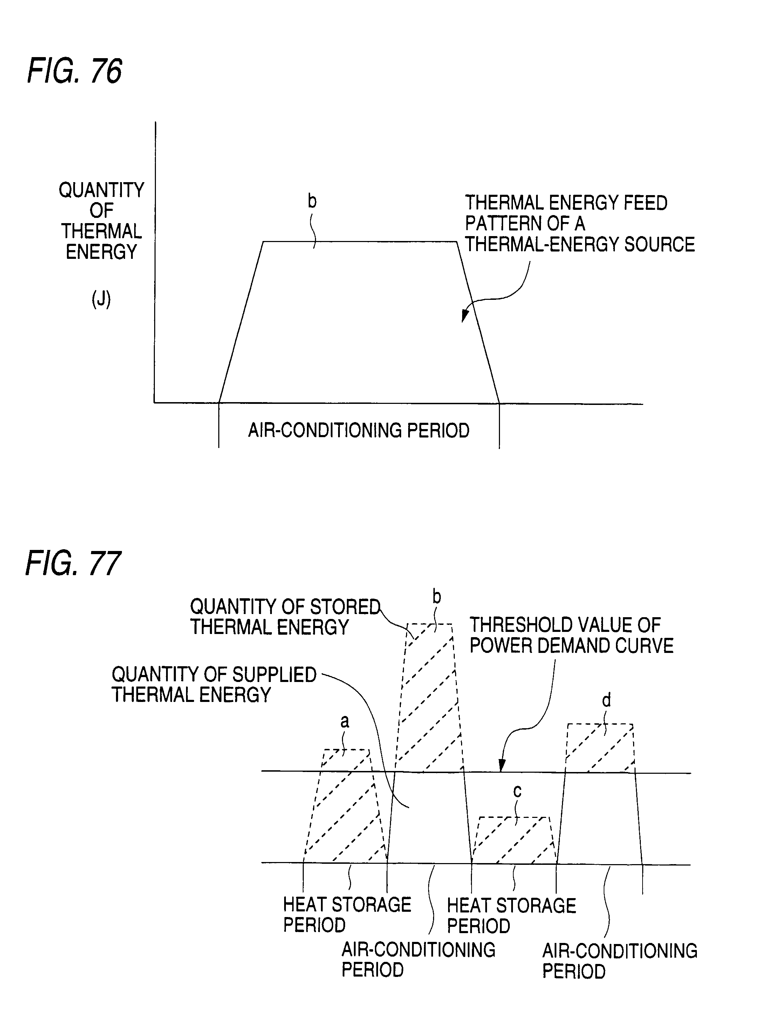

With reference to Figs. 74 through 77, a heat storage air conditioner according of the present invention and a heat storage estimating method of the present invention will be described. Fig. 74 is a graph of an example of a composite heat quantity pattern that consists of a pattern of the quantity of thermal energy to be stored and a pattern of the quantity of thermal energy to be supplied used in the heat storage air conditioner of the eighteenth embodiment. Fig. 75 is a graph showing the pattern of the quantity of thermal energy to be stored corresponding to a hatched area of the composite heat quantity pattern shown in Fig. 74. Fig. 76 is a graph showing the pattern of the quantity of thermal energy to be supplied corresponding to outlined portions of the composite heat quantity pattern shown in Fig. 74. Fig. 77 is a repetitive heat quantity pattern of the heat storage air conditioner of the eighteenth embodiment. The heat storage air conditioner of the eighteenth embodiment has basically the same configuration as that of the previously described seventeenth embodiment shown in Fig. 68. Therefore, Fig. 68 will be referred to during the course of the description of the present embodiment.

The heat storage air conditioner of the eighteenth embodiment is different from that of the previously described seventeenth embodiment in the following point: Specifically, the demand control time setting unit 59 sets the control time period during which thermal energy load is covered by the thermal energy of the heat accumulator 55 on the basis of the power demand curve estimated by the power demand curve estimating unit 52 shown in Fig. 68. The demand control time setting unit 59 is arranged so as to set a threshold value on the power demand curve as well as setting the control time period in the time period during which the power demand curve is in excess of the threshold value. The control time period is arranged so as to be capable of being fixed or changed when the demand control time setting unit 59 sets the threshold value on the power demand curve.

By virtue of the demand control time setting unit 59 that sets the above-described control time period, the repetitive heat quantity pattern as shown in Fig. 77 is obtained. In the repetitive heat quantity pattern shown in Fig. 77, heat storage quantity pattern "a" corresponds to heat quantity pattern "b" during the control period within the air-conditioning periods of the next day during which the heat storage quantity pattern is in excess of the threshold value. Further, heat storage quantity pattern "c" corresponds to heat quantity pattern "d" during the control time period within the air-conditioning periods of the next day during which the heat storage quantity pattern is in excess of the threshold value. By virtue of these heat quantity patterns, the stored thermal energy is prevented from running short or becoming excessive during the air-conditioning periods. For these reasons, it is possible to use an appropriate quantity of electric power in producing thermal energy to be stored during the night as well as to sufficiently maintain the amenity of the living space. Further, the contract power demand required during the cooling or heating periods can be reduced, which makes it possible to reduce electricity costs.

### NINETEENTH EMBODIMENT

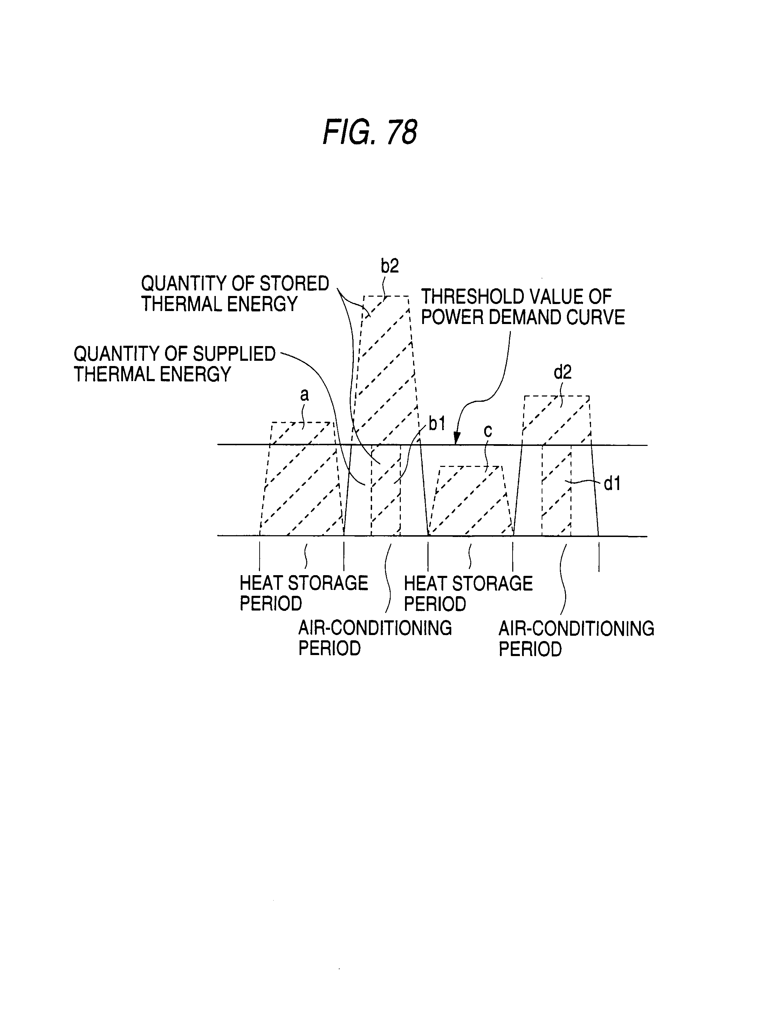

With reference to Fig. 78, a heat storage air conditioner of the present invention and a heat storage estimating method of the present invention will be described. Fig. 78 is an example of repetitive heat quantity pattern for use in describing a control time period setting method which is carried out by the demand control time setting unit of the heat storage air conditioner of the nineteenth embodiment. Also in the nineteenth embodiment, the heat storage air conditioner has basically the same configuration as that of the seventeenth embodiment shown in Fig. 68. Therefore, Fig. 68 will be referred to during the course of the description of the present embodiment.

The heat storage air conditioner of the nineteenth embodiment is different from that of the previously described seventeenth and eighteenth embodiments in the following point: Specifically, the demand control time setting unit 59 sets the control time period during which thermal energy load is covered by the thermal energy of the heat accumulator 55 on the basis of the power demand curve estimated by the power demand curve estimating unit 52 shown in Fig. 68. This demand control time setting unit 59 is arranged so as to set a threshold value on the power demand curve as well as setting the control time period in the time period during which the power demand curve is in excess of the threshold value. The control time period is arranged so as to be capable of being fixed or changed when the demand control time setting unit 59 sets the threshold value on the power demand curve.

By virtue of the demand control time setting unit 59 that sets the above-described control time period, the repetitive heat quantity pattern as shown in Fig. 78 is obtained. In the repetitive heat quantity pattern shown in Fig. 78, heat storage quantity pattern "a" corresponds to heat quantity patterns "b1" and "b2" during the control period within the air-conditioning periods of the next day. Further, heat storage quantity pattern "c" corresponds to heat quantity patterns "d1" and "d2" in the control time period during the air-conditioning periods of the next day. By virtue of these heat quantity patterns, the stored thermal energy is prevented from running short or becoming excessive during the air-conditioning periods. For these reasons, it is possible to use an appropriate quantity of electric power in producing thermal energy to be stored during the night as well as to sufficiently maintain the amenity of the living space. Further, the operations of the heat source are stopped during the control time period of the cooling or heating periods (the time periods "b1" and "d1" of the thermal energy quantity pattern) during which thermal energy load is covered by the thermal energy of the heat accumulator 55 to such an extent as not to exceed the threshold value. As a result, the contract power demand can be reduced, and electricity costs can be reduced to a much greater extent.

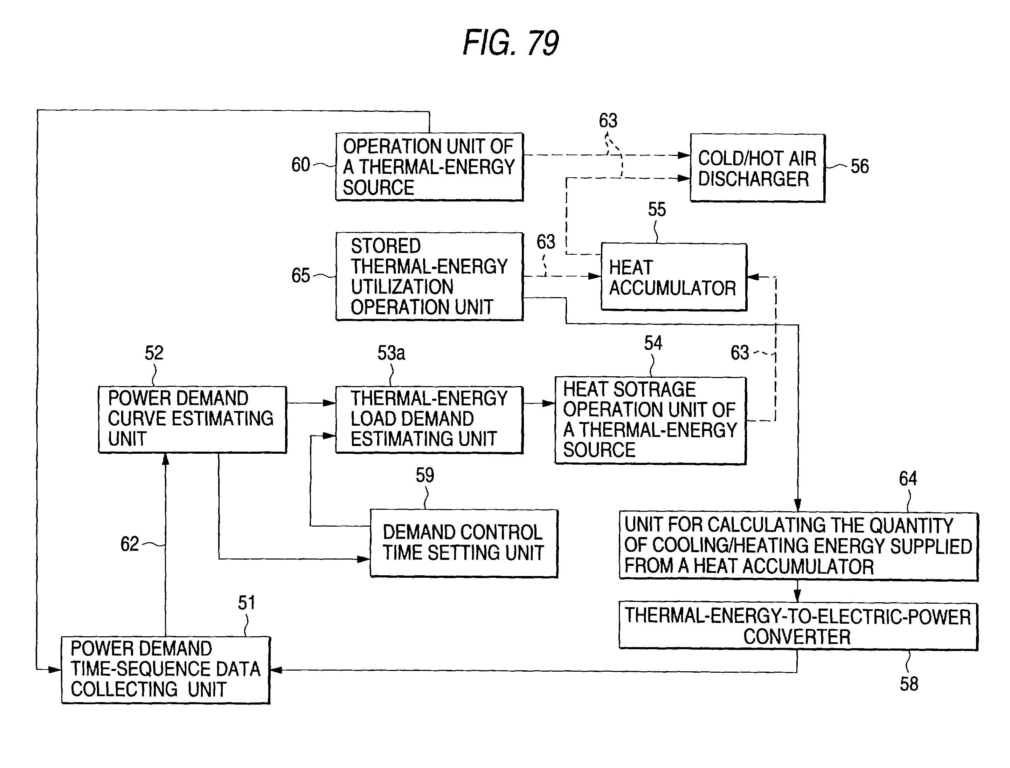

The previously-described seventeenth to nineteenth embodiments have been described on the basis of the example in which the quantity of cooling/heating energy dissipated from the heat accumulator 55 through the cold/hot air discharger 56 is obtained by reverse operation of the residual thermal energy resulting from thermal conversion of ice or hot water remaining in the heat accumulator 55. However, the technique of obtaining the quantity of cooling/heating energy is not limited to the above-described method. For instance, the quantity of cooling/heating energy may be calculated from the capability and operating time of an stored heat transporting unit 65 that is actuated during the control time period of the air-conditioning periods, as shown in Fig. 79.

## Claims

1. A heat storage air conditioning apparatus comprising:
power demand time-sequence data collecting means (11) for collecting time-sequence data on demand for power;
power demand curve estimating means (12) for estimating a power demand curve obtained as a result of analysis of the power demand time-sequence data collected by said power demand time-sequence data collecting means (11);
operation means of a thermal-energy source (14) for feeding cooling/heating energy;
heat accumulating means (15) for storing the cooling/heating energy supplied from said operation means therein;
cold/hot air discharging means (17) for discharging the thermal energy stored in said heat accumulating means;
characterized by
thermal energy load demand estimating means (13) for estimating thermal energy load demand from the power demand curve estimated by the power demand curve estimating means;
cooling/heating energy quantity recognizing means (19) for recognizing the quantity of cooling or heating energy dissipated from said cold/hot air discharging means; and
converting means (22) for converting the quantity of cooling/heating energy into the quantity of electric power, the converted quantity of electric power being supplied to said power demand time-sequence data collecting means (11).

2. A heat storage air conditioning apparatus according to claim 1, wherein said cooling/heating energy quantity recognizing means is detecting means for detecting the quantity of cooling or heating energy dissipated from said cold/hot air discharging means.

3. A heat storage air conditioning apparatus according to claim 1, wherein said cooling/heating energy quantity recognizing means is calculating means for calculating the quantity of cooling or heating energy dissipated from said cold/hot air discharging means.

4. A heat storage air conditioning apparatus according to claim 1, further comprising:
stored thermal-energy utilizing operation means for utilizing the thermal energy stored in said heat accumulating means; and
operation control means for controlling said thermal-energy storage operation means to cause said heat accumulating means to store the quantity of cooling/heating energy corresponding to the thermal-energy load demand on the basis of the thermal-energy load demand estimated by the thermal-energy load demand estimating means during the night, and for controlling the stored thermal-energy utilizing operation means to cause said heat accumulating means to supply the stored thermal energy to the cold/hot air discharger on the basis of the estimated power demand curve during air-conditioning periods.

5. A heat storage air conditioning apparatus according to claim 4, further comprising:
stored data amount determination means for determining the amount of data stored by the power demand time-sequence data collecting means and sending pseudo data to the power demand time-sequence data collecting means if a predetermined amount of stored data has not been reached yet;
wherein said power demand curve estimating means estimates a power demand curve by analyzing the pseudo data or the power demand time-sequence data collected by said power demand time-sequence data collecting means; and
said operation means of a thermal-energy source stores the thermal energy, which is equivalent to the thermal energy load demand estimated by said thermal energy load demand estimating means, said heat storage operation means being provided in a heat accumulating means of a heat source.

6. A heat storage air conditioning apparatus according to claim 1, further comprising:
demand control time-period setting means for setting a control time-period during which thermal-energy load is covered by the thermal energy stored in said heat accumulating means on the basis of the power demand curve estimated by said power demand curve estimating means; and
operation means of the thermal-energy source for feeding the quantity of thermal energy from other than said heat accumulating means during the time period previously set in an air-conditioning period, and for feeding the quantity of an electric power at this time period to said power demand time-sequence data collecting means;
wherein said cold/hot air discharging means discharges the thermal energy stored in said heat accumulating means and the heat supplied by said operation means of the thermal-energy source; and
said cooling/heating energy quantity recognizing means is cooling/heating energy quantity calculating means that calculates the quantity of cooling/heating energy, which is supplied from said heat accumulating means and is dissipated from the cold/hot air discharging means, from the quantity of thermal energy remaining in said heat accumulating means.

7. A heat storage air conditioning apparatus according to claim 1, further comprising:
demand control time setting means for setting a control time period during which thermal energy load is covered by the thermal energy of said heat accumulating means on the basis of the power demand curve estimated by said power demand curve estimating means;
stored thermal-energy utilizing operation means for utilizing the thermal energy stored in said heat accumulating means; and
operation control means for controlling the operation means of the thermal-energy source so as to cause said heat accumulating means to store the quantity of cooling/heating energy corresponding to the thermal-energy load demand on the basis of the thermal-energy load demand estimated by the thermal-energy load demand estimating means during the night; determining an operation pattern for use in air-conditioning periods on the basis of the estimated power demand curve and the control time period; that controls the operation means of the thermal-energy source so as to directly supply cooling/heating energy to the cold/hot air discharger on the basis of the operation pattern during a preset time period within the air-conditioning period; sending the quantity of electric power dissipated from the thermal-energy source at this time to the power demand time-sequence data collecting means; and controlling the stored thermal-energy utilizing operation means so as to supply the stored thermal energy of said heat accumulating means to the cold/hot air discharger during the control time period within the air-conditioning period;
wherein said thermal-energy load demand estimating means estimates thermal-energy load demand for use during the control time period on the basis of the control time period and the power demand curve;
said cold/hot air discharging means dissipates the thermal energy received from said heat accumulating means and/or the operation means of the thermal-energy source; and
said cooling/heating energy quantity recognizing means recognizes the quantity of cooling/heating energy, which has been received from said heat accumulating means and dissipated from said heat accumulating means, from the thermal energy remaining in said heat accumulating means.

8. A heat storage air conditioning apparatus according to claim 7, wherein said cooling/heating energy quantity recognizing means is detecting means for detecting the quantity of cooling or heating energy dissipated from said cold/hot air discharging means.

9. A heat storage air conditioning apparatus according to claim 7, wherein said cooling/heating energy quantity recognizing means is calculating means for calculating the quantity of cooling or heating energy dissipated from said cold/hot air discharging means.

10. A heat storage air conditioning apparatus according to claim 7, further comprising:
stored data amount determination means for determining the amount of data stored by said power demand time-sequence data collecting means, and sending pseudo data to said power demand time-sequence data collecting means if a predetermined amount of stored data has not been reached yet;
wherein said power demand curve estimating means estimates a power demand curve by analyzing the pseudo data or the power demand time-sequence data collected by the power demand time-sequence data collecting means.

11. A heat storage air conditioning apparatus according to claim 7, further comprising:
stored data amount determination means for determining the amount of data stored by the power demand time-sequence data collecting means; and outputing a data shortage signal as well as instructing said power demand time-sequence data collecting means to suspend an output to a control system if a predetermined amount has not been reached yet; and
forcible operation controlling means for controlling said operation means during air-conditioning periods to cause said operation means to directly supply cooling/heating energy to said cold/hot air discharging means if the data shortage signal is received from said stored data amount determination means, and sending the quantity of electric power dissipated from the thermal-energy source at this time to said power demand time-sequence data collecting means.

12. A heat storage estimating method comprising the steps of:
collecting time-sequence data on power demand (S101),
estimating a power demand curve (S107) by analyzing the power demand time-sequence data collected in said collecting step (S101) ;
characterized by the steps of
recognizing the quantity of cooling/heating energy that is equivalent to the quantity of thermal energy to be accumulated (S113) ;
converting the quantity of thermal energy to be accumulated, which is recognized in said recognizing step, into the quantity of electric power (S114) ;
taking the quantity of the power converted in said converting step as the power demand;
and
estimating thermal-energy load demand (S108) from the power demand curve estimated in said power demand curve estimating step (S107).

13. A heat storage estimating method according to claim 12, wherein, in said recognizing step, the quantity of cooling/heating energy that is equivalent to the quantity of thermal energy to be accumulated is detected.

14. A heat storage estimating method according to claim 12, wherein, in said recognizing step, the quantity of cooling/heating energy that is equivalent to the quantity of thermal energy to be accumulated is calculated.

15. A heat storage estimating method according to claim 12, wherein, said thermal-energy load demand estimating step comprising the steps of:
setting the control time period during which thermal-energy load is covered by the accumulated thermal energy, on the basis of the power demand curve estimated in said power demand curve estimating step; and
estimating thermal-energy load demand during the control time period set in the control time-period setting step.

## Patentansprüche

1. Wärmespeicherndes Klimagerät, welches aufweist:
Leistungsanforderungs-Zeitfolgedaten-Sammelmittel (11) zum Sammeln von Zeitfolgedaten über die Anforderung von Leistung;
Leistungsanforderungskurven-Schätzmittel (12) zum Schätzen einer Leistungsanforderungskurve, die als ein Ergebnis der Analyse der von den Leistungsanforderungs-Zeitfolgedaten-Sammelmitteln (11) gesammelten Leistungsanforderungs-Zeitfolgedaten erhalten wurde;
Operationsmittel einer Quelle (14) für thermische Energie zum Zuführen von Kühl/Heiz-Energie;
Wärmesammelmittel (15) zum Speichern der von den Operationsmitteln gelieferten Kühl/Heiz-Energie;
Ausgabemittel (17) für kalte/heiße Luft zur Abgabe der in den Wärmesammelmitteln gespeicherten thermischen Energie;
**gekennzeichnet** durch
Schätzmittel (13) für die Lastanforderung von thermischer Energie zum Schätzen der Lastanforderung für thermische Energie anhand der von den Lastanforderungskurven-Schätzmitteln geschätzten Energieanforderungskurve; Kühl/Heiz-Energiemengen-Erkennungsmittel (19) zum Erkennen der Menge der von den Abgabemitteln für kalte/heiße Luft abgegebenen Kühl- oder Heizenergie; und
Umwandlungsmittel (22) zur Umwandlung der Menge der Kühl/Heiz-Energie in die Menge von elektrischer Energie, wobei die umgewandelte Menge von elektrischer Energie zu den Leistungsanforderungs-Zeitfolgedaten-Sammelmitteln (11) geliefert wird.

2. Wärmespeicherndes Klimagerät nach Anspruch 1, worin die Kühl/Heiz-Energiemengen-Erkennungsmittel Erfassungsmittel zum Erfassen der Menge von Kühl- oder Heizenergie sind, die von den Abgabemitteln für kalte/heiße Luft abgegeben wurde.

3. Wärmespeicherndes Klimagerät nach Anspruch 1, worin die Kühl/Heiz-Energiemengen-Erkennungsmittel Berechnungsmittel zum Berechnen der Menge von Heiz- oder Kühlenergie sind, die von den Abgabemitteln für kalte/heiße Luft abgegeben wurde.

4. Wärmespeicherndes Klimagerät nach Anspruch 1, welches weiterhin aufweist:
Verwendungsoperationsmittel für gespeicherte thermische Energie zum Verwenden der in den Wärmesammelmitteln gespeicherten thermischen Energie; und
Operationssteuermittel zum Steuern der Operationsmittel zur Speicherung thermischer Energie, um zu bewirken, daß die Wärmesammelmittel die Menge von Kühl/Heiz-Energie entsprechend der Lastanforderung von thermischer Energie speichern auf der Grundlage der von den Lastanforderungs-Schätzmitteln für thermische Energie während der Nacht geschätzten Lastanforderung für thermische Energie, und zum Steuern der Verwendungsoperationsmittel für gespeicherte thermische Energie, um zu bewirken, daß die Wärmesammelmittel die gespeicherte thermische Energie zu den Abgabemitteln für kalte/heiße Luft während der Klimatisierungsperioden auf der Grundlage der geschätzten Leistungsanforderungskurve liefern.

5. Wärmespeicherndes Klimagerät nach Anspruch 4, welches weiterhin aufweist:
Speicherdatenmengen-Bestimmungsmittel zum Bestimmen der Menge von von den Leistungsanforderungs-Zeitfolgedaten-Sammelmitteln gespeicherten Daten und zum Senden von Pseudodaten zu den Leistungsanforderungs-Zeitfolgedaten-Sammelmitteln, wenn eine vorbestimmte Menge von gespeicherten Daten noch nicht erreicht wurde;
worin die Leistungsanforderungskurven-Schätzmittel eine Leistungsanforderungskurve schätzen durch Analyse der Pseudodaten oder der von den Leistungsanforderungs-Zeitfolgedaten-Sammelmitteln gesammelten Leistungsanforderungs-Zeitfolgedaten; und
worin die Operationsmittel einer Quelle für thermische Energie die thermische Energie speichern, welche äquivalent der von den Lastanforderungs-Schätzmitteln für thermische Energie geschätzten Lastanforderung für thermische Energie ist, wobei die Wärmespeicher-Operationsmittel in Wärmesammelmitteln einer Wärmequelle vorgesehen sind.

6. Wärmespeicherndes Klimagerät nach Anspruch 1, welches weiterhin aufweist:
Anforderungssteuer-Zeitperioden-Einstellmittel zum Einstellen einer Steuerzeitperiode, während welcher eine thermische Energielast abgedeckt ist durch die Energie, die in den Wärmesammelmitteln gespeichert ist auf der Grundlage der von den Leistungsanforderungskurven-Schätzmitteln geschätzten Leistungsanforderungskurve; und
Operationsmittel der thermischen Energiequelle zum Zuführen der Menge von thermischer Energie von anderen als den Wärmesammelmitteln während der zuvor in einer Klimatisierungsperiode eingestellten Zeitperiode, und zum Zuführen der Menge von elektrischer Leistung zu dieser Zeitperiode zu den Leistungsanforderungs-Zeitfolgedaten-Sammelmitteln;
worin die Abgabemittel für die kalte/heiße Luft die in den Wärmesammelmitteln gespeicherte thermische Energie und die durch die Operationsmittel der thermischen Energiequelle gelieferte Wärme abgeben; und
die Kühl/Heiz-Energiemengen-Erkennungsmittel Kühl/Heiz-Energiemengen-Berechnungsmittel sind, welche die Menge von Kühl/Heiz-Energie berechnen, welche von den Wärmesammelmitteln geliefert und von den Abgabemitteln für kalte/heiße Luft abgegeben wird, anhand der Menge der thermischen Energie, die in den Wärmesammelmitteln verbleibt.

7. Wärmespeicherndes Klimagerät nach Anspruch 1, welches weiterhin aufweist:
Anforderungssteuerzeit-Einstellmittel zum Einstellen einer Steuerzeitperiode, während welcher die thermische Energielast durch die thermische Energie der Wärmesammelmittel abgedeckt ist, auf der Grundlage der von den Leistungsanforderungskurven-Schätzmitteln geschätzten Leistungsanforderungskurve;
Verwendungsoperationsmittel für gespeicherte thermische Energie zur Verwendung der in den Wärmesammelmitteln gespeicherten thermischen Energie; und
Operationssteuermittel zum Steuern der Operationsmittel der thermischen Energiequelle derart, daß bewirkt wird, daß die Wärmesammelmittel die Menge von Kühl/Heiz-Energie entsprechend der Lastanforderung für thermische Energie speichern auf der Grundlage der von den Lastanforderungs-Schätzmitteln für thermische Energie während der Nacht geschätzten Lastanforderung für thermische Energie;
Bestimmen eines Operationsmusters zur Verwendung in Klimatisierungsperioden auf der Grundlage der geschätzten Leistungsanforderungskurve und der Steuerzeitperiode; welche die Operationsmittel der thermischen Energiequelle so steuern, daß Kühl/Heiz-Energie direkt zu den Abgabemitteln für kalte/heiße Luft geliefert wird auf der Grundlage des Operationsmusters während einer vorbestimmten Zeitperiode innerhalb der Klimatisierungsperiode; Senden der zu dieser Zeit von der thermischen Energiequelle abgegebenen Menge von elektrischer Leistung zu den Leistungsanforderungs-Zeitfolgedaten-Sammelmitteln; und Steuern der Verwendungsoperationsmittel für gespeicherte thermische Energie derart, daß die gespeicherte thermische Energie der Wärmesammelmittel während der Steuerzeitperiode innerhalb der Klimatisierungsperiode zu der Abgabevorrichtung für kalte/heiße Luft geliefert wird;
worin die Lastanforderungs-Schätzvorrichtung für die thermische Energie die Lastanforderung für thermische Energie zur Verwendung während der Steuerzeitperiode schätzt auf der Grundlage der Steuerzeitperiode und der Leistungsanforderungskurve;
die Abgabevorrichtung für kalte/heiße Luft die von den Wärmesammelmitteln und/oder den Operationsmitteln der thermischen Energiequelle empfangene thermische Energie abgibt; und die Kühl/Heiz-Energiemengen-Erkennungsmittel die Menge von Kühl/Heiz-Energie erkennen, welche von den Heizsammelmitteln empfangen und von den Heizsammelmitteln abgegeben wurde, anhand der in den Heizsammelmitteln verbleibenden thermischen Energie.

8. Wärmespeicherndes Klimagerät nach Anspruch 7, worin die Kühl/Heiz-Energiemengen-Erkennungsmittel Erfassungmittel sind zum Erfassen der Menge der Kühl- oder Heizenergie, die von den Abgabemitteln für kalte/heiße Luft abgegeben wurde.

9. Wärmespeicherndes Klimagerät nach Anspruch 7, worin die Kühl/Heiz-Energiemengen-Erkennungsmittel Berechnungsmittel sind zum Berechnen der Menge von Kühl- oder Heizenergie, die von den Abgabemitteln für kalte/heiße Luft abgegeben wurde.

10. Wärmespeicherndes Klimagerät nach Anspruch 7, welches weiterhin aufweist:
Speicherdatenmengen-Bestimmungsmittel zum Bestimmen der Menge der von den Leistungsanforderungs-Zeitfolgedaten-Sammelmitteln gespeicherten Daten und zum Senden von Pseudodaten zu den Leistungsanforderungs-Zeitfolgedaten-Sammelmitteln, wenn eine vorbestimmte Menge von gespeicherten Daten noch nicht erreicht wurde;
worin die Leistungsanforderungskurven-Schätzmittel eine Leistungsanforderungskurve schätzen durch Analysieren der Pseudodaten oder der von den Leistungsanforderungs-Zeitfolgedaten-Sammelmitteln gesammelten Leistungsanforderungs-Zeitfolgedaten.

11. Wärmespeicherndes Klimagerät nach Anspruch 7, welches weiterhin aufweist:
Speicherdatenmengen-Bestimmungsmittel zum Bestimmen der Menge von von den Leistungsanforderungs-Zeitfolgedaten-Sammelmitteln gespeicherten Daten und zur Ausgabe eines Datenknappheitssignals sowie zur Anweisung der Leistungsanforderungs-Zeitfolgedaten-Sammelvorrichtung, eine Ausgabe zu einem Steuersystem auszusetzen, wenn eine vorbestimmte Menge noch nicht erreicht wurde; und
Zwangsoperations-Steuermittel zum Steuern der Operationsmittel während Klimatisierungsperioden, um zu bewirken, daß die Operationsmittel Kühl/Heiz-Energie direkt zu den Abgabemitteln für kalte/heiße Luft liefern, wenn das Datenknappheitssignal von den Speicherdatenmengen-Bestimmungsmitteln empfangen wird, und zum Senden der Menge der zu dieser Zeit von der thermischen Energiequelle abgegebenen elektrischen Leistung zu den Leistungsanforderungs-Zeitfolgedaten-Sammelmitteln.

12. Wärmespeicher-Schätzverfahren, welches die Schritte enthält:
Sammeln vom Zeitfolgedaten über eine Leistungsanforderung (S101),
Schätzen einer Leistungsanforderungskurve (S107) durch Analysieren der in dem Sammelschritt (S101) gesammelten Leistungsanforderungs-Zeitfolgedaten;
gekennzeichnet durch die Schritte:
Erkennen der Menge von Kühl/Heiz-Energie, die äquivalent der zu sammelnden Menge der thermischen Energie ist (S113) ;
Umwandeln der zu sammelnden Menge der thermischen Energie, welche in dem Erkennungsschritt erkannt wurde, in die Menge von elektrischer Leistung (S114);
Nehmen der in dem Umwandlungsschritt umgewandelten Menge der Leistung als die Leistungsanforderung; und
Schätzen der Lastanforderung für thermische Energie (S108) anhand der in dem Leistungsanforderungskurven-Schätzschritt (S107) geschätzten Leistungsanforderungskurve.

13. Wärmespeicher-Schätzverfahren nach Anspruch 1, worin in dem Erkennungsschritt die Menge der Kühl/Heiz-Energie, welche äquivalent der zu sammelnden Menge der thermischen Energie ist, erfaßt wird.

14. Wärmespeicher-Schätzverfahren nach Anspruch 12, worin in dem Erkennungsschritt die Menge der Kühl/Heiz-Energie, welche äquivalent der zu sammelnden Menge von thermischer Energie ist, berechnet wird.

15. Wärmespeicher-Schätzverfahren nach Anspruch 12, worin der Lastanforderungs-Schätzschritt für thermische Energie die Schritt aufweist:
Einstellen der Steuerzeitperiode, während der die thermische Energielast durch die gesammelte thermische Energie abgedeckt ist, auf der Grundlage der in dem Leistungsanforderungskurven-Schätzschritt geschätzten Leistungsanforderungskurve; und
Schätzen der Lastanforderung für thermische Energie während der in dem Steuerzeitperioden-Einstellschritt eingestellten Steuerzeitperiode.

## Revendications

1. Dispositif de conditionnement d'air à stockage de chaleur, comprenant:
des moyens (11) de collecte de données de séquence temporelle de demande d'énergie pour collecter des données de séquence temporelle concernant une demande d'énergie;
des moyens (12) d'estimation d'une courbe de demande d'énergie pour estimer une courbe de demande d'énergie obtenue en tant que résultat de l'analyse des données de séquence temporelle de demande d'énergie collectées par lesdits moyens (11) de collecte de données de séquence temporelle de demande d'énergie;
des moyens de fonctionnement d'une source d'énergie thermique (14) pour la délivrance d'une énergie de refroidissement/chauffage;
des moyens d'accumulation de chaleur (15) pour stocker l'énergie de refroidissement/chauffage délivrée par lesdits moyens de fonctionnement;
des moyens (17) de délivrance d'air froid/chaud pour décharge l'énergie thermique stockée dans lesdits moyens d'accumulation de chaleur;
caractérisé par
des moyens (13) d'estimation de demande de charge d'énergie thermique pour estimer une demande de charge d'énergie thermique à partir de la courbe de demande d'énergie estimée par des moyens d'estimation de la courbe de demande d'énergie;
des moyens (19) de reconnaissance de la quantité d'énergie de refroidissement/chauffage pour reconnaître la quantité d'énergie de refroidissement ou de chauffage dissipée par lesdits moyens de délivrance d'air froid/chaud; et
des moyens de conversion (22) pour convertir la quantité d'énergie de refroidissement/chauffage en la quantité d'énergie électrique, la quantité convertie d'énergie électrique étant délivrée auxdits moyens (11) de collecte de données de séquence temporelle de demande d'énergie.

2. Dispositif de conditionnement d'air à stockage de chaleur selon la revendication 1, dans lequel lesdits moyens de reconnaissance de la quantité d'énergie de refroidissement/chauffage sont des moyens de détection servant à détecter la quantité d'énergie de refroidissement ou de chauffage dissipée à partir desdits moyens de délivrance d'air froid/chaud.

3. Dispositif de conditionnement d'air à stockage de chaleur selon la revendication 1, dans lequel lesdits moyens de reconnaissance de la quantité d'énergie de refroidissement/chauffage sont des moyens de calcul servant à calculer la quantité d'énergie de refroidissement ou de chauffage dissipée à partir desdits moyens de délivrance d'air froid/chaud.

4. Dispositif de conditionnement d'air à stockage de chaleur selon la revendication 1, comprenant:
des moyens de fonctionnement utilisant une énergie thermique stockée, pour utiliser l'énergie thermique stockée dans lesdits moyens d'accumulation de chaleur; et
des moyens de commande de fonctionnement pour commander lesdits moyens de fonctionnement à stockage d'énergie thermique pour amener lesdits moyens d'accumulation de chaleur à stocker la quantité d'énergie de refroidissement/chauffage correspondant à la demande de charge d'énergie thermique sur la base de la demande de charge d'énergie thermique estimée par les moyens d'estimation de la demande de charge d'énergie thermique, pendant la nuit, et pour commander les moyens de fonctionnement utilisant l'énergie thermique stockée pour amener lesdits moyens d'accumulation de chaleur à délivrer l'énergie thermique stockée au dispositif de délivrance d'air froid/chaud sur la base de la courbe de demande de puissance d'énergie estimée pendant des périodes de conditionnement d'air.

5. Dispositif de conditionnement d'air à stockage de chaleur selon la revendication 4, comprenant en outre:
des moyens de détermination de la quantité de données mémorisées pour déterminer la quantité de données mémorisées par les moyens de collecte de données de séquence temporelle de demande d'énergie et envoyer des pseudo-données aux moyens de collecte de données de séquence temporelle de demande d'énergie si une quantité prédéterminée de données mémorisées n'a pas encore été atteinte;
dans lequel lesdits moyens d'estimation d'une courbe de demande d'énergie estiment une courbe de demande d'énergie en analysant les pseudo-données ou les données de séquence temporelle de demande d'énergie collectées par lesdits moyens de collecte de données de séquence temporelle de demande d'énergie; et
lesdits moyens de fonctionnement d'une source d'énergie thermique stockent l'énergie thermique, qui est équivalente à la demande de charge d'énergie thermique estimée par lesdits moyens d'estimation de demande de charge d'énergie thermique, lesdits moyens de fonctionnement à stockage d'énergie étant prévus dans des moyens d'accumulation de chaleur d'une source de chaleur.

6. Dispositif de conditionnement d'air à stockage de chaleur selon la revendication 1, comprenant en outre:
des moyens de réglage de l'intervalle de temps de commande de demande pour régler un intervalle de temps de commande, pendant lequel une charge d'énergie thermique est couverte par l'énergie thermique stockée dans lesdits moyens d'accumulation de chaleur sur la base de la courbe de la demande d'énergie estimée par lesdits moyens d'estimation de la courbe de demande d'énergie; et
des moyens de fonctionnement de la source d'énergie thermique pour envoyer la quantité d'énergie thermique provenant de moyens autres que lesdits moyens d'accumulation de chaleur pendant l'intervalle de temps précédemment réglé pendant une période de conditionnement d'air, et pour amener la quantité d'une énergie électrique pendant cet intervalle de temps auxdits moyens de collecte de données de séquence temporelle de demande d'énergie;
dans lequel lesdits moyens de délivrance d'air froid/chaud délivrent l'énergie thermique stockée dans lesdits moyens d'accumulation de chaleur et la chaleur envoyée par lesdits moyens de fonctionnement de ladite source d'énergie thermique; et
lesdits moyens d'identification de la quantité d'énergie de refroidissement/chauffage sont des moyens de calcul d'une quantité d'énergie de refroidissement/ chauffage qui calculent la quantité d'énergie de refroidissement/chauffage qui est fournie par lesdits moyens d'accumulation de chaleur et est dissipée à partir des moyens de délivrance d'air froid/chaud, à partir de la quantité d'énergie thermique subsistant dans lesdits moyens d'accumulation de chaleur.

7. Dispositif de conditionnement d'air à stockage de chaleur selon la revendication 1, comprenant en outre:
des moyens de réglage du temps de commande de demande pour régler un intervalle de temps de commande, pendant lequel une charge d'énergie thermique est couverte par l'énergie thermique desdits moyens d'accumulation de chaleur, sur la base de la courbe de demande d'énergie estimée par lesdits moyens d'estimation de la courbe de demande d'énergie;
des moyens de fonctionnement utilisant l'énergie thermique stockée pour utiliser l'énergie thermique stockée dans lesdits moyens d'accumulation de chaleur; et
des moyens de commande de fonctionnement pour commander les moyens de fonctionnement de la source d'énergie thermique de manière à amener lesdits moyens d'accumulation de chaleur à stocker la quantité d'énergie de refroidissement/chauffage correspondant à la demande de charge d'énergie thermique sur la base de la demande de la charge d'énergie thermique estimée par les moyens d'estimation de demande de charge d'énergie thermique, pendant la nuit; déterminer un diagramme de fonctionnement pour son utilisation pendant des périodes de conditionnement d'air sur la base de la courbe de demande de l'énergie estimée et de l'intervalle de temps de commande; qui commandent les moyens de fonctionnement de la source d'énergie thermique de manière à fournir directement une énergie de refroidissement/chauffage au dispositif de délivrance d'air froid/chaud sur la base du diagramme de fonctionnement pendant un intervalle de temps préréglé au cours de la période de conditionnement d'air; envoyer la quantité d'énergie électrique dissipée à partir de la source d'énergie thermique à cet instant au moyen de collecte de données de séquence temporelle de demande d'énergie; et commander les moyens de fonctionnement utilisant l'énergie thermique stockée de manière qu'ils envoient l'énergie thermique stockée desdits moyens d'accumulation de chaleur au dispositif de délivrance d'air froid/chaud pendant l'intervalle de temps de commande au cours de la période de conditionnement d'air;
dans lequel lesdits moyens d'estimation de demande de charge d'énergie thermique estiment la demande de charge d'énergie thermique pour son utilisation pendant l'intervalle de temps de commande sur la base de l'intervalle de temps de commande et de la courbe de demande d'énergie;
lesdits moyens de délivrance d'air froid/chaud dissipent l'énergie thermique reçue de la part desdits moyens d'accumulation et/ou des moyens de fonctionnement de la source d'énergie thermique; et
lesdits moyens de reconnaissance de la quantité d'énergie de refroidissement/chauffage identifient la quantité d'énergie de refroidissement/chauffage, qui a été reçue de la part desdits moyens d'accumulation de chaleur et dissipée par lesdits moyens d'accumulation de chaleur, à partir de l'énergie thermique qui reste dans lesdits moyens d'accumulation de chaleur.

8. Dispositif de conditionnement d'air à stockage de chaleur selon la revendication 7, dans lequel lesdits moyens d'identification de la quantité d'énergie de refroidissement/chauffage sont des moyens de détection servant à détecter la quantité de l'énergie de refroidissement ou de chauffage dissipée à partir desdits moyens de délivrance d'air froid/chaud.

9. Dispositif de conditionnement d'air à stockage de chaleur selon la revendication 7, dans lequel lesdits moyens de reconnaissance de la quantité d'énergie de refroidissement/chauffage sont des moyens de calcul servant à calculer la quantité d'énergie de refroidissement ou de chauffage dissipée à partir desdits moyens de délivrance d'air froid/chaud.

10. Dispositif de conditionnement d'air à stockage de chaleur selon la revendication 7, comprenant en outre:
des moyens de détermination de la quantité de données mémorisées pour déterminer la quantité de données mémorisées par les moyens de collecte de données de séquence temporelle de demande d'énergie et envoyer des pseudo-données auxdits moyens de collecte de données de séquence temporelle de demande d'énergie si une quantité prédéterminée de données mémorisées n'a pas encore été atteinte;
dans lequel lesdits moyens d'estimation d'une courbe de demande d'énergie estiment une courbe de demande d'énergie en analysant les pseudo-données ou les données de séquence temporelle de demande d'énergie collectées par lesdits moyens de collecte de données de séquence temporelle de demande d'énergie.

11. Dispositif de conditionnement d'air à stockage de chaleur selon la revendication 7, comportant en outre:
des moyens de détermination de quantité de données stockées pour déterminer la quantité de données stockées par les moyens de collecte de données de séquence temporelle de demande d'énergie; et pour délivrer un signal d'insuffisance de données et commander lesdits moyens de collecte de données de séquence temporelle de demande d'énergie pour interrompre l'envoi d'un signal de sortie à un système de commande si une quantité prédéterminée n'a pas encore été atteinte; et
des moyens de commande de fonctionnement forcé pour commander lesdits moyens de fonctionnement pendant des périodes de conditionnement d'air pour amener lesdits moyens de fonctionnement à envoyer directement une énergie de refroidissement/chauffage auxdits moyens de délivrance d'air froid/chaud si le signal d'insuffisance de données est reçu de la part desdits moyens de détermination de la quantité de données mémorisées, et envoyer la quantité d'énergie électrique dissipée de la source d'énergie thermique à cet instant auxdits moyens de collecte de données de séquence temporelle de demande d'énergie.

12. Procédé d'estimation de stockage d'énergie comprenant les étapes consistant à:
collecter de données de séquence temporelle concernant une demande d'énergie (S101),
estimer une courbe de demande d'énergie (S107) par analyse des données de séquence temporelle de demande d'énergie collectées dans ladite étape de collecte (S101) ;
caractérisé par les étapes consistant à
identifier la quantité d'énergie de refroidissement/ chauffage, qui est équivalente à la quantité d'énergie thermique devant être accumulée (S113) ;
convertir la quantité d'énergie thermique devant être accumulée, qui est identifiée lors de ladite étape d'identification, en la quantité d'énergie électrique (S114) ;
prélever la quantité de l'énergie convertie lors de ladite étape de conversion en tant que demande d'énergie; et estimer une demande de charge d'énergie thermique (S108) à partir de la courbe de demande d'énergie estimée lors de ladite étape (S107) d'estimation de la courbe de demande d'énergie.

13. Procédé d'estimation de stockage d'énergie selon la revendication 12, selon lequel, lors de ladite étape d'identification, la quantité d'énergie de refroidissement/chauffage, qui est équivalente à la quantité d'énergie thermique devant être accumulée, est détectée.

14. Procédé d'estimation de stockage d'énergie selon la revendication 12, selon lequel, lors de ladite étape d'identification, la quantité de l'énergie de refroidissement/chauffage, qui est équivalente à la quantité d'énergie thermique devant être accumulée, est calculée.

15. Procédé d'estimation de stockage de chaleur selon la revendication 12, selon lequel ladite étape d'estimation de ladite demande de charge d'énergie thermique comprend les étapes consistant à:
régler l'intervalle de temps de commande, pendant lequel une charge d'énergie thermique est recouverte par l'énergie thermique accumulée, sur la base de la courbe de demande d'énergie estimée lors de ladite étape d'estimation de la courbe de demande d'énergie; et
estimer la demande de charge d'énergie thermique pendant l'intervalle de temps de commande réglé lors de l'étape de réglage de l'intervalle de temps de commande.
